# EUROPEAN PATENT APPLICATION

(11) **EP 4 542 094 A1**
(43) Date of publication of application: **23.04.2025**
(21) Application number: 24746989.3
(22) Date of filing: 26.01.2024
(51) Int. Cl.: F16K 17/02

(54) **VALVE SET FOR SAFETY OF NUCLEAR POWER PLANT, PRESSURE RELIEF VALVE SET, DISCHARGE VALVE SET, AND ISOLATION VALVE**

(30) Priority: 28.01.2023 CN 202310113569; 28.01.2023 CN 202310100583; 28.01.2023 CN 202310100560
(71) Applicant: China Nuclear Power Engineering Co., Ltd., Beijing 100840 (CN)
(72) Inventor: SHI, Xueyao, Beijing 100840 (CN); JING, Chunning, Beijing 100840 (CN); WANG, Hui, Beijing 100840 (CN); CHEN, Qiaoyan, Beijing 100840 (CN); YANG, Changjiang, Beijing 100840 (CN); WANG, Guangfei, Beijing 100840 (CN); WU, Yuxiang, Beijing 100840 (CN); CHANG, Yuan, Beijing 100840 (CN); WANG, Henan, Beijing 100840 (CN); SUN, Jing, Beijing 100840 (CN); ZHOU, Zhe, Beijing 100840 (CN); LEI, Ningbo, Beijing 100840 (CN); SUN, Xiaohui, Beijing 100840 (CN); CAI, Mengli, Beijing 100840 (CN); LIN, Shengsheng, Beijing 100840 (CN); ZHANG, Xuhao, Beijing 100840 (CN)
(74) Representative: Cohausz & Florack
(86) International application number: PCT/CN2024/074176
(87) International publication number: WO 2024/156282

(57) **Abstract**

Disclosed is a valve set for safety of a nuclear power plant, including: a first valve part (1-2, 2-2, 3-2) and a second valve part (1-1, 2-1, 2-3, 2-4, 3-1). The first valve part (1-2, 2-2, 3-2) includes a valve body portion and a valve core portion. The valve body portion has a sealed cavity (1-215, 2-215, 3-215) and a valve cavity (1-24, 2-24, 3-24). The valve cavity (1-24, 2-24, 3-24) is configured to communicate a primary loop coolant with a medium space. The valve core portion has one end located in the sealed cavity (1-215, 2-215, 3-215) and the other end located in the valve cavity (1-24, 2-24, 3-24). The valve core portion is slidable in the valve body portion under an action of a pressure of a medium entering the sealed cavity (1-215, 2-215, 3-215), so as to open or close the valve cavity (1-24, 2-24, 3-24). The second valve part (1-1, 2-1, 2-3, 2-4, 3-1) is provided with an output end and input ends. The output end is communicated with the sealed cavity (1-215, 2-215, 3-215), while one of the input ends is communicated with the primary loop coolant, and the other is communicated with a pressure source. The second valve part can control a communication state between the output end and the input ends, so that the output end is communicated with one of the input ends. Also provided are a primary loop hydraulic pressure relief valve set for a nuclear power plant, a valve set for primary loop pressure relief and discharge, and an isolation valve for a passive water injection pipeline of a nuclear power plant. The safety valve set can enable automatic opening of the first valve part when the primary loop satisfies a condition and keep the first valve part in an always open state so that the primary loop is communicated with the medium space, and enable effective isolation of the first valve part during shutdown refueling of the reactor.

## Description

1. The present disclosure claims the priority of Chinese patent application No. CN202310113569.8 titled "PRIMARY LOOP HYDRAULIC PRESSURE RELIEF VALVE SET OF NUCLEAR POWER PLANT" filed on January 28, 2023.

2. The present disclosure claims the priority of Chinese patent application No. CN 202310100583.4 titled "VALVE SET FOR PRIMARY LOOP PRESSURE RELIEF AND DISCHARGE" filed on January 28, 2023.

3. The present disclosure claims the priority of Chinese patent application No. CN 202310100560.3 titled "ISOLATION VALVE FOR PASSIVE WATER INJECTION PIPELINE OF NUCLEAR POWER PLANT" filed on January 28, 2023.

### TECHNICAL FIELD

The present disclosure relates to the technical field of nuclear power safety, and specifically relates to a valve set for safety of a nuclear power plant, a primary loop hydraulic pressure relief valve set of a nuclear power plant, a valve set for primary loop pressure relief and discharge, and an isolation valve for a passive water injection pipeline of a nuclear power plant.

### BACKGROUND

In a pressurized water reactor nuclear power station, as one of the most important barriers for containment of radioactive materials, the reactor coolant system is directly related to safety performance of the nuclear power plant.

The reactor coolant system of the nuclear power plant typically has a relatively high pressure during normal operation. To avoid post-accident overpressure in the system and ensure continuous post-accident cooling of the reactor core, an overpressure protection valve and a primary loop pressure relief valve are desired on the reactor coolant system. Current overpressure protection valves and pressure relief valves are generally classified into the following types:
(1) A spring safety valve, which can automatically initiate pressure relief when a system pressure reaches a setting pressure of the safety valve, and is most widely used in overpressure protection of process systems. This safety valve type is characterized in that the valve can only perform an overpressure protection function, and when the pressure is lower than the opening pressure, the valve is closed and cannot be opened manually.
(2) A pilot safety valve, which, similar to the spring safety valve, can automatically initiate pressure relief when a system pressure reaches a setting pressure of the safety valve, but is more reliable than the spring safety valve and mainly applied to pressurizer safety valves at present. This safety valve type requires less power when opened, but has the disadvantages that it has to be kept in a power-on state to be opened manually, and cannot be kept in an open state at a low pressure.
(3) An electric or pneumatic isolation valve, which can control the valve to be opened or closed through a power source when a system pressure reaches a design required fixed value. The valve type is characterized in that it can be opened at any time and is kept in an original state even when powered off, but has the disadvantage that it requires a higher power to open.
(4) A squib valve, which uses a valve opening signal to trigger an explosion unit inside the valve to generate a high-pressure gas that pushes a piston in the valve to move, and a shearing cover for a valve nominal diameter can be cut off in the impact motion to communicate an inlet and an outlet of the valve, thereby implementing a safety function of system pressure relief. This valve type is characterized in that once opened, it is kept in an always open state and cannot be restored.

In addition, the passive safety system is a design feature of some third generation nuclear power plants, while the passive water injection system is one of the main safety systems of a passive safety system.

The passive water injection system generally realizes injection of cooling water into a reactor coolant system by means of a compressed gas or gravity, and ensures post-accident safety of the reactor core.

The passive water injection system is in an isolation state during normal operation of the nuclear power plant, so an isolation valve with certain reliability is required. Typically, an electric valve or squib valve is used as the isolation valve. The electric valve is characterized in that it can be opened at any time and is kept in an original state even when powered off, but has the disadvantage that it requires a higher power to open. In contrast, the squib valve signals to trigger an explosion unit inside the valve to generate a high-pressure gas that pushes a piston in the valve to move, and a shearing cover for a valve nominal diameter can be cut off in the impact motion to communicate an inlet and an outlet of the valve, so that the function of opening the valve is realized, but this valve type is characterized in that once opened, it is kept in an always open state and cannot be restored.

In summary, it can be seen that to ensure avoid post-accident overpressure in the coolant system of the nuclear power plant, and enable timely pressure relief when needed to ensure continuous post-accident cooling of the reactor core, a corresponding dedicated pressure relief valve set is desired on the reactor coolant system to ensure safe operation of the coolant system.

However, current safety valves cannot be opened automatically when pressure relief is desired, or be kept in an open state or restored to an effectively isolated state after opening.

### SUMMARY

The technical problem to be solved by the present disclosure is to provide, in view of the above disadvantages in the existing art, a valve set for safety of a nuclear power plant which can be automatically opened when a primary loop pressure satisfies a condition and maintain an always open state, and effectively isolated during normal operation and shutdown refueling.

The present disclosure further provides other three specific solutions for solving the technical problems, which are: a primary loop hydraulic pressure relief valve set of a nuclear power plant, a valve set for primary loop pressure relief and discharge, and an isolation valve for a passive water injection pipeline of a nuclear power plant. These three specific solutions can be each regarded as a valve set for safety of a nuclear power plant, and the differences lie in that they are applied to different application scenes and are correspondingly improved according to the actual scenes.

An embodiment in a first aspect provides a primary loop hydraulic pressure relief valve set of a nuclear power plant, which can enable automatic opening of a main valve when a primary loop satisfies a condition and keep the main valve in an always open state, enable manual opening of the main valve and ensure effective isolation of the main valve during normal operation and shutdown refueling.

In this embodiment, the following technical solution is adopted to solve the technical problem of the present disclosure:

An embodiment in a first aspect of the present disclosure provides a primary loop hydraulic pressure relief valve set of a nuclear power plant, including: a main valve and a three-position four-way control valve;
the main valve includes: a main valve body and a valve core, the main valve body has a sealed cavity and a valve cavity, the valve cavity is configured to communicate a primary loop coolant with atmosphere, the valve core has one end in the sealed cavity and the other end in the valve cavity, and the valve core is slidable in the main valve body under an action of a pressure of a medium entering the sealed cavity, so as to open or close the valve cavity;
the three-position four-way control valve has a first input port, a second input port, a third input port and an output port, wherein the output port is communicated with the sealed cavity, the first input port is communicated with an atmospheric pressure source, the second input port is communicated with the primary loop coolant, and the third input port is communicated with a constant pressure source;
the three-position four-way control valve has a first state in which the output port is communicated with the first input port and disconnected from both the second input port and the third input port, a second state in which the output port is communicated with the second input port and disconnected from both the first input port and the third input port, and a third state in which the output port is communicated with the third input port and disconnected from both the first input port and the second input port, and the three-position four-way control valve is switchable between the first, second and third states to change the medium entering the sealed cavity and a pressure thereof, and a pressure setting value P₀ₘₐᵢₙ at which the medium entering the sealed cavity opens the main valve satisfies: P0<P₀ₘₐᵢₙ<Pacc, where P0 is an atmospheric pressure, and Pacc is a pressure of the constant pressure source.

Optionally, the three-position four-way control valve includes a control valve body, a control piston assembly, a first solenoid valve, and a second solenoid valve;
the control valve body has a main chamber, a first side chamber, and a second side chamber, wherein the first side chamber and the second side chamber are disposed at two ends of the main chamber, respectively, the control piston assembly is disposed in the main chamber, the first solenoid valve is disposed in the first side chamber, and the second solenoid valve is disposed in the second side chamber;
the first input port, the second input port, the third input port and the output port are all disposed on the control valve body and communicated with the main chamber, the control piston assembly includes a control piston rod and a plurality of control pistons fixed on the control piston rod, wherein the plurality of control pistons are sequentially and sealedly arranged in the main chamber in an axial direction of the control piston rod in a slidable manner to divide the main chamber into a plurality of sub-chambers, while two ends of the control piston rod both extend out of the main chamber, with one end connected to the first solenoid valve and the other end connected to the second solenoid valve; and
the output port is located on one side of a radial direction of the control piston rod, while the first input port, the second input port and the third input port are all located on the other side of the radial direction of the control piston rod and sequentially arranged in the axial direction of the piston rod, so that when the first solenoid valve is powered on, the control piston assembly is driven toward the second solenoid valve to communicate the output port with only the third input port through one of the sub-chambers to enable the third state of the three-position four-way control valve; when the second solenoid valve is powered on, the control piston assembly is driven toward the first solenoid valve to communicate the output port with only the first input port through one of the sub-chambers to enable the first state of the three-position four-way control valve; and when the first solenoid valve and the second solenoid valve are both powered off, the control piston assembly is moved axially to communicate the output port with only the second input port through one of the sub-chambers to enable the second state of the three-position four-way control valve.

Optionally, five control pistons are provided and configured to divide the main chamber into a first sub-chamber, a second sub-chamber, a third sub-chamber, a fourth sub-chamber, a fifth sub-chamber and a sixth sub-chamber in sequence;
when the three-position four-way control valve is in the first state, the output port is communicated with only the first input port through the third sub-chamber;
when the three-position four-way control valve is in the third state, the output port is communicated with only the third input port through the fourth sub-chamber; and
when the three-position four-way control valve is in the second state, the output port is communicated with only the second input port through the third sub-chamber.

Optionally, the first solenoid valve includes a first sucker, a first coil, and a first return spring, and the second solenoid valve includes a second sucker, a second coil and a second return spring, wherein the first coil and the second coil are respectively disposed on outer end walls at two ends of the main chamber in the axial direction of the control piston rod, and the first sucker and the second sucker are respectively disposed at two ends of the control piston rod, the first return spring is connected between a chamber wall of the first side chamber and the first sucker, and the second return spring is connected between a chamber wall of the second side chamber and the second sucker;
when the first solenoid valve is powered on, the first sucker is moved toward the first coil to be fixedly connected to the first coil, so as to drive the control piston assembly to move toward the second solenoid valve to enable the third state of the three-position four-way control valve, and during the movement of the control piston assembly toward the second solenoid valve, the first return spring is stretched and the second return spring is compressed;
when the second solenoid valve is powered on, the second sucker is moved toward the second coil to be fixedly connected to the second coil, so as to drive the control piston assembly to move toward the first solenoid valve to enable the first state of the three-position four-way control valve, and during the movement of the control piston assembly toward the first solenoid valve, the second return spring is stretched and the first return spring is compressed; and
when the first solenoid valve and the second solenoid valve are both powered off, the first return spring and the second return spring are both reset to drive the control piston assembly to move axially to enable the second state of the three-position four-way control valve.

Optionally, a plurality of three-position four-way control valves are provided and arranged in parallel.

A plurality of first solenoid valves and a plurality of second solenoid valves are provided, the plurality of first solenoid valves are arranged in series, and the plurality of second solenoid valves are also arranged in series.

The valve core includes a main piston assembly and a main spring, wherein the main piston assembly includes a main piston rod, a main piston and a valve disc, the main piston rod is slidably disposed in the main valve body, the main piston is fixed on the main piston rod and located in the sealed cavity, the valve disc is fixed on the main piston rod and located in the valve cavity, and the main spring is located in the sealed cavity and compressed between the main piston and a bottom wall of the valve cavity.

Optionally, the valve cavity is located below the sealed cavity, the main valve body is provided with a valve inlet and a valve outlet each communicated with the valve cavity, the valve inlet is provided at a bottom of the main valve body and configured to be communicated with the primary loop coolant, the valve outlet is provided on a side surface of the main valve body and configured to be communicated with atmosphere, and the main piston assembly is vertically and slidably disposed in the main valve body to open or close the valve inlet;
the pressure setting value P₀ₘₐᵢₙ at which the medium entering the sealed cavity opens the main valve further satisfies: P₀ₘₐᵢₙ×(A1-A2) +G=F, where A1 is a cross sectional area of the main piston, A2 is a cross sectional area of the valve disc, G is a gravity of the main piston assembly, and F is a spring force of the main spring when the main valve is closed.

Optionally, the main spring is disposed around the main piston rod.

Optionally, an outer diameter of the valve disc is gradually reduced from top to bottom so that an outer wall of the valve disc forms a first conical surface; and
a nozzle is installed at the valve inlet, wherein a second conical surface matched with the first conical surface is provided at an upper part of an inner wall of the nozzle, and when the main piston assembly is moved downward to make the first conical surface matched with the second conical surface, the valve disc closes the valve inlet.

Optionally, the main valve body includes a valve housing, a valve seat and a valve core which are fixedly connected in sequence from bottom to top, and an inner cavity of the valve housing forms the valve cavity; and
a first groove is provided in a top surface of the valve seat, a lower part of the valve core extends into the first groove to be sealedly connected to a groove wall of the first groove, a second groove is provided in a bottom surface of the valve core, and a groove wall of the second groove encloses the sealed cavity with a bottom wall of the first groove.

Optionally, the main piston rod includes a working section and a positioning section, wherein the working section has a lower end fixedly connected to the valve disc, and an upper end passing through the valve seat into the sealed cavity and fixedly connected to the main piston, and the main spring is disposed around the working section; and
a sealed exhaust cavity is provided at an upper part of the valve core, a top of the valve core is provided with a valve cover for opening or closing the exhaust cavity, and the positioning section has a lower end fixedly connected to a piston, and an upper end passing through the valve core into the exhaust cavity.

According to the embodiment in the first aspect of the present disclosure, the three-position four-way control valve and the main valve are combined to form a primary loop hydraulic pressure relief valve set of a nuclear power plant, where the main valve body of the main valve has a sealed cavity and a valve cavity, the valve core is slidably disposed in the main valve, and the valve core is slidable in the main valve body under an action of a pressure of a medium entering the sealed cavity, so as to open or close the valve cavity; the three-position four-way control valve has a first input port communicated with an atmospheric pressure (e.g., a primary loop volume control tank or pressure relief tank), a second input port communicated with the primary loop coolant, a third input port communicated with a constant pressure source, and an output port communicated with the sealed cavity of the main valve, and an opening setting value P₀ₘₐᵢₙ of the main valve satisfies: atmospheric pressure < P₀ₘₐᵢₙ < Pacc, so that:

When the primary loop pressure is normal (about 15.5MPa), the three-position four-way control valve is switched to the second state (in which the output port of the three-position four-way control valve is communicated with the second input port), in which case the pressure in the sealed cavity of the main valve is the primary loop pressure, which is far greater than the opening setting value P₀ₘₐᵢₙ of the main valve, so that the main valve is closed and isolation of the main valve during normal operation of the primary loop and under a high pressure (Prcs>P₀ₘₐᵢₙ) is realized. When the primary loop has a fault which causes a pressure drop to below the opening setting value P₀ₘₐᵢₙ of the main valve, the main valve is automatically opened, thereby enabling automatic opening of the main valve when the primary loop pressure is abnormal.

When the main valve needs to be manually opened in some cases, the three-position four-way control valve is switched to the first state (in which the output port of the three-position four-way control valve is communicated with the first input port), in which case the pressure in the sealed cavity of the main valve is the atmospheric pressure, which is less than the opening setting value P₀ₘₐᵢₙ of the main valve, so that the main valve is opened.

When the main valve is not expected to be opened during shutdown refueling (where the primary loop pressure is desired to be reduced to a normal pressure), the three-position four-way control valve is switched to the third state (in which the output port of the three-position four-way control valve is communicated with the third input port), in which case the pressure in the sealed cavity of the main valve is a constant pressure source pressure (e.g., about 4 to 5MPa for a accumulator), which is greater than the opening setting value P₀ₘₐᵢₙ of the main valve, so that the main valve is closed and isolation of the main valve under a low primary loop pressure (Prcs<Pacc) is realized.

While satisfying the requirements on primary loop pressure relief of a Hualong PWR (Pressurized Water Reactor), a pressure relief valve set of such design has the following technical advantages:
1) Manual opening is enabled: manual opening of the valve in any state can be implemented by simply powering on a solenoid valve.
2) Effective isolation is guaranteed: effective isolation of the valve can be guaranteed in various operating states of a power plant.
3) An always open state is kept: after being opened, the valve can be kept in an always open state without any power source, which ensures long-term pressure relief and long-term recirculation of the primary loop.

An embodiment in a second aspect provides a valve set for primary loop pressure relief and discharge, which can enable automatic opening of a main valve without any external energy input when a primary loop satisfies a condition and keep the main valve in an always open state, enable manual opening of the main valve and ensure effective isolation of the main valve during normal operation and shutdown refueling.

In this embodiment, the following technical solution is adopted to solve the technical problem of the present disclosure:
An embodiment in a second aspect of the present disclosure provides a valve set for primary loop pressure relief and discharge, including: a main valve and a control valve assembly, wherein the main valve includes: a main valve body and a main valve core, the main valve body has a main sealed cavity and a main valve cavity, the main valve cavity is configured to communicate a primary loop coolant with atmosphere, the main valve core has one end in the main sealed cavity and the other end in the main valve cavity, and the main valve core is slidable in the main valve body under an action of a pressure of a medium entering the main sealed cavity, so as to open or close the main valve cavity;
the control valve assembly includes a pilot valve, a first control valve and a second control valve;
the pilot valve includes a pilot valve body and a pilot valve core, wherein the pilot valve body is provided with a first sealed cavity, a first channel, a second channel and a second sealed cavity arranged in sequence, the pilot valve core includes a driving structure and a valve core structure, the driving structure has one end in the first sealed cavity and the other end in the second sealed cavity, the valve core structure is connected to the driving structure and has one end in the first channel and the other end in the second channel, the driving structure is slidable in the pilot valve body under an action of a pressure difference of a medium entering the first sealed cavity and a medium entering the second sealed cavity, so as to drive the valve core structure to open the first channel and close the second channel, or close the first channel and open the second channel, and outlets of the first channel and the second channel are both communicated with the main sealed cavity;
the first control valve has a first input port, a second input port, and a first output port, wherein the first output port is communicated with the first sealed cavity, the first input port is communicated with a primary loop volume control tank or pressure relief tank, and the second input port is communicated with a constant pressure source;
the second control valve has a third input port, a fourth input port, and a second output port, wherein the second output port is respectively communicated with an inlet of the first channel and the second sealed cavity, the third input port is communicated with a constant pressure source, and the fourth input port is communicated with the primary loop coolant;
when the first control valve is powered on, the first output port is communicated with the first input port and disconnected from the second input port, and when the first control valve is powered off, the first output port is communicated with the second input port and disconnected from the first input port;
when the second control valve is powered on, the second output port is communicated with the third input port and disconnected from the fourth input port, and when the second control valve is powered off, the second output port is communicated with the fourth input port and disconnected from the third input port;
a pressure setting value P₀ₘₐᵢₙ at which the medium entering the main sealed cavity opens the main valve satisfies: P0<P₀ₘₐᵢₙ<Pacc, where P0 is an atmospheric pressure, and Pacc is a pressure of the constant pressure source; and
a pressure setting value P_{0twin} at which the medium entering the second sealed cavity opening the pilot valve satisfies: Pacc×A₁=P_{0twin}×A₂, where Pacc is a pressure of the constant pressure source, A₁ is a cross sectional area of a first pilot piston, A₂ is a cross sectional area of a second pilot piston, and A₂<A₁.

Optionally, the first control valve includes a first control valve body, a first control piston assembly, and a first solenoid valve;
the first control valve body has a first main chamber and a first side chamber, the first control piston assembly is disposed in the first main chamber, the first solenoid valve is disposed in the first side chamber, and the first input port, the second input port and the first output port are all disposed on the first control valve body and communicated with the first main chamber, and the first control piston assembly includes a first control piston rod and a plurality of first control pistons fixed on the first control piston rod, wherein the plurality of first control pistons are sequentially and sealedly arranged in the first main chamber in an axial direction of the first control piston rod in a slidable manner to divide the first main chamber into a plurality of first sub-chambers, and one end of the first control piston rod extends out of the first main chamber to be connected to the first solenoid valve;
the first output port is located on one side of a radial direction of the first control piston rod, while the first input port and the second input port are both located on the other side of the radial direction of the first control piston rod; when the first solenoid valve is powered on, the first control piston assembly is driven to be moved axially to communicate the first output port with only the first input port through one of the first sub-chambers, while the second input port is located in an adjacent another first sub-chamber to enable a first power-on state of the first control valve; and when the first solenoid valve is powered off, the first control piston assembly is driven to be moved axially in an opposite direction to communicate the first output port with only the second input port through one of the first sub-chambers, while the first input port is located in an adjacent another first sub-chamber to enable a first power-off state of the first control valve;
the second control valve includes a second control valve body, a second control piston assembly, and a second solenoid valve;
the second control valve body has a second main chamber and a second side chamber, the second control piston assembly is disposed in the second main chamber, the second solenoid valve is disposed in the second side chamber; the third input port, the fourth input port and the second output port are all disposed on the second control valve body and communicated with the second main chamber, and the second control piston assembly includes a second control piston rod and a plurality of second control pistons fixed on the second control piston rod, wherein the plurality of second control pistons are sequentially and sealedly arranged in the second main chamber in an axial direction of the second control piston rod in a slidable manner to divide the second main chamber into a plurality of second sub-chambers, and one end of the second control piston rod extends out of the second main chamber to be connected to the second solenoid valve; and
the second output port is located on one side of a radial direction of the second control piston rod, while the third input port and the fourth input port are both located on the other side of the radial direction of the second control piston rod; when the second solenoid valve is powered on, the second control piston assembly is driven to be moved axially to communicate the second output port with only the third input port through one of the second sub-chambers, while the fourth input port is located in an adjacent another second sub-chamber to enable a second power-on state of the second control valve; and when the second solenoid valve is powered off, the second control piston assembly is driven to be moved axially in an opposite direction to communicate the second output port and only the fourth input port through one of the second sub-chambers, while the third input port is located in an adjacent second another sub-chamber to enable a second power-off state of the second control valve.

Optionally, the first solenoid valve includes a first sucker, a first coil, and a first return spring, and the first coil is fixed on an outer end wall of the first main chamber, the first sucker is fixed on one end of the first control piston rod extending into the first side chamber, and the first return spring is connected between a chamber wall of the first side chamber and the first sucker, and
when the first solenoid valve is powered on, the first sucker is moved toward the first coil to be fixedly connected to the first coil, so that the first control piston assembly is driven to be moved axially to enable the first power-on state of the first control valve, while the first return spring is stretched; and when the first solenoid valve is powered off, the first sucker is disconnected from the first coil, and the first return spring is reset, so that the first control piston assembly is driven to be moved axially to enable the first power-off state of the first control valve;
the second solenoid valve includes a second sucker, a second coil and a second return spring, wherein the second coil is fixed on an outer end wall of the second main chamber, the second sucker is fixed on one end of the second control piston rod extending into the second side chamber, and the second return spring is connected between a chamber wall of the second side chamber and the second sucker;
when the second solenoid valve is powered on, the second sucker is moved toward the second coil to be fixedly connected to the second coil, so that the second control piston assembly is driven to be moved axially to enable the second power-on state of the second control valve, while the second return spring is stretched; and when the second solenoid valve is powered off, the second sucker is disconnected from the second coil, and the second return spring is reset, so that the second control piston assembly is driven to be moved axially to enable the second power-off state of the second control valve.

Optionally, a plurality of control valve assemblies are provided, each of which has a first channel outlet and a second channel outlet both communicated with the main sealed cavity of the main valve.

A plurality of first solenoid valves are provided in the first control valve, each of which has a first sucker fixedly connected to the first control piston rod, and
a plurality of second solenoid valves are provided in the second control valve, each of which has a second sucker fixedly connected to the second control piston rod.

The main valve core includes a main piston assembly and a main spring, wherein the main piston assembly includes a main piston rod, a main piston and a valve disc, the main piston rod is slidably disposed in the main valve body, the main piston is fixed on the main piston rod and located in the main sealed cavity, the valve disc is fixed on the main piston rod and located in the main valve cavity, and the main spring is located in the main sealed cavity and compressed between the main piston and a bottom wall of the main valve cavity.

Optionally, the main valve cavity is located below the main sealed cavity, the main valve body is provided with a valve inlet and a valve outlet each communicated with the main valve cavity, the valve inlet is provided at a bottom of the main valve body and configured to be communicated with the primary loop coolant, the valve outlet is provided on a side surface of the main valve body and configured to be communicated with atmosphere, and the main piston assembly is vertically and slidably disposed in the main valve body; and
the pressure setting value P₀ₘₐᵢₙ at which the medium entering the main sealed cavity opens the main valve further satisfies: P₀ₘₐᵢₙ×(A1-A2) +G=F, where A1 is a cross sectional area of the main piston, A2 is a cross sectional area of the valve disc, G is a gravity of the main piston assembly, and F is a spring force of the main spring when the main valve is closed.

Optionally, an outer diameter of the valve disc is gradually reduced from top to bottom so that an outer wall of the valve disc forms a first conical surface; and
a nozzle is installed at the valve inlet, wherein a second conical surface matched with the first conical surface is provided at an upper part of an inner wall of the nozzle, and when the main piston assembly is moved downward to make the first conical surface matched with the second conical surface, the valve disc closes the valve inlet.

Optionally, the main valve body includes a main valve housing, a lower valve seat and an upper valve seat which are fixedly connected in sequence from bottom to top, and an inner cavity of the main valve housing forms the main valve cavity; and
a first groove is provided in a top surface of the lower valve seat, a lower part of the upper valve seat extends into the first groove to be sealedly connected to a groove wall of the first groove, a second groove is provided in a bottom surface of the upper valve seat, and a groove wall of the second groove encloses the main sealed cavity with a bottom wall of the first groove.

The main piston rod includes a working section and a positioning section, wherein the working section has a lower end fixedly connected to the valve disc, and an upper end passing through the lower valve seat into the main sealed cavity and fixedly connected to the main piston, and the main spring is disposed around the working section; and
a sealed exhaust cavity is provided at an upper part of the upper valve seat, a top of the upper valve seat is provided with a valve cover for opening or closing the exhaust cavity, and the positioning section has a lower end fixedly connected to a piston, and an upper end passing through a lower part of the upper valve seat into the exhaust cavity.

Optionally, the driving structure includes a first pilot piston, a second pilot piston and a pilot piston rod, wherein the pilot piston rod is axially and slidably disposed in the pilot valve body and connected between the first pilot piston and the second pilot piston, the first pilot piston is sealedly and slidably disposed in the first sealed cavity, and the second pilot piston is sealedly and slidably disposed in the second sealed cavity; and
the valve core structure includes a first pilot valve, a second pilot valve and a pilot valve stem, wherein the pilot valve stem is arranged in parallel with and connected to the pilot piston rod, axially and slidably disposed in the pilot valve body and connected between the first pilot valve and the second pilot valve, the first pilot valve is disposed in the first channel and configured to open or close the first channel, and the second pilot valve is disposed in the second channel and configured to open or close the second channel.

Optionally, the first pilot valve includes a first valve plate and a first valve core assembly, wherein the first valve plate is fixed in and configured to close the first channel, and provided with a first valve hole, while the first valve core assembly is slidably disposed in the first channel and matched with the first valve hole;
the second pilot valve includes a second valve plate and a second valve core assembly, wherein the second valve plate is fixed in and configured to close the second channel, and provided with a second valve hole, while the second valve core assembly is slidably disposed in the second channel and matched with the second valve hole; and
the pilot valve stem is configured to connect the first valve core assembly and the second valve core assembly, and when the pilot valve stem is moved axially, the first valve core assembly is driven to open the first valve hole and the second valve core assembly is driven to close the second valve hole, or the first valve core assembly is driven to close the first valve hole and the second valve core assembly is driven to open the second valve hole.

Optionally, the first channel includes a first inlet section, a first pilot valve cavity, and a first outlet section which are communicated in sequence, wherein the first pilot valve is located in the first pilot valve cavity, and the first pilot valve cavity has a space for the first valve core assembly to slide; and
the second channel includes a second inlet section, a second pilot valve cavity, and a second outlet section which are communicated in sequence, wherein the second outlet section is communicated with the first outlet section, the second pilot valve is located in the second pilot valve cavity, and the second pilot valve cavity has a space for the second valve core assembly to slide.

Optionally, the pilot piston rod is connected to the pilot valve stem by a pilot dial, and the pilot valve body is provided with a slot for axial movement of the pilot dial along the pilot piston rod.

According to the embodiment in the second aspect of the present disclosure, a main valve, a pilot valve and two control valves are combined to form a valve set for primary loop pressure relief and discharge, where the main valve body of the main valve has a sealed cavity and a valve cavity, the valve core is slidably disposed in the main valve, and the valve core is slidable in the main valve body under an action of a pressure of a medium entering the sealed cavity, so as to open or close the valve cavity; the pilot valve body of the pilot valve is provided with a first sealed cavity, a first channel, a second channel and a second sealed cavity arranged in sequence, the pilot valve core is slidably disposed in the pilot valve body and can open the first channel and close the second channel, or close the first channel and open the second channel, under an action of a pressure difference between the medium entering the first sealed cavity and the medium entering the second sealed cavity, outlets of the first channel and the second channel are both communicated with the main sealed cavity; the first output port of the first control valve is communicated with the first sealed cavity, the first input port is communicated with a primary loop volume control tank or pressure relief tank, and the second input port is communicated with a constant pressure source; the second output port of the second control valve is respectively communicated with an inlet of the first channel and the second sealed cavity, the third input port is communicated with a constant pressure source, and the fourth input port is communicated with the primary loop coolant; and an opening setting value P₀ₘₐᵢₙ of the main valve satisfies: P0<P₀ₘₐᵢₙ<Pacc, and a pressure setting value P_{0twin} of the pilot valve satisfies: Pacc×A₁=P_{0twin}×A₂, where A₂<A₁, so that:

When the valve set is in a standby state (the first control valve and the second control valve are both powered off), when the primary loop pressure is normal (about 15.5MPa), the pressure in the first sealed cavity of the pilot valve is a constant pressure source pressure (e.g., about 4 to 5MPa for a accumulator), while the pressure in the second sealed cavity is the primary loop pressure, so that the pilot valve core is moved upward to open the first channel, and the pressure source entering the main sealed cavity of the main valve is the primary loop, which is far greater than the opening setting value P₀ₘₐᵢₙ of the main valve, so that the main valve is closed and isolation of the main valve during normal operation of the primary loop is realized. When the primary loop has a fault which causes a pressure drop to below the pressure setting value P₀ₘₐᵢₙ of the pilot valve, the pilot valve core is moved downward to open the second channel, so that the pressure source entering the main sealed cavity of the main valve is a primary loop volume control tank or pressure relief tank (at an atmospheric pressure P0), which is less than the opening setting value P₀ₘₐᵢₙ of the main valve, so that the main valve is automatically opened, thereby enabling automatic opening of the main valve when the primary loop pressure is abnormal (P_{rcs}<P_{0twin}). Such an opening process does not need any additional energy input (because the first control valve and the second control valve are both powered off, and the main valve will be automatically opened as long as the primary loop pressure satisfies the condition).

When the main valve needs to be manually opened in some cases, the first solenoid valve is powered off while the second solenoid valve is powered on, so that the pressure in the first sealed cavity of the pilot valve is a constant pressure source pressure (e.g., about 4 to 5MPa for a accumulator), while the pressure in the second sealed cavity is also a constant pressure source pressure (e.g., about 4 to 5MPa for a accumulator). Since the pressure setting value P_{0twin} at which the medium entering the second sealed cavity opening the pilot valve is greater than the a pressure Pacc of the constant pressure source (i.e., A₂<A₁), the pilot valve core is depressed and the second channel is opened, so that the pressure source entering the main sealed cavity of the main valve is a primary loop volume control tank or pressure relief tank (at an atmospheric pressure P0), which is less than the opening setting value P₀ₘₐᵢₙ of the main valve, so that the main valve is opened.

When the main valve is not expected to be opened during shutdown refueling (where the primary loop pressure is desired to be reduced to a normal pressure), firstly the first solenoid valve is powered on and the second solenoid valve is powered off, in which case a primary loop volume control tank or pressure relief tank (at an atmospheric pressure P0) is in the first sealed cavity of the pilot valve, and the pressure in the second sealed cavity is the primary loop pressure, so that the primary loop pressure is reduced to the pressure setting value P₀ₘₐᵢₙ or less of the pilot valve (while in the standby state, the main valve is opened when the primary loop pressure is reduced to the pressure setting value P₀ₘₐᵢₙ of the pilot valve). Before the opening setting value P₀ₘₐᵢₙ of the main valve, the pilot valve keeps moving upward to open the first channel, and the pressure source entering the main sealed cavity of the main valve is the primary loop. At this stage, the main valve is kept in a closed state, thereby enabling high pressure isolation of this valve set during shutdown refueling. If the primary loop pressure is further reduced, the main valve will be opened, so that before the primary loop pressure is reduced to the opening setting value P₀ₘₐᵢₙ of the main valve, the first solenoid valve and the second solenoid valve are both powered on, in which case the pressure in the first sealed cavity of the pilot valve is a primary loop volume control tank or pressure relief tank pressure (at an atmospheric pressure P0), the pressure in the second sealed cavity is a constant pressure source pressure (e.g., about 4 to 5MPa for a accumulator), the pilot valve is moved upward to open the first channel, and the pressure source entering the main sealed cavity of the main valve is a constant pressure source pressure (e.g., about 4 to 5MPa for a accumulator), which is greater than the opening setting value P₀ₘₐᵢₙ of the main valve, so that even if the primary loop pressure is reduced to below the opening setting value P₀ₘₐᵢₙ of the main valve, the main valve is still kept in a closed state, thereby enabling low pressure isolation of this valve set during shutdown refueling.

While satisfying the requirements on primary loop pressure relief of the Hualong PWR, a pressure relief valve set of such design has the following technical advantages:
1) In a standby state, automatic opening is enabled as long as the primary loop pressure satisfies the condition, which requires no additional energy input and is more reliable.
2) After being automatically opened, the valve can be kept in an always open state without any power source, which ensures long-term pressure relief of the primary loop.
3) Through different combinations of solenoid valves, reliable isolation of the valve can be implemented in any state, while also enabling manual opening in any state.

An embodiment in a third aspect provides an isolation valve for a passive water injection pipeline of a nuclear power plant, which can be automatically opened when a primary loop pressure satisfies a condition and maintain an always open state, effectively isolated during normal operation and shutdown refueling, and enable manual recovery of the isolation function after the valve is opened.

In this embodiment, the following technical solution is adopted to solve the technical problem of the present disclosure:
An embodiment in a third aspect of the present disclosure provides an isolation valve for a passive water injection pipeline of a nuclear power plant, including: a main valve and a two-position three-way control valve;
the main valve includes: a main valve body and a valve core, the main valve body has a sealed cavity and a valve cavity, the valve cavity is configured to communicate a passive water injection pipeline and a primary loop coolant system, the valve core has one end in the sealed cavity and the other end in the valve cavity, and the valve core is slidable in the main valve body under an action of a pressure of a medium entering the sealed cavity, so as to open or close the valve cavity;
the two-position three-way control valve has a first input port, a second input port, and an output port, wherein the output port is communicated with the sealed cavity, the first input port is communicated with the primary loop coolant, and the second input port is communicated with a constant pressure source;
the two-position three-way control valve has a first state in which the output port is communicated with the first input port and disconnected from the second input port, and a second state in which the output port is communicated with the second input port and disconnected from the first input port, and the two-position three-way control valve is switchable between the first and second states to change the medium entering the sealed cavity and a pressure thereof, and a pressure setting value P₀ₘₐᵢₙ at which the medium entering the sealed cavity opens the main valve satisfies: Pgmax<P₀ₘₐᵢₙ<Pacc, where Pgmax is the highest pressure of the passive water injection pipeline, and Pacc is a pressure of the constant pressure source.

Optionally, the two-position three-way control valve includes a control valve body, a control piston assembly, a first solenoid valve, and a second solenoid valve;
the control valve body has a main chamber, a first side chamber, and a second side chamber, wherein the first side chamber and the second side chamber are disposed at two ends of the main chamber, respectively, the control piston assembly is disposed in the main chamber, the first solenoid valve is disposed in the first side chamber, and the second solenoid valve is disposed in the second side chamber;
the first input port, the second input port and the output port are all disposed on the control valve body and communicated with the main chamber, the control piston assembly includes a control piston rod and a plurality of control pistons fixed on the control piston rod, wherein the plurality of control pistons are sequentially and sealedly arranged in the main chamber in an axial direction of the control piston rod in a slidable manner to divide the main chamber into a plurality of sub-chambers, while two ends of the control piston rod both extend out of the main chamber, with one end connected to the first solenoid valve and the other end connected to the second solenoid valve; and
the output port is located on one side of a radial direction of the control piston rod, while the first input port and the second input port are both located on the other side of the radial direction of the control piston rod; when the first solenoid valve is powered on, the control piston assembly is driven toward the second solenoid valve to communicate the output port with only the second input port through one of the sub-chambers to enable the second state of the two-position three-way control valve; and when the second solenoid valve is powered on, the control piston assembly is moved toward the first solenoid valve to communicate the output port with only the first input port through one of the sub-chambers to enable the first state of the two-position three-way control valve.

Optionally, four control pistons are provided and configured to divide the main chamber into a first sub-chamber, a second sub-chamber, a third sub-chamber, a fourth sub-chamber and a fifth sub-chamber in sequence;
when the two-position three-way control valve is in the first state, the output port is communicated with only the first input port through the third sub-chamber; and
when the two-position three-way control valve is in the second state, the output port is communicated with only the second input port through the third sub-chamber.

Optionally, the first solenoid valve includes a first sucker and a first coil, and the second solenoid valve includes a second sucker and a second coil, wherein the first coil and the second coil are respectively disposed on outer end walls at two ends of the main chamber in the axial direction of the control piston rod, and the first sucker and the second sucker are respectively disposed at two ends of the control piston rod; and
when the first solenoid valve is powered on, the first sucker is moved toward the first coil to be fixedly connected to the first coil, so as to drive the control piston assembly to move toward the second solenoid valve to enable the second state of the two-position three-way control valve, and when the second solenoid valve is powered on, the second sucker is moved toward the second coil to be fixedly connected to the second coil, so as to drive the control piston assembly to move toward the first solenoid valve to enable the first state of the two-position three-way control valve.

Optionally, a plurality of two-position three-way control valves are provided and arranged in parallel.

Optionally, a plurality of first solenoid valves and a plurality of second solenoid valves are provided, the plurality of first solenoid valves are arranged in series, and the plurality of second solenoid valves are also arranged in series.

Optionally, the valve core includes a main piston assembly and a main spring, wherein the main piston assembly includes a main piston rod, a main piston and a valve disc, the main piston rod is slidably disposed in the main valve body, the main piston is fixed on the main piston rod and located in the sealed cavity, the valve disc is fixed on the main piston rod and located in the valve cavity, and the main spring is located in the sealed cavity and compressed between the main piston and a bottom wall of the valve cavity.

Optionally, the valve cavity is located below the sealed cavity, the main valve body is provided with a valve inlet and a valve outlet each communicated with the valve cavity, the valve inlet is provided at a bottom of the main valve body and configured to be communicated with the primary loop coolant system, the valve outlet is provided on a side surface of the main valve body and configured to be communicated with a gravity water injection pipeline, and the main piston assembly is vertically and slidably disposed in the main valve body to open or close the valve inlet;
the pressure setting value P₀ₘₐᵢₙ at which the medium entering the sealed cavity opens the main valve further satisfies: P₀ₘₐᵢₙ×A1-(P₀ₘₐᵢₙ-Pgmax) ×A2+G=F, where A1 is a cross sectional area of the main piston, A2 is a cross sectional area of the valve disc, G is a gravity of the main piston assembly, F is a spring force of the main spring when the main valve is closed, and Pgmax is the highest pressure of the gravity water injection pipeline.

Optionally, the main spring is disposed around the main piston rod.

Optionally, an outer diameter of the valve disc is gradually reduced from top to bottom so that an outer wall of the valve disc forms a first conical surface.

Optionally, a nozzle is installed at the valve inlet, wherein a second conical surface matched with the first conical surface is provided at an upper part of an inner wall of the nozzle, and when the main piston assembly is moved downward to make the first conical surface matched with the second conical surface, the valve disc closes the valve inlet.

Optionally, the main valve body includes a valve housing, a valve seat and a valve core which are fixedly connected in sequence from bottom to top, and an inner cavity of the valve housing forms the valve cavity.

Optionally, a first groove is provided in a top surface of the valve seat, a lower part of the valve core extends into the first groove to be sealedly connected to a groove wall of the first groove, a second groove is provided in a bottom surface of the valve core, and a groove wall of the second groove encloses the sealed cavity with a bottom wall of the first groove.

Optionally, the main piston rod includes a working section and a positioning section, wherein the working section has a lower end fixedly connected to the valve disc, and an upper end passing through the valve seat into the sealed cavity and fixedly connected to the main piston, and the main spring is disposed around the working section; and
a sealed exhaust cavity is provided at an upper part of the valve core, a top of the valve core is provided with a valve cover for opening or closing the exhaust cavity, and the positioning section has a lower end fixedly connected to a piston, and an upper end passing through the valve core into the exhaust cavity.

According to the embodiment in the third aspect of the present disclosure, the two-position three-way control valve and the main valve are combined to form an isolation valve for a passive water injection pipeline of a nuclear power plant, where the main valve body of the main valve has a sealed cavity and a valve cavity, the valve core is slidably disposed in the main valve, and the valve core is slidable in the main valve body under an action of a pressure of a medium entering the sealed cavity, so as to open or close the valve cavity; the two-position three-way control valve has a first input port communicated with the primary loop coolant, a second input port communicated with a constant pressure source, and an output port communicated with the sealed cavity of the main valve, and an opening setting value P₀ₘₐᵢₙ of the main valve satisfies: Pgmax<P₀ₘₐᵢₙ<Pacc, so that:

When the primary loop pressure is normal (about 15.5MPa), the two-position three-way control valve is switched to the first state (in which the output port of the three-position four-way control valve is communicated with the first input port), in which case the pressure in the sealed cavity of the main valve is the primary loop pressure, which is far greater than the opening setting value P₀ₘₐᵢₙ of the main valve, so that the main valve is closed and isolation of the main valve during normal operation of the primary loop is realized. When the primary loop has a fault which causes a pressure drop to below the opening setting value P₀ₘₐᵢₙ of the main valve, the main valve is automatically opened, thereby enabling a gravity water injection function.

When the main valve is not expected to be opened during shutdown refueling (where the primary loop pressure Prcs is between P₀ₘₐᵢₙ and Pacc, will be reduced to a normal pressure), the two-position three-way control valve is switched to the second state (in which the output port of the three-position four-way control valve is communicated with the second input port), in which case the pressure in the sealed cavity of the main valve is a constant pressure source pressure (e.g., about 4 to 5MPa for a accumulator), which is greater than the opening setting value P₀ₘₐᵢₙ of the main valve, so that the main valve is closed and isolation of the main valve under a low primary loop pressure is realized.

While satisfying the nuclear power gravity water injection function, this isolation valve further has the following technical advantages:
1) When the valve is in a standby state, the valve can be automatically opened as long as the primary loop pressure satisfies the condition without any external energy input.
2) Effective isolation is guaranteed: effective isolation of the valve can be guaranteed in various operating states of a power plant.
3) After being opened, the valve can be kept in an always open state without any power source.
4) After being opened, the valve can recover the isolation function by switching states of the control valve.

Based on the above three types of valve sets, an embodiment in a fourth aspect of the present disclosure provides a general valve set for safety of a nuclear power plant, which can be automatically opened when a primary loop pressure satisfies a condition and maintain an always open state, and effectively isolated during normal operation and shutdown refueling.

**In** this embodiment, the following technical solution is adopted to solve the technical problem of the present disclosure:

An embodiment in a fourth aspect of the present disclosure provides a valve set for safety of a nuclear power plant, including: a first valve part and a second valve part,
the first valve part includes a valve body portion and a valve core portion, the valve body portion has a sealed cavity and a valve cavity, the valve cavity is configured to communicate a primary loop coolant with a medium space, the valve core portion has one end in the sealed cavity and the other end in the valve cavity, and the valve core portion is slidable in the valve body portion under an action of a pressure of a medium entering the sealed cavity, so as to open or close the valve cavity and enable communication or isolation of the primary loop coolant and the medium space;
the second valve part is provided with an output end and input ends, the output end is communicated with the sealed cavity, while two or more input ends are provided; when two input ends are provided, one input end is communicated with the primary loop coolant, and the other input end is communicated with a pressure source; and when more than two input ends are provided, the input ends are communicated with the primary loop coolant, the pressure source and an atmospheric pressure source, respectively;
the second valve part controls a communication state between the output end and the input ends, so that the output end is communicated with one of the input ends;
a pressure setting value P0main at which the medium entering the sealed cavity opens the main valve satisfies: first pressure value<P0main<second pressure value, where the first pressure value is a pressure value in the medium space, and the second pressure value is a pressure value of the pressure source; and
when a pressure medium output from the output end is greater than the pressure setting value, the valve cavity is opened, and when the pressure medium output from the output end is less than the pressure setting value, the valve cavity is closed.

Optionally, the valve core portion includes a main piston assembly and a main spring, wherein the main piston assembly includes a main piston rod, a main piston and a valve disc, the main piston rod is slidably disposed in the valve body portion, the main piston is fixed on the main piston rod and located in the sealed cavity, the valve disc is fixed on the main piston rod and located in the valve cavity, and the main spring is located in the sealed cavity and compressed between the main piston and a bottom wall of the valve cavity.

Optionally, the valve cavity is located below the sealed cavity, the valve body portion is provided with a valve inlet and a valve outlet each communicated with the valve cavity, the valve inlet is provided at a bottom of the valve body portion and configured to be communicated with the primary loop coolant, the valve outlet is provided on a side surface of the valve body portion and configured to be communicated with the medium space, and the main piston assembly is vertically and slidably disposed in the valve body portion to open or close the valve inlet;
the medium space is atmosphere or a passive water injection pipeline;
the pressure setting value P₀ₘₐᵢₙ at which the medium entering the sealed cavity opens the main valve further satisfies: P₀ₘₐᵢₙ×(A1-A2)-β+G=F, where A1 is a cross sectional area of the main piston, A2 is a cross sectional area of the valve disc, G is a gravity of the main piston assembly, F is a spring force of the main spring when the main valve is closed, and β is a pressure coefficient of the medium space;

When the medium space is atmosphere, β takes a value of 0, and when the medium space is a passive water injection pipeline, β takes a value of Pgmax× A2, where Pgmax is the highest pressure of the passive water injection pipeline.

Optionally, the valve set for safety of a nuclear power plant is configured for pressure relief of a primary loop, wherein the first valve part and the second valve part are a main valve and a three-position four-way control valve, respectively;
the main valve includes: a main valve body and a valve core, the main valve body is a valve body portion in the first valve part, and the valve core is a valve core portion in the first valve part, the main valve body has a sealed cavity and a valve cavity, the medium space is atmosphere, i.e., the valve cavity is configured to communicate a primary loop coolant with atmosphere, the valve core has one end in the sealed cavity and the other end in the valve cavity, and the valve core is slidable in the main valve body under an action of a pressure of a medium entering the sealed cavity, so as to open or close the valve cavity; and
the output end of the second valve part is an output port. The second valve part is provided with three input ends, which are a first input port, a second input port, and a third input port, respectively. In other words, the three-position four-way control valve has a first input port, a second input port, a third input port and an output port, wherein the output port is communicated with the sealed cavity, the first input port is communicated with an atmospheric pressure source, the second input port is communicated with the primary loop coolant, and the pressure source is selected as a constant pressure source, i.e., the third input port is communicated with a constant pressure source;
the three-position four-way control valve has a first state in which the output port is communicated with the first input port and disconnected from both the second input port and the third input port, a second state in which the output port is communicated with the second input port and disconnected from both the first input port and the third input port, and a third state in which the output port is communicated with the third input port and disconnected from both the first input port and the second input port, and the three-position four-way control valve is switchable between the first, second and third states to change the medium entering the sealed cavity and a pressure thereof, and a pressure setting value P0main at which the medium entering the sealed cavity opens the main valve satisfies: P0<P0main<Pacc, where P0 is an atmospheric pressure, i.e., the first pressure value, and Pacc is a pressure of the constant pressure source, i.e., the second pressure value.

Optionally, the valve set for safety of a nuclear power plant is configured for pressure relief of a primary loop, wherein the first valve part and the second valve part are a main valve and a control valve assembly, respectively;
the main valve includes: a main valve body and a main valve core, the main valve body is a valve body portion in the first valve part, and the main valve core is a valve core portion in the first valve part. The main valve body has a main sealed cavity and a main valve cavity, the medium space is atmosphere, i.e., the main valve cavity is configured to communicate a primary loop coolant with atmosphere, the main valve core has one end in the main sealed cavity and the other end in the main valve cavity, and the main valve core is slidable in the main valve body under an action of a pressure of a medium entering the main sealed cavity, so as to open or close the main valve cavity;
the control valve assembly includes a pilot valve, a first control valve and a second control valve;
the pilot valve includes a pilot valve body and a pilot valve core, wherein the pilot valve body is provided with a first sealed cavity, a first channel, a second channel and a second sealed cavity arranged in sequence, the pilot valve core includes a driving structure and a valve core structure, the driving structure has one end in the first sealed cavity and the other end in the second sealed cavity, the valve core structure is connected to the driving structure and has one end in the first channel and the other end in the second channel, the driving structure is slidable in the pilot valve body under an action of a pressure difference of a medium entering the first sealed cavity and a medium entering the second sealed cavity, so as to drive the valve core structure to open the first channel and close the second channel, or close the first channel and open the second channel, outlets of the first channel and the second channel are both communicated with the main sealed cavity, and the output end of the second valve part is disposed on the pilot valve, i.e., at the outlets of the first channel and the second channel;
the second valve part is provided with four input ends, which are a first input port, a second input port, a third input port and a fourth input port, respectively, wherein the first control valve has a first input port, a second input port, and a first output port, wherein the first output port is communicated with the first sealed cavity, the atmospheric pressure source may be selected as a primary loop volume control tank or pressure relief tank, i.e., the first input port is communicated with a primary loop volume control tank or pressure relief tank, and the pressure source is selected as a constant pressure source, i.e., the second input port is communicated with a constant pressure source;
the second control valve has a third input port, a fourth input port, and a second output port, wherein the second output port is respectively communicated with an inlet of the first channel and the second sealed cavity, the third input port is communicated with a constant pressure source, and the fourth input port is communicated with the primary loop coolant;
when the first control valve is powered on, the first output port is communicated with the first input port and disconnected from the second input port, and when the first control valve is powered off, the first output port is communicated with the second input port and disconnected from the first input port;
when the second control valve is powered on, the second output port is communicated with the third input port and disconnected from the fourth input port, and when the second control valve is powered off, the second output port is communicated with the fourth input port and disconnected from the third input port;
a pressure setting value P0main at which the medium entering the main sealed cavity opens the main valve satisfies: P0<P0main<Pacc, where P0 is an atmospheric pressure, i.e., the first pressure value, and Pacc is a pressure of the constant pressure source, i.e., the second pressure value; and
a pressure setting value P0twin at which the medium entering the second sealed cavity opening the pilot valve satisfies: Pacc×A1=P0twin×A2, where Pacc is a pressure of the constant pressure source, A1 is a cross sectional area of a first pilot piston, A2 is a cross sectional area of a second pilot piston, and A2<A1.

Optionally, the valve set for safety of a nuclear power plant is configured for passive water injection of a primary loop, wherein the first valve part and the second valve part are a main valve and a two-position three-way control valve, respectively;
the main valve includes: a main valve body and a valve core, the main valve body is a valve body portion in the first valve part, and the valve core is a valve core portion in the second valve part, the main valve body has a sealed cavity and a valve cavity, the medium space is a passive water injection pipeline, i.e., the valve cavity is configured to communicate a passive water injection pipeline and a primary loop coolant system, the valve core has one end in the sealed cavity and the other end in the valve cavity, and the valve core is slidable in the main valve body under an action of a pressure of a medium entering the sealed cavity, so as to open or close the valve cavity;
the output end of the second valve part is an output port, and two input ends, i.e., a first input port and a second input port, are provided, i.e., the two-position three-way control valve has a first input port, a second input port, and an output port, wherein the output port is communicated with the sealed cavity, the first input port is communicated with the primary loop coolant, and the pressure source is a constant pressure source, i.e., the second input port is communicated with a constant pressure source;
the two-position three-way control valve has a first state in which the output port is communicated with the first input port and disconnected from the second input port, and a second state in which the output port is communicated with the second input port and disconnected from the first input port, and the two-position three-way control valve is switchable between the first and second states to change the medium entering the sealed cavity and a pressure thereof, and a pressure setting value P0main at which the medium entering the sealed cavity opens the main valve satisfies: Pgmax<P0main<Pacc, where Pgmax is the highest pressure of the passive water injection pipeline, i.e., the first pressure value, and Pacc is a pressure of the constant pressure source, i.e., the second pressure value.

In the valve set for safety of a nuclear power plant, the second valve part can control the output end to be communicated with one of the input ends while being disconnected from the other input end, and further control a medium pressure in the sealed cavity. Specifically, one of the input ends is communicated with a primary loop coolant, while the other input end is communicated with a pressure source (i.e., a constant pressure source).

When the primary loop pressure is normal (about 15.5MPa), the second valve part is switched into a state in which the output end is communicated with an input end corresponding to the primary loop coolant, in which case the pressure in the sealed cavity of the first valve part is the primary loop pressure, which is far greater than the opening setting value P₀ₘₐᵢₙ of the first valve part, so that the first valve part is closed and isolation of the first valve part during normal operation of the primary loop and under a high pressure (Prcs>P₀ₘₐᵢₙ) is realized. When the primary loop has a fault which causes a pressure drop to below the opening setting value P₀ₘₐᵢₙ of the first valve part, the first valve part is automatically opened, thereby enabling automatic opening of the main valve when the primary loop pressure is abnormal.

When the first valve part is not expected to be opened during shutdown refueling (where the primary loop pressure is desired to be reduced to a normal pressure), the second valve part is switched into a state in which the output end is communicated with an input end corresponding to the pressure source, in which case the pressure in the seal ring of the first valve part is a constant pressure source pressure (e.g., about 4 to 5MPa for a accumulator), which is greater than the opening setting value P₀ₘₐᵢₙ of the first valve part, so that the first valve part is closed and isolation between the primary loop and the medium space under a low primary loop pressure (Prcs<Pacc) is realized.

In summary, the safety valve set of the present disclosure can enable automatic opening of the first valve part when the primary loop satisfies a condition and keep the first valve part in an always open state so that the primary loop is communicated with the medium space, and enable effective isolation of the first valve part during shutdown refueling of the reactor (i.e., enable effective isolation between the primary loop and the medium space by closing the first valve part). This safety valve set can be applied to different scenes, and enable pressure relief or water injection of a primary loop pipeline according to actual needs, so as to ensure normal operation of the primary loop.

### BRIEF DESCRIPTION OF DRAWINGS

FIG. 1 is a schematic structural diagram of a passive core cooling system; and
FIGs. 2 to 3 are drawings for a first embodiment:

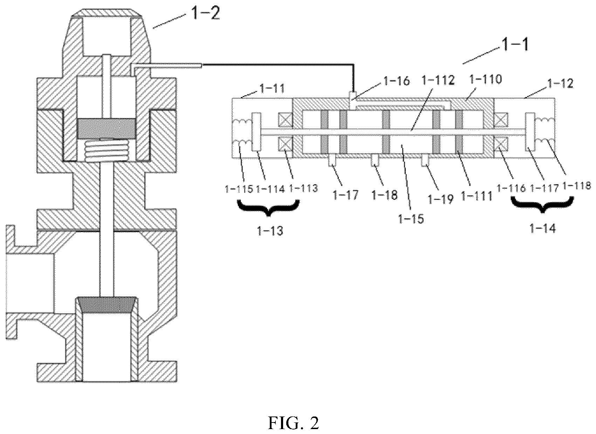

FIG. 2 is a schematic structural diagram of a primary loop hydraulic pressure relief valve set of a nuclear power plant according to the first embodiment of the present disclosure; and

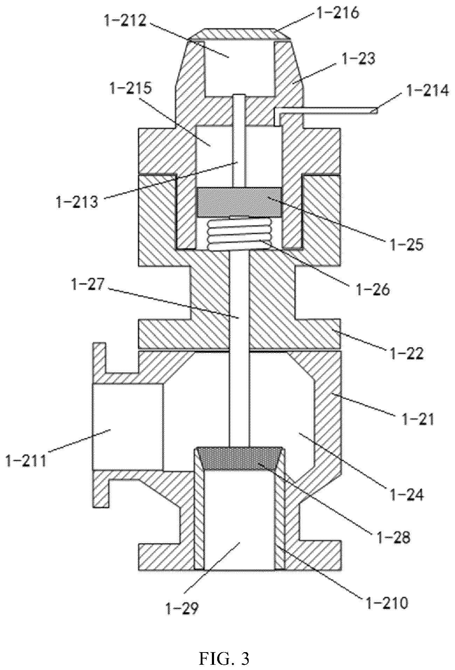

FIG. 3 is a schematic structural diagram of a main valve in a pressure relief valve set in the first embodiment;
   in which: 1-1, three-position four-way control valve; 1-11, first side chamber; 1-12, second side chamber; 1-13, first solenoid valve; 1-14, second solenoid valve; 1-15, main chamber; 1-16, output port; 1-17, first input port; 1-18, second input port; 1-19, third input port; 1-110, control valve body; 1-111, control piston; 1-112, control piston rod; 1-113, first coil; 1-114, first sucker; 1-115, first return spring; 1-116, second coil; 1-117, second sucker; 1-118, second return spring; 1-2, main valve; 1-21, valve housing; 1-22, valve seat; 1-23, valve core; 1-24, valve cavity; 1-25, piston; 1-26, spring; 1-27, working section; 1-28, valve disc; 1-29, valve inlet; 1-210, nozzle; 1-211, valve outlet; 1-212, exhaust cavity; 1-213, positioning section; 1-214, conduit; and 1-215, sealed cavity.

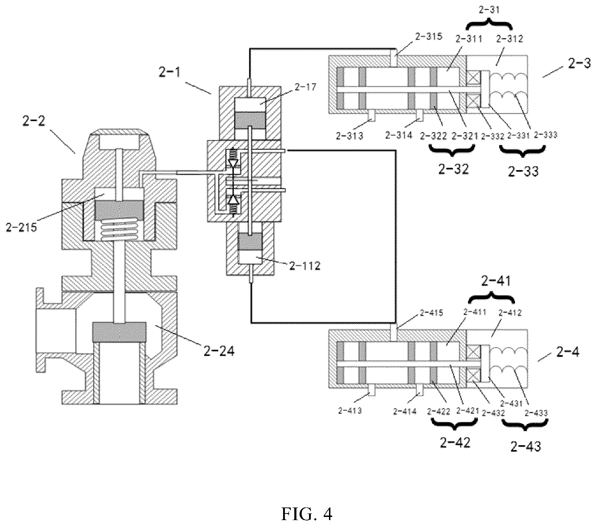

FIGs. 4 to 6 are drawings for a second embodiment:
FIG. 4 is a schematic structural diagram of a valve set for primary loop pressure relief and discharge according to the second embodiment of the present disclosure;

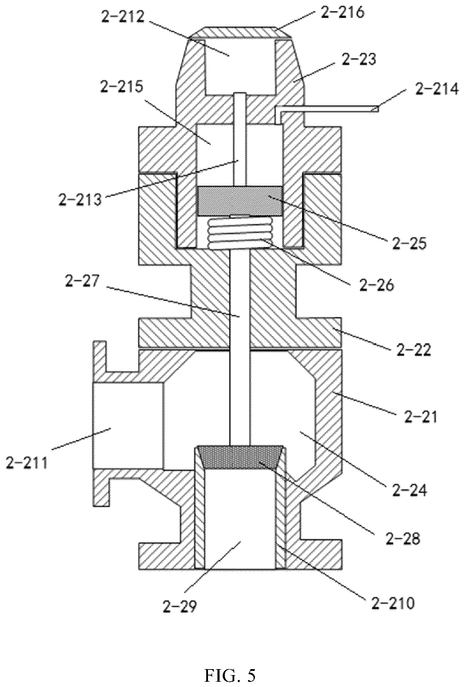

FIG. 5 is a schematic structural diagram of a main valve in the second embodiment; and

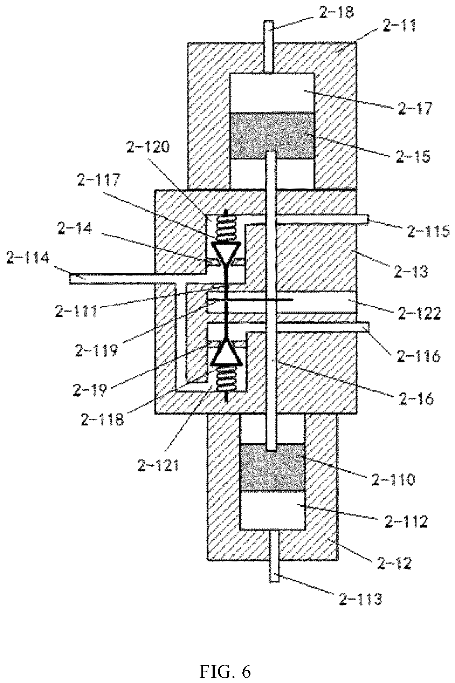

FIG. 6 is a schematic structural diagram of a pilot valve in the second embodiment;
   in which 2-1, pilot valve; 2-11, first valve seat; 2-12, second valve seat; 2-13, intermediate valve seat; 2-14, first valve plate; 2-15, first pilot piston; 2-16, pilot piston rod; 2-17, first sealed cavity; 2-18, first conduit; 2-19, second valve plate; 2-110, second pilot piston; 2-111, pilot valve stem; 2-112, second sealed cavity; 2-113, second conduit; 2-114, output pipe; 2-115, first input pipe; 2-116, second input pipe; 2-117, first valve core assembly; 2-118, second valve core assembly; 2-119, pilot dial; 2-120, first pilot valve cavity; 2-121, second pilot valve cavity; 2-122, slot;
   2-2, main valve; 2-21, main valve housing; 2-22, lower valve seat; 2-23, upper valve seat; 2-24, main valve cavity; 2-25, main piston; 2-26, main spring; 2-27, working section; 2-28, valve disc; 2-29, valve inlet; 2-210, nozzle; 2-211, valve outlet; 2-212, exhaust cavity; 2-213, positioning section; 2-214, pilot conduit; 2-215, main sealed cavity; 2-216 valve cover;
   2-3, first control valve; 2-31, first control valve body; 2-311, first main chamber; 2-312, first side chamber; 2-313, first input port; 2-314, second input port; 2-315, first output port; 2-32, first control piston assembly; 2-321, first control piston rod; 2-322, first control piston; 2-33, first solenoid valve; 2-331, first sucker; 2-332, first coil; 2-333, first return spring;
   2-4, second control valve; 2-41, second control valve body; 2-411, second main chamber; 2-412, second side chamber; 2-413, third input port; 2-414, fourth input port; 2-415, second output port; 2-42, second control piston assembly; 2-421, second control piston rod; 2-422, second control piston; 2-43, second solenoid valve; 2-431, second sucker; 2-432, second coil; and 2-433, second return spring.

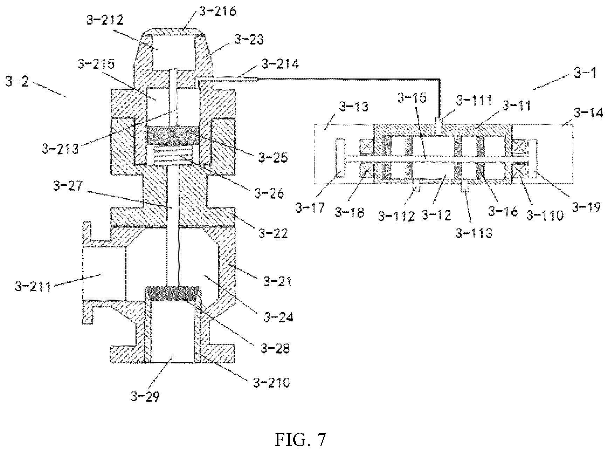

FIG. 7 is a drawing for a third embodiment:
FIG. 7 is a schematic structural diagram of an isolation valve for a passive water injection pipeline of a nuclear power plant according to the third embodiment of the present disclosure,
   in which: 3-1, two-position three-way control valve; 3-11, control valve body; 3-12, main chamber; 3-13, first side chamber; 3-14, second side chamber; 3-15, control piston rod; 3-16, control piston; 3-17, first sucker; 3-18, first coil; 3-19, second sucker; 3-110, second coil; 3-111, output port; 3-112, first input port; 3-113, second input port; 3-2, main valve; 3-21, valve housing; 3-22, valve seat; 3-23, valve core; 3-24, valve cavity; 3-25, piston; 3-26, spring; 3-27, working section; 3-28, valve disc; 3-29, valve inlet; 3-210, nozzle; 3-211, valve outlet; 3-212, exhaust cavity; 3-213, positioning section; 3-214, conduit; 3-215, sealed cavity; and 3-216, valve cover.

### DETAIL DESCRIPTION OF EMBODIMENTS

The technical solution of the present disclosure will now be described clearly and completely with the help of accompanying drawings of the disclosure. Obviously, the described embodiments are part, but not all, of the embodiments of the disclosure. Based on the embodiments of the present disclosure, all the other embodiments obtained by those ordinary skilled in the art without any creative labor fall into the scope of the present disclosure.

In the description of the present disclosure, it should be noted that orientations or positional relationships, such as "above" or the like, are based on the orientations or positional relationships shown in the drawings, and are merely for facilitating and simplifying the description, but not intended to indicate or imply that the referred device or element must be in a specific orientation, or constructed and operated in the specific orientation, and therefore, they should not be construed as limitations to the present disclosure.

In the description of the present disclosure, terms "first", "second", and the like are used for the purpose of illustration only but cannot be construed as indicating or implying a relative importance.

In the description of the present disclosure, it should be noted that, unless otherwise explicitly specified or limited, the terms "connected", "disposed", "mounted", "fixed", and the like are to be construed broadly, e.g., as being fixedly connected, detachably connected, or integrally connected; and or may refer to direct connection, indirect connection via an intermedium, or internal communication between two elements. Those skilled in the art may understand the specific meanings of the above terms in the present disclosure according to the specific context.

The present disclosure provides a primary loop hydraulic pressure relief valve set of a nuclear power plant, including: a main valve and a three-position four-way control valve.

The main valve includes: a main valve body and a valve core, the main valve body has a sealed cavity and a valve cavity, the valve cavity is configured to communicate a primary loop coolant with atmosphere, the valve core has one end in the sealed cavity and the other end in the valve cavity, and the valve core is slidable in the main valve body under an action of a pressure of a medium entering the sealed cavity, so as to open or close the valve cavity.

The three-position four-way control valve has a first input port, a second input port, a third input port and an output port, where the output port is communicated with the sealed cavity, the first input port is communicated with an atmospheric pressure source, the second input port is communicated with the primary loop coolant, and the third input port is communicated with a constant pressure source.

The three-position four-way control valve has a first state in which the output port is communicated with the first input port and disconnected from both the second input port and the third input port, a second state in which the output port is communicated with the second input port and disconnected from both the first input port and the third input port, and a third state in which the output port is communicated with the third input port and disconnected from both the first input port and the second input port, and the three-position four-way control valve is switchable between the first, second and third states to change the medium entering the sealed cavity and a pressure thereof. A pressure setting value P₀ₘₐᵢₙ at which the medium entering the sealed cavity opens the main valve satisfies: P0<P₀ₘₐᵢₙ<Pacc, where P0 is an atmospheric pressure, and Pacc is a pressure of the constant pressure source.

The present disclosure further provides a valve set for primary loop pressure relief and discharge, including: a main valve and a control valve assembly, where the main valve includes: a main valve body and a main valve core, the main valve body has a main sealed cavity and a main valve cavity, the main valve cavity is configured to communicate a primary loop coolant with atmosphere, the main valve core has one end in the main sealed cavity and the other end in the main valve cavity, and the main valve core is slidable in the main valve body under an action of a pressure of a medium entering the main sealed cavity, so as to open or close the main valve cavity.

The control valve assembly includes a pilot valve, a first control valve and a second control valve.

The pilot valve includes a pilot valve body and a pilot valve core, where the pilot valve body is provided with a first sealed cavity, a first channel, a second channel and a second sealed cavity arranged in sequence, the pilot valve core includes a driving structure and a valve core structure, the driving structure has one end in the first sealed cavity and the other end in the second sealed cavity, the valve core structure is connected to the driving structure and has one end in the first channel and the other end in the second channel, the driving structure is slidable in the pilot valve body under an action of a pressure difference of a medium entering the first sealed cavity and a medium entering the second sealed cavity, so as to drive the valve core structure to open the first channel and close the second channel, or close the first channel and open the second channel, and outlets of the first channel and the second channel are both communicated with the main sealed cavity.

The first control valve has a first input port, a second input port, and a first output port, where the first output port is communicated with the first sealed cavity, the first input port is communicated with a primary loop volume control tank or pressure relief tank, and the second input port is communicated with a constant pressure source.

The second control valve has a third input port, a fourth input port, and a second output port, where the second output port is respectively communicated with an inlet of the first channel and the second sealed cavity, the third input port is communicated with a constant pressure source, and the fourth input port is communicated with the primary loop coolant.

When the first control valve is powered on, the first output port is communicated with the first input port and disconnected from the second input port, and when the first control valve is powered off, the first output port is communicated with the second input port and disconnected from the first input port.

When the second control valve is powered on, the second output port is communicated with the third input port and disconnected from the fourth input port, and when the second control valve is powered off, the second output port is communicated with the fourth input port and disconnected from the third input port.

A pressure setting value P₀ₘₐᵢₙ at which the medium entering the main sealed cavity opens the main valve satisfies: P0<P₀ₘₐᵢₙ<Pacc, where P0 is an atmospheric pressure, and Pacc is a pressure of the constant pressure source; and
a pressure setting value P_{0twin} at which the medium entering the second sealed cavity opening the pilot valve satisfies: Pacc×A₁=P_{0twin}×A₂, where Pacc is a pressure of the constant pressure source, A₁ is a cross sectional area of a first pilot piston, A₂ is a cross sectional area of a second pilot piston, and A₂<A₁.

The present disclosure further provides an isolation valve for a passive water injection pipeline of a nuclear power plant, including: a main valve and a two-position three-way control valve.

The main valve includes: a main valve body and a valve core, the main valve body has a sealed cavity and a valve cavity, the valve cavity is configured to communicate a passive water injection pipeline and a primary loop coolant system, the valve core has one end in the sealed cavity and the other end in the valve cavity, and the valve core is slidable in the main valve body under an action of a pressure of a medium entering the sealed cavity, so as to open or close the valve cavity.

The two-position three-way control valve has a first input port, a second input port, and an output port, where the output port is communicated with the sealed cavity, the first input port is communicated with the primary loop coolant, and the second input port is communicated with a constant pressure source.

The two-position three-way control valve has a first state in which the output port is communicated with the first input port and disconnected from the second input port, and a second state in which the output port is communicated with the second input port and disconnected from the first input port, and the two-position three-way control valve is switchable between the first and second states to change the medium entering the sealed cavity and a pressure thereof. A pressure setting value P₀ₘₐᵢₙ at which the medium entering the sealed cavity opens the main valve satisfies: Pgmax<P₀ₘₐᵢₙ<Pacc, where Pgmax is the highest pressure of the passive water injection pipeline, and Pacc is a pressure of the constant pressure source.

The present disclosure further provides a valve set for safety of a nuclear power plant, including: a first valve part and a second valve part.

The first valve part includes a valve body portion and a valve core portion, the valve body portion has a sealed cavity and a valve cavity, the valve cavity is configured to communicate a primary loop coolant with a medium space, the valve core portion has one end in the sealed cavity and the other end in the valve cavity, and the valve core portion is slidable in the valve body portion under an action of a pressure of a medium entering the sealed cavity, so as to open or close the valve cavity and enable communication or isolation of the primary loop coolant and the medium space.

The second valve part is provided with an output end and input ends, the output end is communicated with the sealed cavity, while two or more input ends are provided. When two input ends are provided, one input end is communicated with the primary loop coolant, and the other input end is communicated with a pressure source; and when more than two input ends are provided, the input ends are communicated with the primary loop coolant, the pressure source and an atmospheric pressure source, respectively.

The second valve part can control a communication state between the output end and the input ends, so that the output end is communicated with one of the input ends.

A pressure setting value P0main at which the medium entering the sealed cavity opens the main valve satisfies: first pressure value<P0main<second pressure value, where the first pressure value is a pressure value in the medium space, and the second pressure value is a pressure value of the pressure source.

When a pressure medium output from the output end is greater than the pressure setting value, the valve cavity is opened, and when the pressure medium output from the output end is less than the pressure setting value, the valve cavity is closed.

### First Embodiment

As shown in FIG. 2, this embodiment provides a primary loop hydraulic pressure relief valve set of a nuclear power plant, including: a main valve 1-2 and a three-position four-way control valve 1-1.

The main valve 1-2 includes: a main valve body and a valve core, the main valve body has a sealed cavity 1-215 and a valve cavity, where the valve cavity is configured to communicate a primary loop coolant with atmosphere, the valve core has one end in the sealed cavity 1-215 and the other end in the valve cavity 1-24, and the valve core is slidable in the main valve body under an action of a pressure of a medium entering the sealed cavity 1-215, so as to open or close the valve cavity.

The three-position four-way control valve 1-1 has a first input port 1-17, a second input port 1-18, a third input port 1-19 and an output port 1-16, where the output port 1-16 is communicated with the sealed cavity 1-215, the first input port 1-17 is communicated with an atmospheric pressure source, the second input port 1-18 is communicated with the primary loop coolant, and the third input port 1-19 is communicated with a constant pressure source.

The three-position four-way control valve 1-1 has a first state in which the output port 1-16 is communicated with the first input port 1-17 and disconnected from both the second input port 1-18 and the third input port 1-19, a second state in which the output port 1-16 is communicated with the second input port 1-18 and disconnected from both the first input port 1-17 and the third input port 1-19, and a third state in which the output port 1-16 is communicated with the third input port 1-19 and disconnected from both the first input port 1-17 and the second input port 1-18, and the three-position four-way control valve is switchable between the first, second and third states to change the medium entering the sealed cavity 1-215 and a pressure thereof, and a pressure setting value P₀ₘₐᵢₙ at which the medium entering the sealed cavity 1-215 opens the main valve 1-2 satisfies: P0<P₀ₘₐᵢₙ<Pacc, where P0 is an atmospheric pressure, and Pacc is a pressure of the constant pressure source.

It should be noted that in a pressurized water reactor nuclear power station, as one of the most important barriers for containment of radioactive materials, the reactor coolant system is directly related to safety performance of the nuclear power plant.

The reactor coolant system of the nuclear power plant typically has a relatively high pressure during normal operation. To avoid post-accident overpressure in the system and ensure continuous post-accident cooling of the reactor core, an overpressure protection valve and a primary loop pressure relief valve are desired on the reactor coolant system. Current overpressure protection valves and pressure relief valves are generally classified into the following types:
(1) A spring safety valve, which can automatically initiate pressure relief when a system pressure reaches a setting pressure of the safety valve, and is most widely used in overpressure protection of process systems. This safety valve type is characterized in that the valve can only perform an overpressure protection function, and when the pressure is lower than the opening pressure, the valve is closed and cannot be opened manually.
(2) A pilot safety valve, which, similar to the spring safety valve, can automatically initiate pressure relief when a system pressure reaches a setting pressure of the safety valve, but is more reliable than the spring safety valve and mainly applied to pressurizer safety valves at present. This safety valve type requires less power when opened, but has the disadvantages that it has to be kept in a power-on state to be opened manually, and cannot maintain an open state at a low pressure.
(3) An electric or pneumatic isolation valve, which can control the valve to be opened or closed through a power source when a system pressure reaches a design required fixed value. The valve type is characterized in that it can be opened at any time and is kept in an original state even when powered off, but has the disadvantage that it requires a higher power to open.
(4) A squib valve, which uses a valve opening signal to trigger an explosion unit inside the valve to generate a high-pressure gas that pushes a piston in the valve to move, and a shearing cover for a valve nominal diameter can be cut off in the impact motion to communicate an inlet and an outlet of the valve, thereby implementing a safety function of system pressure relief. This valve type is characterized in that once opened, it is kept in an always open state and cannot be restored.

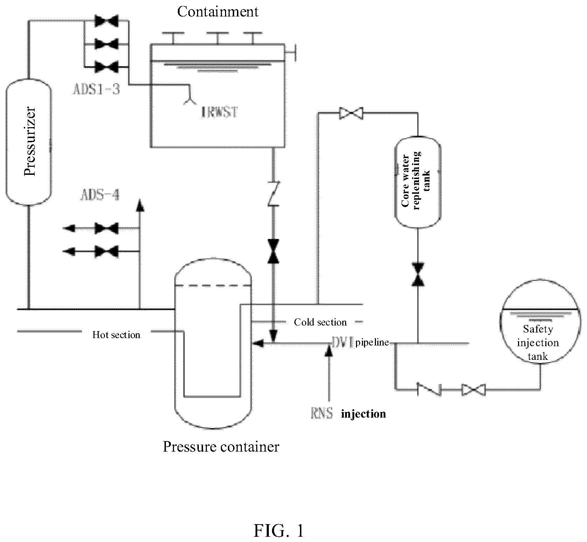

More specifically, the passive core cooling is one of the technical routes of the third generation pressurized water reactor nuclear power technology. Taking AP1000 as an example, as shown in FIG. 1, the passive core cooling system includes:
a core makeup tank: which has a pressure consistent with the primary loop (15.5MPa), and configured for a core water replenishing function under high pressure;
a accumulator: which has a pressure of about 4 to 5MPa, and configured for a water replenishing function at a pressure of 4 to 5MPa or less;
an in-containment refueling water storage tank (IRWST, a gravity water injection tank): which has a pressure consistent with the atmospheric pressure and as low as 0.1MPa, and configured for a water replenishing function when the primary loop pressure is reduced to a normal pressure; and
an automatic depressurization system (ADS) valve (squib valve): which is configured for a pressure relief function, and configured to make the primary loop pressure drop from 15.5 to a normal pressure step by step, get the above three water replenishing measures implemented in sequence, and finally realize gravity water injection by the IRWST, thereby implementing long-term cooling and ensuring long-term safety of the reactor core.

To avoid problems caused by an excessive pressure relief speed, ADS1 to ADS3 plus ADS4 are put into sequentially.

ADS1 to ADS3 each have a lower pressure relief speed and are mainly configured for a pressure relief function under high pressure.

ADS4 has a higher pressure relief speed, and can be opened only when the primary loop pressure is lower than a certain threshold (about 8 to 9MPa).

When ADS4 is turned on, the primary loop pressure will quickly drop to a pressure input by a accumulator, and eventually to an IRWST injection pressure.

The existing ADS mainly adopts a squib valve or an electric valve, each of which outputs an electric signal to trigger the valve to open when the primary loop pressure is detected to drop to a threshold. The electric valve brings a lot of difficulties to the design of a pressure relief system due to a large volume, a large amount of energy required for opening, and the like. The squib valve has the advantages of good sealing performance and low opening power, but still has certain problems in the aspects of data reliability, intellectual property rights, and the like.

The Hualong PWR adopts the design idea of a passive safety system, in which a passive safety system is used to deal with design-basis accidents. With such a design idea, a mature and reliable primary loop pressure relief system is needed to timely and effectively reduce the primary loop pressure to a gravity water injection pressure. Therefore, a new valve design scheme is urgently needed to satisfy the requirements of the primary loop pressure relief function and application scenes of the Hualong PWR.

Aiming at the problems with the ADS valve in the passive core cooling system, the pressure relief valve set in the first embodiment of the present disclosure is mainly used for replacing the function of ADS-4, which can be opened manually when the primary loop pressure is reduced to 8 to 9MPa at a high speed with no or little power supply (where the power may be supplied by a battery to increase the reliability when a power source is lost).

In the first embodiment of the present disclosure, the three-position four-way control valve 1-1 and the main valve 1-2 are combined to form a primary loop hydraulic pressure relief valve set of a nuclear power plant, where the main valve body of the main valve 1-2 has a sealed cavity 1-215 and a valve cavity 1-24, the valve core is slidably disposed in the main valve 1-2, and the valve core is slidable in the main valve body under an action of a pressure of a medium entering the sealed cavity 1-215, so as to open or close the valve cavity 1-24; the three-position four-way control valve 1-1 has a first input port 1-17 communicated with an atmospheric pressure (e.g., a primary loop volume control tank or pressure relief tank), a second input port 1-18 communicated with the primary loop coolant, a third input port 1-19 communicated with a constant pressure source, and an output port 1-16 communicated with the sealed cavity 1-215 of the main valve 1-2, and an opening setting value P₀ₘₐᵢₙ of the main valve 1-2 satisfies: atmospheric pressure<P₀ₘₐᵢₙ<Pacc, so that:

When the primary loop pressure is normal (about 15.5MPa), the three-position four-way control valve 1-1 is switched to the second state (in which the output port 1-16 of the three-position four-way control valve is communicated with the second input port 1-18), in which case the pressure in the sealed cavity 1-215 of the main valve 1-2 is the primary loop pressure, which is far greater than the opening setting value P₀ₘₐᵢₙ of the main valve 1-2, so that the main valve 1-2 is closed and isolation of the main valve 1-2 during normal operation of the primary loop is realized. When the primary loop has a fault which causes a pressure drop to below the opening setting value P₀ₘₐᵢₙ of the main valve 1-2, the main valve 1-2 is automatically opened, thereby enabling automatic opening of the main valve 1-2 when the primary loop pressure is abnormal.

When the main valve 1-2 needs to be manually opened in the case where the primary loop has a fault which causes the pressure to drop to 8 to 9MPa, the three-position four-way control valve 1-1 is switched to the first state (in which the output port 1-16 of the three-position four-way control valve is communicated with the first input port 1-17), in which case the pressure in the sealed cavity 1-215 of the main valve 1-2 is the atmospheric pressure, which is less than the opening setting value P₀ₘₐᵢₙ of the main valve 1-2, so that the main valve 1-2 is opened.

When the main valve 1-2 is not expected to be opened during shutdown refueling (while the primary loop pressure is desired to be reduced to a normal pressure), if the primary loop pressure Prcs is reduced to be between P₀ₘₐᵢₙ and Pacc, the three-position four-way control valve 1-1 is switched to the third state (in which the output port 1-16 of the three-position four-way control valve is communicated with the third input port 1-19), in which case the pressure in the sealed cavity 1-215 of the main valve 1-2 is a constant pressure source pressure (e.g., about 4 to 5MPa for a accumulator), which is greater than the opening setting value P₀ₘₐᵢₙ of the main valve 1-2, so that the main valve 1-2 is closed and isolation of the main valve 1-2 under a low primary loop pressure is realized.

Further, a comparison of advantages and disadvantages of the hydraulic pressure relief valve set according to the first embodiment of the present disclosure and several types of overpressure protection valves and relief valves commonly used in the nuclear power safety field mentioned in the background art is shown in table 1.

**Table 1**

| | Disadvantages | Advantages of the present scheme |
|---|---|---|
| Spring safety valve | The valve can only perform an overpressure protection function, and when the pressure is lower than the opening pressure, the valve is closed and cannot be opened manually. | A pressure of a top piston of the main valve is controlled by a three-position four-way valve, so that the valve can be manually opened and closed at any pressure. |
| Pilot safety valve | The valve can only maintain an open state in an always power-on state. | A pressure of a top piston of the main valve is controlled by a three-position four-way valve, so that the valve can be manually opened and closed; |
| | | no external power source is needed to maintain the state of the valve; |
| | | the valve is kept in an open state under low pressure by means of energy storage of an inherent spring. |
| Electric or pneumatic isolation valve | High-power power source support is required; | The valve can be opened or closed by a low-voltage and low-power power source through a three-position four-way valve controlling a main valve piston pressure; |
| | a relatively high power is required to open the valve; | |
| | the opening speed is low; and | |
| | the valve cannot be automatically opened. | |
| | | the open or closed state can be maintained without any power source support; |
| | | a relatively low power is required; and |
| | | the opening speed is high. |
| Squib valve | Once opened, the valve is kept in an always open state and cannot be restored. | After being opened, the valve can still apply a pressure to the top piston to close the valve. |

In this embodiment, the three-position four-way control valve 1-1 includes a control valve body 1-110, a control piston assembly, a first solenoid valve 1-13, and a second solenoid valve 1-14.

The control valve body 1-110 has a main chamber 1-15, a first side chamber 1-11, and a second side chamber 1-12, where the first side chamber 1-11 and the second side chamber 1-12 are disposed at two ends of the main chamber 1-15, respectively, the control piston assembly is disposed in the main chamber 1-15, the first solenoid valve 1-13 is disposed in the first side chamber 1-11, and the second solenoid valve 1-14 is disposed in the second side chamber 1-12.

The first input port 1-17, the second input port 1-18, the third input port 1-19 and the output port 1-16 are all disposed on the control valve body 1-110 and communicated with the main chamber 1-15, the control piston assembly includes a control piston rod 1-112 and a plurality of control pistons 1-111 fixed on the control piston rod 1-112, where the plurality of control pistons 1-111 are sequentially and sealedly arranged in the main chamber 1-15 in an axial direction of the control piston rod 1-112 in a slidable manner to divide the main chamber 1-15 into a plurality of sub-chambers, while two ends of the control piston rod 1-112 both extend out of the main chamber 1-15, with one end connected to the first solenoid valve 1-13 and the other end connected to the second solenoid valve 1-14.

The output port 1-16 is located on one side of a radial direction of the control piston rod 1-112, while the first input port 1-17, the second input port 1-18 and the third input port 1-19 are all located on the other side of the radial direction of the control piston rod 1-112 and sequentially arranged in the axial direction of the piston rod, so that when the first solenoid valve 1-13 is powered on, the control piston assembly is driven toward the second solenoid valve 1-14 to communicate the output port 1-16 with only the third input port 1-19 through one of the sub-chambers to enable the third state of the three-position four-way control valve 1-1; when the second solenoid valve 1-14 is powered on, the control piston assembly is driven toward the first solenoid valve 1-13 to communicate the output port 1-16 with only the first input port 1-17 through one of the sub-chambers to enable the first state of the three-position four-way control valve 1-1; and when the first solenoid valve 1-13 and the second solenoid valve 1-14 are both powered off, the control piston assembly is moved axially to communicate the output port 1-16 with only the second input port 1-18 through one of the sub-chambers to enable the second state of the three-position four-way control valve 1-1.

In this embodiment, five control pistons 1-111 are provided and configured to divide the main chamber 1-15 into a first sub-chamber, a second sub-chamber, a third sub-chamber, a fourth sub-chamber, a fifth sub-chamber and a sixth sub-chamber in sequence.

When the three-position four-way control valve 1-1 is in the first state, the output port 1-16 is communicated with only the first input port 1-17 through the third sub-chamber. Further, only the second input port 1-18 is located in the fourth sub-chamber, and only the third input port 1-19 is located in the fifth sub-chamber, so as to avoid an axial force on the piston rod (i.e., the control piston rod 1-112) brought by a pressure difference of different input ports.

When the three-position four-way control valve 1-1 is in the third state, the output port 1-16 is communicated with only the third input port 1-19 through the fourth sub-chamber. Further, only the first input port 1-17 is located in the first sub-chamber, and only the second input port 1-18 is located in the fourth sub-chamber, so as to avoid an axial force on the piston rod 1-112 brought by a pressure difference of different input ports.

When the three-position four-way control valve 1-1 is in the second state, the output port 1-16 is communicated with only the second input port 1-18 through the third sub-chamber. Further, only the first input port 1-17 is located in the second sub-chamber, and only the third input port 1-19 is located in the fourth sub-chamber, so as to avoid an axial force on the piston rod 1-112 brought by a pressure difference of different input ports.

In this embodiment, the first solenoid valve 1-13 includes a first sucker 1-114, a first coil 1-113, and a first return spring 1-115, and the second solenoid valve 1-14 includes a second sucker 1-117, a second coil 1-116 and a second return spring 1-118. The first coil 1-113 and the second coil 1-116 are respectively disposed on outer end walls at two ends of the main chamber 1-15 in the axial direction of the control piston rod 1-112, and the first sucker 1-114 and the second sucker 1-117 are respectively disposed at two ends of the control piston rod 1-112, the first return spring 1-115 is connected between a chamber wall of the first side chamber 1-11 and the first sucker 1-114, and the second return spring 1-118 is connected between a chamber wall of the second side chamber 1-12 and the second sucker 1-117.

When the first solenoid valve 1-13 is powered on, the first sucker 1-114 is moved toward the first coil 1-113 to be fixedly connected to the first coil, so as to drive the control piston assembly to move toward the second solenoid valve 1-14 to enable the third state of the three-position four-way control valve 1-1, and during the movement of the control piston assembly toward the second solenoid valve 1-14, the first return spring 1-115 is stretched and the second return spring 1-118 is compressed.

When the second solenoid valve 1-14 is powered on, the second sucker 1-117 is moved toward the second coil 1-116 to be fixedly connected to the second coil, so as to drive the control piston assembly to move toward the first solenoid valve 1-13 to enable the first state of the three-position four-way control valve 1-1, and during the movement of the control piston assembly toward the first solenoid valve 1-13, the second return spring 1-118 is stretched and the first return spring 1-115 is compressed.

When the first solenoid valve 1-13 and the second solenoid valve 1-14 are both powered off, all suckers and coils of the solenoid valves are disconnected, and the first return spring 1-115 and the second return spring 1-118 are both reset to drive the control piston assembly to move axially to enable the second state of the three-position four-way control valve 1-1.

In this embodiment, a plurality of three-position four-way control valves 1-1 are provided and arranged in parallel.

In this embodiment, a plurality of first solenoid valves 1-13 and a plurality of second solenoid valves 1-14 are provided, the plurality of first solenoid valves 1-13 are arranged in series, and the plurality of second solenoid valves 1-14 are also arranged in series.

In this embodiment, the valve core includes a main piston assembly and a main spring 1-26, where the main piston assembly includes a main piston rod, a main piston 1-25 and a valve disc 1-28, the main piston rod is slidably disposed in the main valve body, the main piston 1-25 is fixed on the main piston rod and located in the sealed cavity 1-215, the valve disc 1-28 is fixed on the main piston rod and located in the valve cavity 1-24, and the main spring 1-26 is located in the sealed cavity 1-215 and compressed between the main piston 1-25 and a bottom wall of the valve cavity 1-24.

In the first embodiment of the present disclosure, the main valve 1-2 is a main flow path for a fluid during pressure relief of the primary loop, and a high-temperature and high-pressure fluid is born inside the valve. Therefore, to avoid influences of the high-temperature fluid in the primary loop, vibration on the valve control and the driving system, a combination of driving piston plus driving spring is used in the first embodiment of the present disclosure as an energy source for opening and closing of the main valve 1-2. The main valve 1-2 is connected to the three-position four-way control valve 1-1 through a pilot pipeline, and configured to control a pressure in the sealed cavity 1-215 and thus opening and closing of the main valve 1-2.

In this embodiment, the valve cavity 1-24 is located below the sealed cavity 1-215, the main valve body is provided with a valve inlet 1-29 and a valve outlet 1-211 each communicated with the valve cavity, the valve inlet 1-29 is provided at a bottom of the main valve body and configured to be communicated with the primary loop coolant, the valve outlet 1-211 is provided on a side surface of the main valve body and configured to be communicated with atmosphere, and the main piston assembly is vertically and slidably disposed in the main valve body to open or close the valve inlet 1-29.

The pressure setting value P₀ₘₐᵢₙ at which the medium entering the sealed cavity 1-215 opens the main valve 1-2 further satisfies: P₀ₘₐᵢₙ×(A1-A2) +G=F, where A1 is a cross sectional area of the main piston 1-25, A2 is a cross sectional area of the valve disc 1-28, G is a gravity of the main piston assembly, and F is a spring force of the main spring when the main valve 1-2 is closed.

In the first embodiment of the present disclosure, the opening and closing of the main valve, and maintenance of the sealing performance of the pressure relief valve set, depend on a combined action of the driving spring, a pressure of the driving piston and a pressure of a system, which is specifically explained below:
The driving piston has an area larger than the valve disc, and when sealed chamber pressure × driving piston area + piston assembly gravity>driving spring pressure + valve inlet pressure × valve disc area, the valve is in a closed state, and sealing of the valve is kept by a pressure difference before and after the inequality.

When sealed chamber pressure × driving piston area + piston assembly gravity<driving spring pressure + valve inlet pressure × valve disc area, the valve is opened under an action of the pressure of the driving spring and an internal pressure of the system, and kept in an always open state by the pressure of the driving spring.

As shown in FIG. 3, in this embodiment, the main spring 1-26 is disposed around the main piston rod to provide power for driving the piston to move up and down.

In this embodiment, an outer diameter of the valve disc 1-28 is gradually reduced from top to bottom so that an outer wall of the valve disc 1-28 forms a first conical surface.

A nozzle 1-210 is installed at the valve inlet 1-29, where a second conical surface matched with the first conical surface is provided at an upper part of an inner wall of the nozzle 1-210, and when the main piston assembly is moved downward to make the first conical surface matched with the second conical surface, the valve disc 1-28 closes the valve inlet 1-29.

Contact surfaces of the valve disc and the nozzle is inclined, and when the valve is closed, the nozzle and the valve disc can be tightly matched under an action of a pressure difference, so as to enable better sealing and prevent leakage of the coolant.

In this embodiment, the main valve body includes a valve housing 1-21, a valve seat 1-22 and a valve core 1-23 which are fixedly connected in sequence from bottom to top, and an inner cavity of the valve housing 1-21 forms the valve cavity 1-24.

A first groove is provided in a top surface of the valve seat 1-22, a lower part of the valve core 1-23 extends into the first groove to be sealedly connected to a groove wall of the first groove, a second groove is provided in a bottom surface of the valve core 1-23, and a groove wall of the second groove encloses the sealed cavity 1-215 with a bottom wall of the first groove.

In this embodiment, a conduit 1-214 is fixed inside the valve core 1-23, and has one end extending into the sealed cavity 1-215, and the other end extending out of the valve core 1-23 to be communicated with the output port 1-16 of the three-position four-way control valve 1-1.

In this embodiment, the main piston rod includes a working section 1-27 and a positioning section 1-213, where the working section 1-27 has a lower end fixedly connected to the valve disc 1-28, and an upper end passing through the valve seat 1-22 into the sealed cavity 1-215 and fixedly connected to the main piston 1-25, and the main spring 1-26 is disposed around the working section 1-27.

A sealed exhaust cavity 1-212 is provided at an upper part of the valve core 1-23, a top of the valve core 1-23 is provided with a valve cover 1-216 for opening or closing the exhaust cavity 1-212, and the positioning section 1-213 has a lower end fixedly connected to a piston, and an upper end passing through the valve core 1-23 into the exhaust cavity 1-212.

The hydraulic pressure relief valve set in the first embodiment of the present disclosure is configured for rapid pressure relief of a primary loop, and implements functions are as follows:

By controlling the first solenoid valve 1-13 and the second solenoid valve 1-14, control of an output pressure of the three-position four-way control valve 1-1, and thus opening and closing control of the main valve 1-2, are realized.

It is assumed that the primary loop pressure is Prcs, where Prcs = 15.5MPa during normal operation of the nuclear power plant, and may be gradually reduced to 0.1MPa during normal shutdown, refueling, overhaul, or other conditions of the nuclear power plant, a constant pressure source accumulator has a pressure Pacc, which is typically about 4 to 5MPa, and the pressure relief tank or volume control tank has a pressure P0, which is typically 0.1MPa.

When the first solenoid valve 1-13 and the second solenoid valve 1-14 are respectively powered on and off, piston pressures of the main valve 1-2 and functions implemented by the main valve 1-2 are shown in table 2 below.

**Table 2**

| State of solenoid valve | | Pressure of main valve sealed cavity 1-215 | Function implemented by main valve |
|---|---|---|---|
| First solenoid valve | Second solenoid valve | | |
| On | Off | Pacc | Isolation at low pressure when Prcs<Pacc |
| Off | Off | Prcs | Isolation at high pressure when Prcs>P0main |
| | | | Automatic opening when Prcs<P0main |
| Off | On | P0 | Manual opening |

Description of functions implemented by the main valve 1-2:

Automatic opening: when the first solenoid valve 1-13 and the second solenoid valve 1-14 are both powered off, the primary loop pressure is reduced from 15.5MPa to below an opening pressure of the main valve 1-2 under an accident, and the main valve 1-2 is automatically opened.

Manual opening: in the nuclear power plant, an operator is required to open the pressure relief valve manually in some cases, in which case the first solenoid valve 1-13 is powered off and the second solenoid valve 1-14 is powered on, resulting in a main valve 1-2 piston pressure = P0, so that the main valve 1-2 is opened under an action of the driving spring and the primary loop pressure, and can be kept in an always open state.

Isolation under high pressure: in normal operation of the nuclear power plant, the primary loop pressure is 15.5MPa, and during shutdown refueling, the primary loop pressure is reduced from 15.5MPa to P₀ₘₐᵢₙ, until to the atmospheric pressure. Therefore, during normal operation and shutdown refueling, when the primary loop pressure Pres>P₀ₘₐᵢₙ, the main valve 1 is not expected to be opened, and the pressure relief valve is desired to be isolated. In this case, since the first solenoid valve 1-13 and the second solenoid valve 1-14 are both powered off, the main valve piston pressure = Prcs, and since the main valve piston area is greater than the valve disc area, the main valve is kept in a closed state when Prcs is greater than a certain pressure (P₀ₘₐᵢₙ, which is related to the main valve piston area and a driving force of the driving spring).

Isolation at low pressure: when the primary loop pressure Prcs<Pacc and is further reduced to P0main, the valve is switched to a low pressure isolation state, where the first solenoid valve is powered on and the main valve piston pressure = Pacc. Since Pacc is constant at 4 to 5MPa, the main valve can be ensured to be kept in an always closed state.

**In** summary, it can be seen that the pressure relief valve set in this embodiment is a valve set for safety of a nuclear power plant mainly configured for pressure relief of a primary loop, which can be automatically opened when the primary loop pressure satisfies a condition and maintain an open state, and effectively isolated during normal operation and shutdown refueling. In addition, this pressure relief valve set can also enable manual opening of the main valve.

While satisfying the requirements on primary loop pressure relief of the Hualong PWR, a pressure relief valve set of such design has the following technical advantages:
1) Manual opening is enabled: manual opening of the valve in any state can be implemented by simply powering on a solenoid valve.
2) Effective isolation is guaranteed: effective isolation of the valve can be guaranteed in various operating states of a power plant.
3) An always open state is kept: after being opened, the valve can be kept in an always open state without any power source, which ensures long-term pressure relief and long-term recirculation of the primary loop.
4) High reliability is achieved: the single failure criteria (N-1 criterion) of the system is satisfied by combining the solenoid valves arranged in parallel and in series, which provides a redundant means for opening and closing the valve, so that the valve can be reliably opened and closed in any state, and the false triggering probability is low.
5) A low leakage rate is achieved: in normal operation, sealing is implemented by a pressure applied to the main valve piston by the primary loop itself.

### Second Embodiment

As shown in FIG. 4, this embodiment provides a valve set for primary loop pressure relief and discharge, including: a main valve 2-2 and a control valve assembly. The main valve 2-2 includes: a main valve body and a main valve core, the main valve body has a main sealed cavity 2-215 and a main valve cavity 2-24, the main valve cavity 2-24 is configured to communicate a primary loop coolant with atmosphere, the main valve core has one end in the main sealed cavity 2-215 and the other end in the main valve cavity 2-24, and the main valve core is slidable in the main valve body under an action of a pressure of a medium entering the main sealed cavity 2-215, so as to open or close the main valve cavity 2-24.

The control valve assembly includes a pilot valve 2-1, a first control valve 2-3 and a second control valve 2-4.

The pilot valve 2-1 includes a pilot valve body and a pilot valve core, where the pilot valve body is provided with a first sealed cavity 2-17, a first channel, a second channel and a second sealed cavity 2-112 arranged in sequence, the pilot valve core includes a driving structure and a valve core structure, the driving structure has one end in the first sealed cavity 2-17 and the other end in the second sealed cavity 2-112, the valve core structure is connected to the driving structure and has one end in the first channel and the other end in the second channel, the driving structure is slidable in the pilot valve body under an action of a pressure difference of a medium entering the first sealed cavity 2-17 and a medium entering the second sealed cavity 2-112, so as to drive the valve core structure to open the first channel and close the second channel, or close the first channel and open the second channel, and outlets of the first channel and the second channel are both communicated with the main sealed cavity 2-215.

The first control valve 2-3 has a first input port 2-313, a second input port 2-314, and a first output port 2-315, where the first output port 2-315 is communicated with the first sealed cavity 2-17, the first input port 2-313 is communicated with a primary loop volume control tank or pressure relief tank, and the second input port 2-314 is communicated with a constant pressure source.

The second control valve 2-4 has a third input port 2-413, a fourth input port 2-414, and a second output port 2-415, wherein the second output port 2-415 is respectively communicated with an inlet of the first channel and the second sealed cavity 2-112, the third input port 2-413 is communicated with a constant pressure source, and the fourth input port 2-414 is communicated with the primary loop coolant.

The first control valve 2-3 has a first power-on state in which the first output port 2-315 is communicated with the first input port 2-313 and disconnected from the second input port 2-314, and a first power-off state in which the first output port 2-315 is communicated with the second input port 2-314 and disconnected from the first input port 2-313, and the first control valve 2-3 is switchable between the first power-on state and the first power-off state to change the medium entering the first sealed cavity 2-17 and a pressure thereof.

The second control valve 2-4 has a second power-on state in which the second output port 2-415 is communicated with the third input port 2-413 and disconnected from the fourth input port 2-414, and a second power-off state in which the second output port 2-415 is communicated with the fourth input port 2-414 and disconnected from the third input port 2-413, and the second control valve 2-4 is switchable between the second power-on state and the second power-off state to change the medium entering the second sealed cavity 2-112 and a pressure thereof.

A pressure setting value P₀ₘₐᵢₙ at which the medium entering the main sealed cavity 2-215 opens the main valve 2-2 satisfies: P0<P₀ₘₐᵢₙ<Pacc, where P0 is an atmospheric pressure, and Pacc is a pressure of the constant pressure source.

A pressure setting value P_{0twin} at which the medium entering the second sealed cavity 2-112 opening the pilot valve 2-1 satisfies: Pacc×A₁=P_{0twin}×A₂, where Pacc is a pressure of the constant pressure source, A₁ is a cross sectional area of a first pilot piston 2-15, A₂ is a cross sectional area of a second pilot piston 2-110, and A₂<A₁.

It should be noted that in a pressurized water reactor nuclear power station, as one of the most important barriers for containment of radioactive materials, the reactor coolant system is directly related to safety performance of the nuclear power plant.

The reactor coolant system of the nuclear power plant typically has a relatively high pressure during normal operation. To avoid post-accident overpressure in the system and ensure continuous post-accident cooling of the reactor core, an overpressure protection valve and a primary loop pressure relief valve are desired on the reactor coolant system. Current overpressure protection valves and pressure relief valves are generally classified into the following types:
(1) A spring safety valve, which can automatically initiate pressure relief when a system pressure reaches a setting pressure of the safety valve, and is most widely used in overpressure protection of process systems. This safety valve type is characterized in that the valve can only perform an overpressure protection function, and when the pressure is lower than the opening pressure, the valve is closed and cannot be opened manually.
(2) A pilot safety valve, which, similar to the spring safety valve, can automatically initiate pressure relief when a system pressure reaches a setting pressure of the safety valve, but is more reliable than the spring safety valve and mainly applied to pressurizer safety valves at present. This safety valve type requires less power when opened, but has the disadvantages that it has to be kept in a power-on state to be opened manually, and cannot be kept in an open state at a low pressure.
(3) An electric or pneumatic isolation valve, which can control the valve to be opened or closed through a power source when a system pressure reaches a design required fixed value. The valve type is characterized in that it can be opened at any time and is kept in an original state even when powered off, but has the disadvantage that it requires a higher power (electric power or pneumatic power) to open.
(4) A squib valve, which uses a valve opening signal to trigger an explosion unit inside the valve to generate a high-pressure gas that pushes a piston in the valve to move, and a shearing cover for a valve nominal diameter can be cut off in the impact motion to communicate an inlet and an outlet of the valve, thereby implementing a safety function of system pressure relief. This valve type is characterized in that once opened, it is kept in an always open state and cannot be restored.

More specifically, the passive core cooling is one of the technical routes of the third generation pressurized water reactor nuclear power technology. Taking AP1000 as an example, as shown in FIG. 1, the passive core cooling system includes:
a core makeup tank: which has a pressure consistent with the primary loop (15.5MPa), and configured for a core water replenishing function under high pressure;
a accumulator: which has a pressure of about 4 to 5MPa, and configured for a water replenishing function at a pressure of 4 to 5MPa or less;
an in-containment refueling water storage tank (IRWST, a gravity water injection tank): which has a pressure consistent with the atmospheric pressure and as low as 0.1MPa, and configured for a water replenishing function when the primary loop pressure is reduced to a normal pressure; and
an automatic depressurization system (ADS) valve (squib valve): which is configured for a pressure relief function, and configured to make the primary loop pressure drop from 15.5 to a normal pressure step by step, get the above three water replenishing measures implemented in sequence, and finally realize gravity water injection by the IRWST, thereby implementing long-term cooling and ensuring long-term safety of the reactor core.

To avoid problems caused by an excessive pressure relief speed, ADS1 to ADS3 plus ADS4 are put into sequentially.

ADS1 to ADS3 each have a lower pressure relief speed and are mainly configured for a pressure relief function under high pressure.

ADS4 has a higher pressure relief speed, and to avoid impact caused by an excessive pressure relief speed, ADS4 can be opened only when the primary loop pressure is lower than a certain threshold (about 8 to 9MPa).

When ADS4 is turned on, the primary loop pressure will quickly drop to a pressure input by a accumulator, and eventually to an IRWST injection pressure.

The existing ADS mainly adopts a squib valve or an electric valve, each of which outputs an electric signal to trigger the valve to open when the primary loop pressure is detected to drop to a threshold. The electric valve brings a lot of difficulties to the design of a pressure relief system due to a large volume, a large amount of energy required for opening, and the like. The squib valve has the advantages of good sealing performance and low opening power, but still has certain difficulties in the aspects of data reliability, intellectual property rights, and the like.

The Hualong PWR adopts the design idea of a passive safety system, in which a passive safety system is used to deal with design-basis accidents. With such a design idea, a mature and reliable primary loop pressure relief system is needed to timely and effectively reduce the primary loop pressure to a gravity water injection pressure. Therefore, a new valve design scheme, except the squib valve and the electric valve, is urgently needed to satisfy the requirements of the primary loop pressure relief function and application scenes of the Hualong PWR.

Aiming at the problems with the ADS valve in the existing passive core cooling system, the pressure relief valve set in the second embodiment of the present disclosure is mainly used for replacing the function of ADS-4, which can be opened automatically when the primary loop pressure is reduced to 8 to 9MPa at a high speed with no or little power supply (where the power may be supplied by a battery to increase the reliability when a power source is lost).

In the second embodiment of the present disclosure, a main valve 2-2, a pilot valve 2-1 and two control valves are combined to form a valve set for primary loop pressure relief and discharge, where the main valve body of the main valve 2-2 has a sealed cavity 2-215 and a valve cavity 2-24, the valve core is slidably disposed in the main valve body, and the valve core is slidable in the main valve body under an action of a pressure of a medium entering the sealed cavity 2-215, so as to open or close the valve cavity 2-24; the pilot valve body of the pilot valve 2-1 is provided with a first sealed cavity 2-17, a first channel, a second channel and a second sealed cavity 2-112 arranged in sequence, the pilot valve core is slidably disposed in the pilot valve body and can open the first channel and close the second channel, or close the first channel and open the second channel, under an action of a pressure difference between the medium entering the first sealed cavity 2-17 and the medium entering the second sealed cavity 2-112, outlets of the first channel and the second channel are both communicated with the main sealed cavity 2-215. the first output port 2-315 of the first control valve 2-3 is communicated with the first sealed cavity 2-17, the first input port 2-313 is communicated with a primary loop volume control tank or pressure relief tank (the atmospheric pressure P0), and the second input port 2-314 is communicated with a constant pressure source accumulator (at a pressure of about 4 to 5MPa), the second output port 2-415 of the second control valve 2-4 is respectively communicated with an inlet of the first channel and the second sealed cavity 2-112, the third input port 2-413 is communicated with a constant pressure source accumulator (at a pressure of about 4 to 5MPa), and the fourth input port 2-414 is communicated with the primary loop coolant (typically at a pressure of 15.5MPa, which needs to be reduced to the normal pressure P0 in a fault or shutdown refueling); an opening setting value P₀ₘₐᵢₙ of the main valve satisfies: P0<P₀ₘₐᵢₙ<Pacc, and an opening setting value P_{0twin} of the pilot valve satisfies: Pacc×A1=P_{0twin}×A2, so that:

When the valve set is in a standby state (the first control valve 2-3 and the second control valve 2-4 are both powered off), when the primary loop pressure is normal (about 15.5MPa), the pressure in the first sealed cavity 2-17 of the pilot valve 2-1 is a constant pressure source accumulator pressure (about 4 to 5MPa), while the pressure in the second sealed cavity 2-112 is the primary loop pressure, so that the pilot valve core is moved upward to open the first channel, and the pressure source entering the main sealed cavity 2-215 of the main valve 2-2 is the primary loop, which is far greater than the opening setting value P₀ₘₐᵢₙ of the main valve 2-2, so that the main valve 2-2 is closed and isolation of the main valve 2-2 during normal operation of the primary loop is realized. When the primary loop has a fault which causes a pressure drop to below the pressure setting value P₀ₘₐᵢₙ of the pilot valve 2-1, the pilot valve core is moved downward to open the second channel, so that the pressure source entering the main sealed cavity 2-215 of the main valve 2-2 is a primary loop volume control tank or pressure relief tank (at an atmospheric pressure P0), which is less than the opening setting value P₀ₘₐᵢₙ of the main valve 2-2, so that the main valve 2-2 is automatically opened, thereby enabling automatic opening of the main valve 2-2 when the primary loop pressure is abnormal (P_{rcs}<P_{0twin}). Such an opening process does not need any additional energy input (because the first control valve 2-3 and the second control valve 2-4 are both powered off, and the main valve 2-2 will be automatically opened as long as the primary loop pressure satisfies the condition).

When the main valve 2-2 needs to be manually opened in some cases, the first solenoid valve 2-3 is powered off while the second solenoid valve 2-4 is powered on, so that the pressure in the first sealed cavity 2-17 of the pilot valve 2-1 is a constant pressure source accumulator pressure (about 4 to 5MPa), while the pressure in the second sealed cavity 2-112 is also a constant pressure source accumulator pressure (about 4 to 5MPa). Since the pressure setting value P_{0twin} at which the medium entering the second sealed cavity 2-112 opening the pilot valve 2-1 is greater than the a pressure Pacc of the constant pressure source accumulator, the pilot valve core is depressed and the second channel is opened, so that the pressure source entering the main sealed cavity 2-215 of the main valve 2-2 is a primary loop volume control tank or pressure relief tank (at an atmospheric pressure P0), which is less than the opening setting value P₀ₘₐᵢₙ of the main valve 2-2, so that the main valve 2-2 is opened.

When the main valve 2-2 is not expected to be opened during shutdown refueling (where the primary loop pressure is desired to be reduced to a normal pressure), firstly the first solenoid valve 2-3 is powered on and the second solenoid valve 2-4 is powered off, in which case a primary loop volume control tank or pressure relief tank (at an atmospheric pressure P0) is in the first sealed cavity 2-17 of the pilot valve 2-1, and the pressure in the second sealed cavity 2-112 is the primary loop pressure, so that the primary loop pressure is reduced to the pressure setting value P₀ₘₐᵢₙ or less of the pilot valve 2-1 (while in the standby state, the main valve 2-2 is opened when the primary loop pressure is reduced to the pressure setting value P₀ₘₐᵢₙ of the pilot valve 2-1). Before the opening setting value P₀ₘₐᵢₙ of the main valve 2-2, the pilot valve 2-1 keeps moving upward to open the first channel, and the pressure source entering the main sealed cavity 2-215 of the main valve 2-2 is the primary loop. At this stage, the main valve 2-2 is kept in a closed state, thereby enabling high pressure isolation of this valve set during shutdown refueling. If the primary loop pressure is further reduced, the main valve 2-2 will be opened, so that before the primary loop pressure is reduced to the opening setting value P₀ₘₐᵢₙ of the main valve 2-2, the first solenoid valve 2-3 and the second solenoid valve 2-4 are both powered on, in which case a primary loop volume control tank or pressure relief tank pressure (an atmospheric pressure P0) is in the first sealed cavity 2-17 of the pilot valve 2-1, and the pressure in the second sealed cavity 2-112 is a constant pressure source accumulator pressure, the pilot valve 2-1 is moved upward to open the first channel, and the pressure source entering the main sealed cavity 2-215 of the main valve 2-2 is a constant pressure source accumulator pressure, which is greater than the opening setting value P₀ₘₐᵢₙ of the main valve 2-2, so that even if the primary loop pressure is reduced to below the opening setting value P₀ₘₐᵢₙ of the main valve 2-2, the main valve 2-2 is still kept in a closed state, thereby enabling low pressure isolation of this valve set during shutdown refueling.

Further, a comparison of advantages and disadvantages of the pressure relief valve set according to the second embodiment of the present disclosure and several types of overpressure protection valves and relief valves commonly used in the nuclear power safety field mentioned in the background art is shown in table 1.

**Table 1**

| | Disadvantages | Advantages of the present scheme |
|---|---|---|
| Spring safety valve | The valve can only perform an overpressure protection function, and when the pressure is lower than the opening pressure, the valve is closed and cannot be opened manually. | A pressure of a top piston of the main valve is controlled by a pilot valve, so that the valve can be manually opened and closed at any pressure. |
| Pilot safety valve | The valve can only maintain an open state in an always power-on state. | A pressure of a top piston of the main valve is controlled by a pilot valve, so that the valve can be manually opened and closed; |
| | | no external power source is needed to maintain the state of the valve; |
| | | the valve is kept in an open state under low pressure by means of energy storage of an inherent spring. |
| Electric or pneumatic isolation valve | High-power power source or gas source support is required; | The valve can be opened or closed by a low-voltage and low-power power source through a double-piston pilot valve controlling a main valve piston pressure; |
| | a relatively high power is required to open the valve; | |
| | the opening speed is low; and | |
| | the valve cannot be automatically opened. | |
| | | the open or closed state can be maintained without any power source support; |
| | | the valve will be automatically opened when the pressure is lost; |
| | | a relatively low power is required; and |
| | | the opening speed is high. |
| Squib valve | Once opened, the valve is kept in an always open state and cannot be restored. | After being opened, the valve can still apply a pressure to the top piston to close the valve. |

In this embodiment, the first control valve 2-3 includes a first control valve body 2-31, a first control piston assembly 2-32, and a first solenoid valve 2-33.

The first control valve body 2-31 has a first main chamber 2-311 and a first side chamber 2-312, the first control piston assembly 2-32 is disposed in the first main chamber 2-311, the first solenoid valve 2-33 is disposed in the first side chamber 2-312, and the first input port 2-313, the second input port 2-314 and the first output port 2-315 are all disposed on the first control valve body 2-31 and communicated with the first main chamber 2-311, and the first control piston assembly 2-32 includes a first control piston rod 2-321 and a plurality of first control pistons 2-322 fixed on the first control piston rod 2-321, where the plurality of first control pistons 2-322 are sequentially and sealedly arranged in the first main chamber 2-311 in an axial direction of the first control piston rod 2-321 in a slidable manner to divide the first main chamber 2-311 into a plurality of first sub-chambers, and one end of the first control piston rod 2-321 extends out of the first main chamber 2-311 to be connected to the first solenoid valve 2-33.

The first output port 2-315 is located on one side of a radial direction of the first control piston rod 2-321, while the first input port 2-313 and the second input port 2-314 are both located on the other side of the radial direction of the first control piston rod 2-321. When the first solenoid valve 2-33 is powered on, the first control piston assembly 2-32 is driven by the first solenoid valve 2-33 to be moved axially to communicate the first output port 2-315 with only the first input port 2-313 through one of the first sub-chambers, while the second input port 2-314 is located in an adjacent another first sub-chamber to enable a first power-on state of the first control valve 2-3; and when the first solenoid valve 2-33 is powered off, the first control piston assembly 2-32 is driven by the first solenoid valve 2-33 to be moved axially in an opposite direction to communicate the first output port 2-315 with only the second input port 2-314 through one of the first sub-chambers, while the first input port 2-313 is located in an adjacent another first sub-chamber to enable a first power-off state of the first control valve 2-3.

The second control valve 2-4 includes a second control valve body 2-41, a second control piston assembly 2-42, and a second solenoid valve 2-43.

The second control valve body 2-41 has a second main chamber 2-411 and a second side chamber 2-412, the second control piston assembly 2-42 is disposed in the second main chamber 2-411, the second solenoid valve 2-43 is disposed in the second side chamber 2-412, the third input port 2-413, the fourth input port 2-414 and the second output port 2-415 are all disposed on the second control valve body 2-41 and communicated with the second main chamber 2-411, and the second control piston assembly 2-42 includes a second control piston assembly 2-421 and a plurality of second control pistons 2-422 fixed on the second control piston assembly 2-421, where the plurality of second control pistons 2-422 are sequentially and sealedly arranged in the second main chamber 2-411 in an axial direction of the second control piston assembly 2-421 in a slidable manner to divide the second main chamber 2-411 into a plurality of second sub-chambers, and one end of the second control piston assembly 2-421 extends out of the second main chamber 2-411 to be connected to the second solenoid valve 2-43.

The second output port 2-415 is located on one side of a radial direction of the second control piston assembly 2-421, while the third input port 2-413 and the fourth input port 2-414 are both located on the other side of the radial direction of the second control piston assembly 2-421. When the second solenoid valve 2-43 is powered on, the second control piston assembly 2-42 is driven by the second solenoid valve 2-43 to be moved axially to communicate the second output port 2-415 with only the third input port 2-413 through one of the second sub-chambers, while the fourth input port 2-414 is located in an adjacent another second sub-chamber to enable a second power-on state of the second control valve 2-4; and when the second solenoid valve 2-43 is powered off, the second control piston assembly 2-42 is driven to be moved axially in an opposite direction to communicate the second output port 2-415 with only the fourth input port 2-414 through one of the second sub-chambers, while the third input port 2-413 is located in an adjacent another second sub-chamber to enable a second power-off state of the second control valve 2-4.

### In this embodiment:

The first solenoid valve 2-33 includes a first sucker 2-331, a first coil 2-332, and a first return spring 2-333, where the first coil 2-332 is fixed on an outer end wall of the first main chamber 2-311, the first sucker 2-331 is fixed on one end of the first control piston rod 2-321 extending into the first side chamber 2-312, and the first return spring 2-333 is connected between a chamber wall of the first side chamber 2-312 and the first sucker 2-331.

When the first solenoid valve 2-33 is powered on, the first sucker 2-331 is moved toward the first coil 2-332 to be fixedly connected to the first coil, so that the first control piston assembly 2-32 is driven to be moved axially to enable the first power-on state of the first control valve 2-3, while the first return spring 2-333 is stretched; and the first solenoid valve 2-33 is powered off, the first sucker 2-331 is disconnected from the first coil 2-332, and the first return spring 2-333 is reset, so that the first control piston assembly 2-32 is driven to be moved axially to enable the first power-off state of the first control valve 2-3.

The second solenoid valve 2-43 includes a second sucker 2-431, a second coil 2-432 and a second return spring 2-433, where the second coil 2-432 is fixed on an outer end wall of the second main chamber 2-411, the second sucker 2-431 is fixed on one end of the second control piston assembly 2-421 extending into the second side chamber 2-412, and the second return spring 2-433 is connected between a chamber wall of the second side chamber 2-412 and the second sucker 2-431.

When the second solenoid valve 2-43 is powered on, the second sucker 2-431 is moved toward the second coil 2-432 to be fixedly connected to the second coil, so that the second control piston assembly 2-42 is driven to be moved axially to enable the second power-on state of the second control valve 2-4, while the second return spring 2-433 is stretched; and the second solenoid valve 2-43 is powered off, the second sucker 2-431 is disconnected from the second coil 2-432, and the second return spring 2-433 is reset, so that the second control piston assembly 2-42 is driven to be moved axially to enable the second power-off state of the second control valve 2-4.

In this embodiment, a plurality of control valve assemblies are provided, each of which has a first channel outlet and a second channel outlet both communicated with the main sealed cavity 2-215 of the main valve 2-2.

According to the requirements, the design of one main valve 2-2 matched with two control valve assemblies connected in parallel may be adopted to improve the overall reliability of the valve and prevent a valve fault caused by a fault of a single component.

In this embodiment, a plurality of first solenoid valves 2-33 are provided in the first control valve 2-3, each of which has a first sucker 2-331 fixedly connected to the first control piston rod 2-321.

A plurality of second solenoid valves 2-43 are provided in the second control valve 2-4, each of which has a second sucker 2-431 fixedly connected to the second control piston assembly 2-421.

In other words, a plurality of solenoid valves connected in series may be provided on each control valve according to requirements, so as to prevent a control valve fault caused by a fault of a single solenoid valve or a power supply fault.

As shown in FIG. 5, in this embodiment, the main valve core includes a main piston assembly and a main spring 2-26, where the main piston assembly includes a main piston rod, a main piston 2-25 and a valve disc 2-28, the main piston rod is slidably disposed in the main valve body, the main piston 2-25 is fixed on the main piston rod and located in the main sealed cavity 2-215, the valve disc 2-28 is fixed on the main piston rod and located in the main valve cavity 2-24, and the main spring 2-26 is located in the main sealed cavity 2-215 and compressed between the main piston 2-25 and a bottom wall of the main valve cavity 2-24.

In the second embodiment of the present disclosure, the main valve 2-2 is a main flow path for a fluid during pressure relief of the primary loop, and a high-temperature and high-pressure fluid is born inside the valve. Therefore, to avoid influences of the high-temperature fluid in the primary loop, vibration on the valve control and the driving system, a combination of driving piston plus driving spring is used in the second embodiment of the present disclosure as an energy source for opening and closing of the main valve 2-2. The main valve 2-2 is connected to the pilot valve 2-1 through a pilot pipeline, and configured to control a pressure in the sealed cavity 2-215 and thus opening and closing of the main valve 2-2.

### In this embodiment:

The main valve cavity 2-24 is located below the main sealed cavity 2-215, the main valve body is provided with a valve inlet 2-29 and a valve outlet 2-211 each communicated with the main valve cavity, the valve inlet 2-29 is provided at a bottom of the main valve body and configured to be communicated with the primary loop coolant, the valve outlet 2-211 is provided on a side surface of the main valve body and configured to be communicated with atmosphere, and the main piston assembly is vertically and slidably disposed in the main valve body.

The pressure setting value P₀ₘₐᵢₙ at which the medium entering the main sealed cavity 2-215 opens the main valve 2-2 further satisfies: P₀ₘₐᵢₙ×(A1-A2) +G=F, where A1 is a cross sectional area of the main piston 2-25, A2 is a cross sectional area of the valve disc 2-28, G is a gravity of the main piston assembly, and F is a spring force of the main spring when the main valve 2-2 is closed.

In the pressure relief valve set of second embodiment of the present disclosure, the opening and closing of the main valve, and maintenance of the sealing performance, depend on a combined action of the driving spring, a pressure of the driving piston and a pressure of a system, which is specifically explained below:

The driving piston has an area larger than the valve disc, and when sealed chamber pressure × driving piston area + piston assembly gravity>driving spring pressure + valve inlet pressure × valve disc area, the valve is in a closed state, and sealing of the valve is kept by a pressure difference before and after the inequality.

When sealed chamber pressure × driving piston area + piston assembly gravity<driving spring pressure + valve inlet pressure × valve disc area, the valve is opened under an action of the pressure of the driving spring and an internal pressure of the system, and kept in an always open state by the pressure of the driving spring.

### In this embodiment,

An outer diameter of the valve disc 2-28 is gradually reduced from top to bottom so that an outer wall of the valve disc 2-28 forms a first conical surface.

A nozzle 2-210 is installed at the valve inlet 2-29, where a second conical surface matched with the first conical surface is provided at an upper part of an inner wall of the nozzle 2-210, and when the main piston assembly is moved downward to make the first conical surface matched with the second conical surface, the valve disc 2-28 closes the valve inlet 2-29.

Contact surfaces of the valve disc and the nozzle is inclined, and when the valve is closed, the nozzle and the valve disc can be tightly matched under an action of a pressure difference, so as to enable better sealing and prevent leakage of the coolant.

### In this embodiment,

The main valve body includes a main valve housing 2-21, a lower valve seat 2-22 and an upper valve seat 2-23 which are fixedly connected in sequence from bottom to top, and an inner cavity of the main valve housing 2-21 forms the main valve cavity 2-24.

A first groove is provided in a top surface of the lower valve seat 2-22, a lower part of the upper valve seat 2-23 extends into the first groove to be sealedly connected to a groove wall of the first groove, a second groove is provided in a bottom surface of the upper valve seat 2-23, and a groove wall of the second groove encloses the main sealed cavity 2-215 with a bottom wall of the first groove.

In this embodiment, a pilot conduit 2-214 is fixed inside the upper valve seat 2-23, and has one end extending into the main sealed cavity 2-215, and the other end extending out of the upper valve seat 2-23 to be communicated with the first channel and the second channel of the pilot valve 2-1.

In this embodiment, the main piston rod includes a working section 2-27 and a positioning section 2-213, where the working section 2-27 has a lower end fixedly connected to the valve disc 2-28, and an upper end passing through the lower valve seat 2-22 into the main sealed cavity 2-215 and fixedly connected to the main piston 2-25, and the main spring 2-26 is disposed around the working section 2-27.

A sealed exhaust cavity 2-212 is provided at an upper part of the upper valve seat 2-23, a top of the upper valve seat 2-23 is provided with a valve cover 2-216 for opening or closing the exhaust cavity 2-212, and the positioning section 2-213 has a lower end fixedly connected to a piston, and an upper end passing through the upper valve seat 2-23 into the exhaust cavity 2-212.

### In this embodiment:

As shown in FIG. 6, the driving structure of the pilot valve 2-1 includes a first pilot piston 2-15, a second pilot piston 2-110 and a pilot piston rod 2-16, where the pilot piston rod 2-16 is axially and slidably disposed in the pilot valve body and connected between the first pilot piston 2-15 and the second pilot piston 2-110, the first pilot piston 2-15 is sealedly and slidably disposed in the first sealed cavity 2-17, and the second pilot piston 2-110 is sealedly and slidably disposed in the second sealed cavity 2-112.

The valve core structure includes a first pilot valve, a second pilot valve and a pilot valve stem 2-111, where the pilot valve stem 2-111 is arranged in parallel with and connected to the pilot piston rod 2-16, axially and slidably disposed in the pilot valve body and connected between the first pilot valve and the second pilot valve, the first pilot valve is disposed in the first channel and configured to open or close the first channel, and the second pilot valve is disposed in the second channel and configured to open or close the second channel.

### In this embodiment:

The first pilot valve includes a first valve plate 2-14 and a first valve core assembly 2-117, where the first valve plate 2-14 is fixed in and configured to close the first channel, and provided with a first valve hole, while the first valve core assembly 2-117 is slidably disposed in the first channel and matched with the first valve hole.

The second pilot valve includes a second valve plate 2-19 and a second valve core assembly 2-118, where the second valve plate 2-19 is fixed in and configured to close the second channel, and provided with a second valve hole, while the second valve core assembly 2-118 is slidably disposed in the second channel and matched with the second valve hole.

The pilot valve stem 2-111 is configured to connect the first valve core assembly 2-117 and the second valve core assembly 2-118, and when the pilot valve stem is moved axially, the first valve core assembly 2-117 is driven to open the first valve hole and the second valve core assembly 2-118 is driven to close the second valve hole, or the first valve core assembly 2-117 is driven to close the first valve hole and the second valve core assembly 2-118 is driven to open the second valve hole.

### In this embodiment:

The first channel includes a first inlet section, a first pilot valve cavity 2-120, and a first outlet section which are communicated in sequence, where the first pilot valve is located in the first pilot valve cavity 2-120, and the first pilot valve cavity 2-120 has a space for the first valve core assembly 2-117 to slide.

The second channel includes a second inlet section, a second pilot valve cavity 2-121, and a second outlet section which are communicated in sequence, where the second outlet section is communicated with the first outlet section, the second pilot valve is located in the second pilot valve cavity 2-121, and the second pilot valve cavity 2-121 has a space for the second valve core assembly 2-118 to slide.

In this embodiment, each of the first valve core assembly 2-117 and the second valve core assembly 2-118 includes a valve core and a return spring, and the return spring is abutted between the valve core and a cavity wall of the corresponding valve cavity.

In the process of axially moving the pilot valve stem 2-111 to drive the valve core to open the corresponding valve hole, the return spring is compressed, and when the pressure source is removed, resetting of the return spring can push the corresponding valve core to close the corresponding valve hole.

In this embodiment, a first input pipe 2-115 is inserted in the first inlet section, a second input pipe 2-116 is inserted in the second inlet section, an output pipe 2-114 is inserted in the first outlet section, and the first input pipe 2-115, the second input pipe 2-116 and the output pipe 2-114 all extend out of the pilot valve body.

In this embodiment, the pilot piston rod 2-16 is connected to the pilot valve stem 2-111 by a pilot dial 2-119, and the pilot valve body is provided with a slot 2-122 for axial movement of the pilot dial 2-119 along the pilot piston rod 2-16.

In this embodiment, the pilot valve body includes a first valve seat 2-11, an intermediate valve seat 2-13 and a second valve seat 2-12 which are sequentially and fixedly connected.

The first sealed cavity 2-17 is disposed in the first valve seat 2-11, the second sealed cavity 2-112 is disposed in the second valve seat 2-12, and the first and second channels are defined in the intermediate valve seat 2-13.

In this embodiment, the first valve seat 2-11 is sealedly connected to the intermediate valve seat 2-13, a third groove is defined in an end surface of the first valve seat facing the intermediate valve seat 2-13, and a groove wall of the third groove encloses the first sealed cavity 2-17 with an end surface of the intermediate valve seat 2-13 facing the first valve seat 2-11.

The second valve seat 2-12 is sealedly connected to the intermediate valve seat 2-13, a fourth groove is defined in an end surface of the second valve seat facing the intermediate valve seat 2-13, and a groove wall of the fourth groove encloses the second sealed cavity 2-112 with an end surface of the intermediate valve seat 2-13 facing the second valve seat 2-12.

In this embodiment, a first conduit 2-18 is fixed in the first valve seat 2-11, and has one end extending into the first sealed cavity 2-17, and the other end extending out of the first valve seat 2-11 to be communicated with the first output port 2-315.

A second conduit 2-113 is fixed in the second valve seat 2-12, and has one end extending into the second sealed cavity 2-112, and the other end extending out of the second valve seat 2-12 to be communicated with the second output port 2-415.

The pressure relief valve set in the second embodiment of the present disclosure is configured for rapid pressure relief of a primary loop, and implements functions are as follows:

By controlling on/off of the first control valve 2-3 and the second control valve 2-4, as well as pressure levels of the pressure relief tank, the constant pressure source and the primary loop, pressure control of the double-piston pilot valve is realized, and finally opening and closing of the main valve of the pressure relief valve are controlled.

It is assumed that the primary loop pressure is Prcs, where Prcs = 15.5MPa during normal operation of the nuclear power plant, and may be gradually reduced to 0.1MPa during normal shutdown, refueling, overhaul, or other conditions of the nuclear power plant, the constant pressure source has a pressure Pacc, which is typically about 4 to 5MPa for a accumulator, and the pressure relief tank has a pressure P0, which is typically 0.1MPa.

When the first solenoid valve 2-33 and the second solenoid valve 2-43 are respectively powered on and off, pressures at various positions of the pilot valve 2-1, piston pressures of the main valve 2-2 and functions implemented by the main valve 2-2 are shown in table 2 below.

**Table 2**

| State of solenoid valve | | State of pilot valve | | | | Main valve piston pressur e | Function implemented by main valve |
|---|---|---|---|---|---|---|---|
| First solenoid valve | Second solenoid valve | Pressure of first sealed cavity 2-17 | Pressure of second sealed cavity 2-112 | Pressur e of first input pipe 2-115 | Pressure of second input pipe 2-116 | | |
| On | On | P0 | Pacc | Pacc | P0 | Pacc | Isolation at low pressure when Prcs<Pacc |
| On | Off | P0 | Prcs | Prcs | P0 | Prcs | Isolation at high pressure when Prcs>P₀ₘₐᵢₙ |
| Off | Off | Pacc | Prcs | Prcs | P0 | Prcs | Standby state (valve closed) when Prcs>P0twin |
| | | | | | | P0 | Automatic opening when Pres<P_{0twin} |
| Off | On | Pacc | Pacc | Pacc | P0 | P0 | Manual opening |

Description of functions of the main valve:
Manual opening: in the nuclear power plant, an operator is required to open the pressure relief valve manually in some cases, in which case the first solenoid valve 2-33 is powered off and the second solenoid valve 2-43 is powered on, so that the first pilot piston and the second pilot piston have the same pressure, i.e., Pacc, and since the first pilot piston has an area larger than the second pilot piston, the pilot valve stem is moved downward, resulting in a main valve piston pressure = P0, so that the main valve is opened under an action of the driving spring and the primary loop pressure, and can be kept in an always open state.

Standby state: the valve is in a standby state during normal operation of the nuclear power plant, in which the first solenoid valve 2-33 and the second solenoid valve 2-43 are both powered off, a first pilot piston pressure = Pacc, and a second pilot piston pressure = Prcs. When Prcs>P_{0twin}, (where P_{0twin} is related to an area ratio of the first pilot piston to the second pilot piston; assuming here that the area ratio is 2:1, then P_{0twin} =2 × Pacc, i.e., about 8 to 10MPa), the pilot piston rod is moved upward, resulting in a main piston pressure = Prcs. Since the main valve piston area is greater than the valve disc area, the main valve is in a closed state. When Prcs<P_{0twin}, (where P_{0twin} is related to an area ratio of the first pilot piston to the second pilot piston; assuming here that the area ratio is 2:1, then P_{0twin} =2 * Pacc, i.e., about 8 to 10MPa), the pilot piston rod is moved downward, resulting in a main piston pressure = P0, and thus the main valve is opened.

Isolation under high pressure: while the primary loop pressure is reduced from 15.5MPa normally, the pressure relief valve is desired to be isolated if it is not expected to be automatically opened, in which case the first solenoid valve 2-33 is in a power-on state, the second solenoid valve 2-43 is in a power-off state, a first pilot piston pressure = P0, and a second pilot piston pressure = Prcs. The pilot piston rod is moved upward, resulting in a main valve piston pressure = Prcs, and since the main valve piston area is greater than the valve disc area, the main valve is kept in a closed state even when Prcs is greater than the opening pressure P₀ₘₐᵢₙ of the main valve.

Isolation at low pressure: when the primary loop pressure is further reduced and Prcs is not enough to maintain the closed state of the main valve, the valve is switched to a low pressure isolation state, in which the first solenoid valve 2-33 and the second solenoid valve 2-43 are both powered on, a first pilot piston pressure = P0, and a pilot valve second pilot piston pressure = Pacc. Since Pacc is constant at 4 to 5MPa, the main valve can be ensured to be kept in an always closed state even when Prcs<Pacc.

Since P₀ₘₐᵢₙ<Pacc, the switching between the isolation under high pressure and the isolation under low pressure may be actually determined by a pressure selected between P₀ₘₐᵢₙ and Pacc according to the design of the main valve, which, optionally, may be generally about 3MPa and slightly lower than a normal pressure of the constant pressure source accumulator.

In summary, it can be seen that the pressure relief valve set in this embodiment is a valve set for safety of a nuclear power plant mainly configured to satisfy the requirements for pressure relief of a primary loop, which can be automatically opened when the primary loop pressure satisfies a condition and maintain an open state, and effectively isolated during normal operation and shutdown refueling. In addition, this pressure relief valve set can also enable manual opening of the main valve.

While satisfying the requirements on primary loop pressure relief of the Hualong PWR, a pressure relief valve set of such design has the following technical advantages:
1) In a standby state, automatic opening is enabled as long as the primary loop pressure satisfies the condition, which requires no additional energy input and is more reliable.
2) After being automatically opened, the valve can be kept in an always open state without any power source, which ensures long-term pressure relief of the primary loop.
3) Through different combinations of solenoid valves, reliable isolation of the valve can be implemented in any state, while also enabling manual opening in any state.
4) Through different configuration combinations such as pilot valves in parallel and solenoid valves in series, redundant setting of opening and isolation functions of the valve can be implemented, thereby preventing a valve fault caused by a fault of a single assembly and improving the overall reliability of the valve.
5) A low leakage rate is achieved: in normal operation, sealing is implemented by a pressure applied to the main valve piston by the primary loop itself.

### Third Embodiment

As shown in FIG. 7, this embodiment provides an isolation valve for a passive water injection pipeline of a nuclear power plant, including: a main valve 3-2 and a two-position three-way control valve 3-1.

The main valve 3-2 includes: a main valve body and a valve core, the main valve body has a sealed cavity 3-215 and a valve cavity, where the valve cavity is configured to communicate a passive water injection pipeline and a primary loop coolant system, the valve core has one end in the sealed cavity 3-215 and the other end in the valve cavity 3-24, and the valve core is slidable in the main valve body under an action of a pressure of a medium entering the sealed cavity 3-215, so as to open or close the valve cavity.

The two-position three-way control valve 3-1 has a first input port 3-112, a second input port 3-113, and an output port 3-111, where the output port 3-111 is communicated with the sealed cavity 3-215, the first input port 3-112 is communicated with an atmospheric pressure source, the second input port 3-113 is communicated with the primary loop coolant, and the second input port is communicated with a constant pressure source.

The two-position three-way control valve 3-1 has a first state in which the output port 3-111 is communicated with the first input port 3-112 and disconnected from the second input port 3-113, and a second state in which the output port 3-111 is communicated with the second input port 3-113 and disconnected from the first input port 3-112, and the two-position three-way control valve is switchable between the first and second states to change the medium entering the sealed cavity 3-215 and a pressure thereof, and a pressure setting value P₀ₘₐᵢₙ at which the medium entering the sealed cavity 3-215 opens the main valve 3-2 satisfies: Pgmax<P₀ₘₐᵢₙ<Pacc, where Pgmax (about 0.2 to 0.3MPa) is the highest pressure of the passive water injection pipeline, and Pacc is a pressure of the constant pressure source.

It should be noted that the passive safety system is a design feature of some third generation nuclear power plants, while the passive water injection system is one of the main safety systems of a passive safety system.

The passive water injection system generally realizes injection of cooling water into a reactor coolant system by means of a compressed gas or gravity, and ensures post-accident safety of the reactor core.

The passive water injection system is in an isolation state during normal operation of the nuclear power plant, so an isolation valve with certain reliability is required. Typically, an electric valve or squib valve is used as the isolation valve. The electric valve is characterized in that it can be opened at any time and is kept in an original state even when powered off, but has the disadvantage that it requires a higher power to open. In contrast, the squib valve signals to trigger an explosion unit inside the valve to generate a high-pressure gas that pushes a piston in the valve to move, and a shearing cover for a valve nominal diameter can be cut off in the impact motion to communicate an inlet and an outlet of the valve, so that the function of opening the valve is realized. This valve type is characterized in that once opened, it is kept in an always open state and cannot be restored.

In view of the above problems of the existing isolation valves, in the third embodiment of the present disclosure, the two-position three-way control valve 3-1 and the main valve 3-2 are combined to form an isolation valve for a passive water injection pipeline of a nuclear power plant, where the main valve body of the main valve 3-2 has a sealed cavity 3-215 and a valve cavity 3-24, the valve core is slidably disposed in the main valve, and the valve core is slidable in the main valve body under an action of a pressure of a medium entering the sealed cavity 3-215, so as to open or close the valve cavity. The two-position three-way control valve 3-1 has a first input port 3-112 communicated with the primary loop coolant, a second input port 3-113 communicated with a constant pressure source, and an output port 3-111 communicated with the sealed cavity 3-215 of the main valve 3-2, and an opening setting value P₀ₘₐᵢₙ of the main valve 3-2 satisfies: Pgmax<P₀ₘₐᵢₙ<Pacc, so that:

When the primary loop pressure is normal (about 15.5MPa), the two-position three-way control valve 3-1 is switched to the first state (in which the output port 3-111 of the three-position four-way control valve is communicated with the first input port 3-112), in which case the pressure in the sealed cavity 3-215 of the main valve 3-2 is the primary loop pressure, which is far greater than the opening setting value P₀ₘₐᵢₙ of the main valve 3-2, so that the main valve 3-2 is closed and isolation of the main valve 3-2 during normal operation of the primary loop is realized. When the primary loop has a fault which causes a pressure drop to below the opening setting value P₀ₘₐᵢₙ of the main valve 3-2, the main valve 3-2 is automatically opened, thereby enabling a gravity water injection function.

When the main valve 3-2 is not expected to be opened during shutdown refueling (where the primary loop pressure Prcs is between P₀ₘₐᵢₙ and Pacc, will be reduced to a normal pressure), the two-position three-way control valve 3-1 is switched to the second state (in which the output port 3-111 of the three-position four-way control valve is communicated with the second input port 3-113), in which case the pressure in the sealed cavity 3-215 of the main valve 3-2 is a constant pressure source pressure (e.g., about 4 to 5MPa for a accumulator), which is greater than the opening setting value P₀ₘₐᵢₙ of the main valve 3-2, so that the main valve 3-2 is closed and isolation of the main valve 3-2 under a low primary loop pressure is realized.

Further, a comparison of advantages and disadvantages of the gravity water injection isolation valve according to the third embodiment of the present disclosure and several types of gravity water injection isolation valves commonly used in the nuclear power safety field mentioned in the background art is shown in table 1.

**Table 1**

| | Disadvantages | Advantages of the present scheme |
|---|---|---|
| Electric or pneumatic isolation valve | High-power power source or gas source support is required; | In a standby state, automatic opening can be implemented without any external energy when a gravity water injection condition is satisfied. |
| | a relatively high power is required to open the valve; | |
| | the opening speed is low; and the valve cannot be automatically opened. | |
| | | The valve can be opened or closed by a low-voltage and low-power power source through a two-position three-way valve controlling a main valve piston pressure; |
| | | the open or closed state can be maintained without any power source support; |
| | | a relatively low power is required; and |
| | | the opening speed is high. |
| Squib valve | Once opened, the valve is kept in an always open state and cannot be restored. | After being opened, the valve can still apply a pressure to the top piston to close the valve. |

### In this embodiment:

The two-position three-way control valve 3-1 includes a control valve body 3-11, a control piston assembly, a first solenoid valve, and a second solenoid valve.

The control valve body 3-11 has a main chamber 3-12, a first side chamber 3-13, and a second side chamber 3-14, where the first side chamber 3-13 and the second side chamber 3-14 are disposed at two ends of the main chamber 3-12, respectively, the control piston assembly is disposed in the main chamber 3-12, the first solenoid valve is disposed in the first side chamber 3-13, and the second solenoid valve is disposed in the second side chamber 3-14.

The first input port 3-112, the second input port 3-113 and the output port 3-111 are all disposed on the control valve body 3-11 and communicated with the main chamber 3-12, the control piston assembly includes a control piston rod 3-15 and a plurality of control pistons 3-16 fixed on the control piston rod 3-15, where the plurality of control pistons 3-16 are sequentially and sealedly arranged in the main chamber 3-12 in an axial direction of the control piston rod 3-15 in a slidable manner to divide the main chamber 3-12 into a plurality of sub-chambers, while two ends of the control piston rod 3-15 both extend out of the main chamber 3-12, with one end connected to the first solenoid valve and the other end connected to the second solenoid valve.

The output port 3-111 is located on one side of a radial direction of the control piston rod 3-15, while the first input port 3-112 and the second input port 3-113 are both located on the other side of the radial direction of the control piston rod 3-15. When the first solenoid valve is powered on, the control piston assembly is driven by the first solenoid valve toward the second solenoid valve to communicate the output port 3-111 with only the second input port 3-113 through one of the sub-chambers to enable the second state of the two-position three-way control valve 3-1; and when the second solenoid valve is powered on, the control piston assembly is moved toward the first solenoid valve to communicate the output port 3-111 with only the first input port 3-112 through one of the sub-chambers to enable the first state of the two-position three-way control valve 3-1.

In this embodiment, four control pistons 3-16 are provided and configured to divide the main chamber 3-12 into a first sub-chamber, a second sub-chamber, a third sub-chamber, a fourth sub-chamber and a fifth sub-chamber in sequence.

When the two-position three-way control valve 3-1 is in the first state, the output port 3-111 is communicated with only the first input port 3-112 through the third sub-chamber.

When the two-position three-way control valve 3-1 is in the second state, the output port 3-111 is communicated with only the second input port 3-113 through the third sub-chamber.

### In this embodiment:

The first solenoid valve includes a first sucker 3-17 and a first coil 3-18, and the second solenoid valve includes a second sucker 3-19 and a second coil 3-110, where the first coil 3-18 and the second coil 3-110 are respectively disposed on outer end walls at two ends of the main chamber in the axial direction of the control piston rod, and the first sucker 3-17 and the second sucker 3-19 are respectively disposed at two ends of the control piston rod 3-15.

When the first solenoid valve is powered on, the first sucker 3-17 is moved toward the first coil 3-18 to be fixedly connected to the first coil, so as to drive the control piston assembly to move toward the second solenoid valve to enable the second state of the two-position three-way control valve 3-1, and when the second solenoid valve is powered on, the second sucker 3-19 is moved toward the second coil 3-110 to be fixedly connected to the second coil, so as to drive the control piston assembly to move toward the first solenoid valve to enable the first state of the two-position three-way control valve 3-1.

Since the gravity water injection isolation valve has a smaller working pressure range and only two working states, i.e., open and closed, the main valve can be completely controlled by a single valve.

The input ends of the two-position three-way control valve are respectively connected to a primary loop Prcs and a constant pressure source Pacc to provide a constant pressure level for the control valve. The output end is connected to a pilot pipeline of the main valve (i.e., the conduit 3-214).

When the first solenoid valve is powered off and the second solenoid valve is powered on, the valve set is in a standby state. The piston is moved to the left to enable communication between a pressure output end and a pressure input end Prcs, in which case the pressure in a driving piston of the main isolation valve is equal to Prcs. Due to the design characteristics of the main valve, when Prcs is greater than an automatic opening setting value of the main valve, the isolation valve is in an isolation state, and when the primary loop pressure is lower than the automatic opening setting value of the main valve, the isolation valve is automatically opened under an action of a driving spring to start gravity water injection.

When the first solenoid valve is powered on and the second solenoid valve is powered off, the valve set is in a low pressure isolation state. The piston is moved to right to enable communication between the pressure output end and the pressure input end Pacc, in which case the pressure in the driving piston of the main isolation valve is equal to Pacc, and when the primary loop pressure is lower than Pacc, the isolation valve is still kept in a closed state.

When power outage occurs in the current state, the control valve will remain in an original position.

### In this embodiment:

A plurality of two-position three-way control valves 3-1 are provided and arranged in parallel.

In this embodiment, a plurality of first solenoid valves and a plurality of second solenoid valves are provided, the plurality of first solenoid valves are arranged in series, and the plurality of second solenoid valves are also arranged in series.

In this embodiment, the valve core includes a main piston assembly and a main spring 3-26, where the main piston assembly includes a main piston rod, a main piston 3-25 and a valve disc 3-28, the main piston rod is slidably disposed in the main valve body, the main piston 3-25 is fixed on the main piston rod and located in the sealed cavity 3-215, the valve disc 3-28 is fixed on the main piston rod and located in the valve cavity 3-24, and the main spring 3-26 is located in the sealed cavity 3-215 and compressed between the main piston 3-25 and a bottom wall of the valve cavity 3-24.

In the third embodiment of the present disclosure, the main valve 3-2 is a main flow path for a gravity water injection fluid, and a combination of driving piston plus driving spring is used in the third embodiment of the present disclosure as an energy source for opening and closing of the main valve 3-2. The main valve 3-2 is connected to the two-position three-way control valve 3-1 through a pilot pipeline (i.e., the conduit 3-214), and configured to control a pressure in the sealed cavity 3-215 and thus opening and closing of the main valve 3-2.

In this embodiment, the valve cavity 3-24 is located below the sealed cavity 3-215, the main valve body is provided with a valve inlet 3-29 and a valve outlet 3-211 each communicated with the valve cavity, the valve inlet 3-29 is provided at a bottom of the main valve body and configured to be communicated with the primary loop coolant system, the valve outlet 3-211 is provided on a side surface of the main valve body and configured to be communicated with a gravity water injection pipeline, and the main piston assembly is vertically and slidably disposed in the main valve body to open or close the valve inlet 3-29.

The pressure setting value P₀ₘₐᵢₙ at which the medium entering the sealed cavity 3-215 opens the main valve 3-2 further satisfies: P₀ₘₐᵢₙ×A1-(P₀ₘₐᵢₙ-Pgmax) ×A2+G=F, where A1 is a cross sectional area of the main piston 3-25, A2 is a cross sectional area of the valve disc 3-28, G is a gravity of the main piston assembly, and F is a spring force of the main spring when the main valve 3-2 is closed.

In the third embodiment of the present disclosure, the opening and closing of the main valve, and maintenance of the sealing performance of the isolation valve, depend on a combined action of the driving spring, a pressure of the driving piston and a pressure of a system, which is specifically explained below:

The driving piston has an area larger than the valve disc, and when sealed chamber pressure × driving piston area + piston assembly gravity>driving spring pressure + pressure difference between bottom surface and top surface of valve disc × valve disc area, the valve is in a closed state, and sealing of the valve is kept by a pressure difference before and after the inequality.

When sealed chamber pressure × driving piston area + piston assembly gravity<driving spring pressure + pressure difference between bottom surface and top surface of valve disc × valve disc area, the valve is opened under an action of the pressure of the driving spring and an internal pressure of the system, and kept in an always open state by the pressure of the driving spring.

In this embodiment, the main spring 3-26 is disposed around the main piston rod to provide power for driving the piston to move up and down.

### In this embodiment:

An outer diameter of the valve disc 3-28 is gradually reduced from top to bottom so that an outer wall of the valve disc 3-28 forms a first conical surface.

A nozzle 3-210 is installed at the valve inlet 3-29, where a second conical surface matched with the first conical surface is provided at an upper part of an inner wall of the nozzle 3-210, and when the main piston assembly is moved downward to make the first conical surface matched with the second conical surface, the valve disc 3-28 closes the valve inlet 3-29.

### In this embodiment:

The main valve body includes a valve housing 3-21, a valve seat 3-22 and a valve core 3-23 which are fixedly connected in sequence from bottom to top, and an inner cavity of the valve housing 3-21 forms the valve cavity 3-24.

A first groove is provided in a top surface of the valve seat 3-22, a lower part of the valve core 3-23 extends into the first groove to be sealedly connected to a groove wall of the first groove, a second groove is provided in a bottom surface of the valve core 3-23, and a groove wall of the second groove encloses the sealed cavity 3-215 with a bottom wall of the first groove.

### In this embodiment:

The main piston rod includes a working section 3-27 and a positioning section 3-213, where the working section 3-27 has a lower end fixedly connected to the valve disc 3-28, and an upper end passing through the valve seat 3-22 into the sealed cavity 3-215 and fixedly connected to the main piston 3-25, and the main spring 3-26 is disposed around the working section 3-27.

A sealed exhaust cavity 3-212 is provided at an upper part of the valve core 3-23, a top of the valve core 3-23 is provided with a valve cover 3-216 for opening or closing the exhaust cavity 3-212, and the positioning section 3-213 has a lower end fixedly connected to a piston, and an upper end passing through the valve core 3-23 into the exhaust cavity 3-212.

The third embodiment of the present disclosure is configured for isolation of a passive gravity water injection pipeline.

This isolation valve controls an output pressure of the control valve through the solenoid valves, and controls a piston pressure of the main isolation valve through a hydraulic pressure, thereby enabling opening and closing of the valve.

It is assumed that the primary loop pressure is Prcs, where Prcs = 15.5MPa during normal operation of the nuclear power plant, and may be gradually reduced to 0.1MPa during normal shutdown, refueling, overhaul, or other conditions of the nuclear power plant, and a constant pressure source accumulator has a pressure Pacc, which is typically about 4 to 5MPa. At an outlet of a water injection pipeline of the isolation valve connected to the primary loop, the pressure is Prcs; and at an inlet of the water injection pipeline of the isolation valve connected to a water injection source, the pressure is typically 0.2MPa (the maximum pressure is Pgmax if a refueling water tank is built in for gravity water injection).

When the first solenoid valve is powered off and the second solenoid valve is powered on, the piston pressure of the main isolation valve is equal to the primary loop pressure, and when the primary loop pressure is far greater than 0.2MPa, the main isolation valve is kept in a standby (closed) state. After an accident, with the reduction of the primary loop pressure, the pressure applied by the primary loop is not enough to overcome a driving force of the driving spring in the main isolation valve, and the main isolation valve is opened under the pressure of the driving spring to start gravity water injection.

When the first solenoid valve is powered on and the second solenoid valve is powered off, the piston pressure of the main isolation valve is about 4 to 5MPa, and when the primary loop pressure is lower than Pacc, the isolation valve is in a closed state under a combined action of the pressures of the piston and the primary loop. Even if the primary loop pressure is reduced to 0.2MPa, reliable closing of the isolation valve can still be ensured merely by the pressure applied by the main isolation valve piston.

Therefore, in a standby state, the main valve can be opened without any action, and when the primary loop pressure is reduced to a certain degree, the main valve can be automatically opened without any action of the solenoid valve. Further, the isolation valve can be kept in an always open state without continuous power supply to the solenoid valve, thereby ensuring long-term operation of gravity water injection in the primary loop.

In addition, the third embodiment of the present disclosure can enable reliable isolation of the valve in a low pressure state and automatic isolation in a high pressure (>P0main) state.

In summary, it can be seen that the isolation valve in this embodiment is a valve set for safety of a nuclear power plant mainly configured for isolation of a passive gravity water injection pipeline, which can be automatically opened when the primary loop pressure satisfies a condition and maintain an open state, and effectively isolated during normal operation and shutdown refueling. In addition, this pressure relief valve set can also enable manual recovery of the isolation function after the valve is opened.

While satisfying the nuclear power gravity water injection isolation and water injection functions, this isolation valve further has the following technical advantages:
1) The valve can be automatically opened as long as the primary loop pressure satisfies the condition without any external energy input.
2) Effective isolation is guaranteed: effective isolation of the valve can be guaranteed in various operating states of a power plant.
3) After being opened, the valve can be kept in an always open state without any power source.
4) After being opened, the valve can recover the isolation function by switching states of the control valve.
5) High reliability is achieved: the N-1 criterion of the system is satisfied by combining the solenoid valves arranged in parallel and in series, which provides a redundant means for opening and closing the valve, so that the valve can be reliably opened and closed in any state, and the false triggering probability is low.
6) A low leakage rate is achieved: in normal operation, sealing is implemented by a pressure applied to the main isolation valve piston by the primary loop itself, thereby ensuring sealing of the valve.

### Fourth Embodiment:

This embodiment provides a valve set for safety of a nuclear power plant, including: a first valve part and a second valve part.

The first valve part includes a valve body portion and a valve core portion. The valve body portion has a sealed cavity and a valve cavity. The valve cavity is configured to communicate a primary loop coolant with a medium space. The valve core portion has one end in the sealed cavity and the other end in the valve cavity, and the valve core portion is slidable in the valve body portion under an action of a pressure of a medium entering the sealed cavity, so as to open or close the valve cavity and enable communication or isolation of the primary loop coolant and the medium space.

Specifically, in the fourth embodiment of the present disclosure, when applied in different scenes, the first valve part may be connected to different medium spaces, for example: atmosphere or a passive water injection pipeline or the like.

The second valve part is provided with an output end and input ends. The output end is communicated with the sealed cavity, while two or more input ends are provided. When two input ends are provided, one input end is communicated with the primary loop coolant, and the other input end is communicated with a pressure source. When more than two input ends are provided, the input ends are communicated with the primary loop coolant, the pressure source and an atmospheric pressure source, respectively, and the second valve part can control a communication state between the output end and the input ends, so that the output end is communicated with one of the input ends.

A pressure setting value P0main at which the medium entering the sealed cavity opens the main valve satisfies: first pressure value<P0main<second pressure value, where the first pressure value is a pressure value in the medium space, and the second pressure value is a pressure value of the pressure source. When a pressure medium output from the output end is greater than the pressure setting value, the valve cavity is opened, and when the pressure medium output from the output end is less than the pressure setting value, the valve cavity is closed.

Specifically, in the valve set for safety of a nuclear power plant, the second valve part can control the output end to be communicated with one of the input ends while being disconnected from other input ends, and further control a medium pressure in the sealed cavity. More specifically, one of the input ends is communicated with a primary loop coolant, while the other input end is communicated with a pressure source (i.e., a constant pressure source).

When the primary loop pressure is normal (about 15.5MPa), the second valve part is switched into a state in which the output end is communicated with an input end corresponding to the primary loop coolant, in which case the pressure in the sealed cavity of the first valve part is the primary loop pressure, which is far greater than the opening setting value P₀ₘₐᵢₙ of the first valve part, so that the first valve part is closed and isolation of the first valve part during normal operation of the primary loop and under a high pressure (Prcs>P₀ₘₐᵢₙ) is realized. When the primary loop has a fault which causes a pressure drop to below the opening setting value P₀ₘₐᵢₙ of the first valve part, the first valve part is automatically opened, thereby enabling automatic opening of the main valve when the primary loop pressure is abnormal.

When the first valve part is not expected to be opened during shutdown refueling (where the primary loop pressure is desired to be reduced to a normal pressure), the second valve part is switched into a state in which the output end is communicated with an input end corresponding to the pressure source, in which case the pressure in the seal ring of the first valve part is a constant pressure source pressure (e.g., about 4 to 5MPa for a accumulator), which is greater than the opening setting value P₀ₘₐᵢₙ of the first valve part, so that the first valve part is closed and isolation between the primary loop and the medium space under a low primary loop pressure (Prcs<Pacc) is realized.

Further, the valve core portion includes a main piston assembly and a main spring, where the main piston assembly includes a main piston rod, a main piston and a valve disc, the main piston rod is slidably disposed in the valve body portion, the main piston is fixed on the main piston rod and located in the sealed cavity, the valve disc is fixed on the main piston rod and located in the valve cavity, and the main spring is located in the sealed cavity and compressed between the main piston and a bottom wall of the valve cavity.

Specifically, in the fourth embodiment of the present disclosure, the first valve part may function differently depending on the application scenes. For example, when the first valve part is communicated with the primary loop coolant and the atmosphere, an automatic pressure relief function of the primary loop coolant can be implemented by controlling the first valve part to open or close. In this case, the first valve part is a main flow path for a fluid during pressure relief of the primary loop, and a high-temperature and high-pressure fluid is born inside the valve. Therefore, to avoid influences of the high-temperature fluid in the primary loop, vibration on the valve control and the driving system, a combination of driving piston plus driving spring is used in the fourth embodiment of the present disclosure as an energy source for opening and closing of the first valve part. The first valve part is connected to the output end of the second valve part through a pilot pipeline, and configured to control a pressure in the sealed cavity and thus opening and closing of the first valve part.

For another example, when the first valve part is communicated with the primary loop coolant and the passive water injection pipeline, an automatic water injection function in the primary loop can be implemented by controlling the first valve part to open or close. In this case, the first valve part is a main flow path for a gravity water injection fluid.

In this embodiment, the valve cavity is located below the sealed cavity, the first valve body is provided with a valve inlet and a valve outlet each communicated with the valve cavity, the valve inlet is provided at a bottom of the valve body portion and configured to be communicated with the primary loop coolant, the valve outlet is provided on a side surface of the valve body portion and configured to be communicated with the medium space, and the main piston assembly is vertically and slidably disposed in the valve body portion to open or close the valve inlet. The medium space is atmosphere or a passive water injection pipeline.

The pressure setting value P₀ₘₐᵢₙ at which the medium entering the sealed cavity opens the main valve further satisfies: P₀ₘₐᵢₙ×(A1-A2)-β+G=F, where A1 is a cross sectional area of the main piston, A2 is a cross sectional area of the valve disc, G is a gravity of the main piston assembly, F is a spring force of the main spring when the main valve is closed, and β is a pressure coefficient of the medium space. When the medium space is atmosphere, β takes a value of 0, and when the medium space is a passive water injection pipeline, β takes a value of Pgmax× A2, where Pgmax is the highest pressure of the passive water injection pipeline.

Specifically, in the fourth embodiment of the present disclosure, the opening and closing, and maintenance of the sealing performance of the first valve part depend on a combined action of the driving spring, a pressure of the driving piston and a pressure of a system, which is specifically explained below:

The driving piston has an area larger than the valve disc, and when sealed chamber pressure × driving piston area + piston assembly gravity>driving spring pressure + valve inlet pressure × valve disc area, the valve is in a closed state, and sealing of the valve is kept by a pressure difference before and after the inequality.

When sealed chamber pressure × driving piston area + piston assembly gravity<driving spring pressure + valve inlet pressure × valve disc area, the valve is opened under an action of the pressure of the driving spring and an internal pressure of the system, and kept in an always open state by the pressure of the driving spring.

In summary, the safety valve set in the fourth embodiment of the present disclosure can enable automatic opening of the first valve part when the primary loop satisfies a condition and remain in an always open state so that the primary loop is communicated with the medium space, and enable effective isolation of the first valve part during shutdown refueling of the reactor (i.e., enable effective isolation between the primary loop and the medium space by closing the first valve part).

This safety valve set can be applied to different scenes, and enable pressure relief or water injection of a primary loop pipeline according to actual needs, so as to ensure normal operation of the primary loop. Specific examples will be presented below for applications of the safety valve set in different scenes:

### First Example

In this example, the valve set for safety of a nuclear power plant may be used as a primary loop hydraulic pressure relief valve set of a nuclear power plant, which is configured for pressure relief of a primary loop, where the first valve part and the second valve part are a main valve and a three-position four-way control valve, respectively.

It should be noted that, in this example, the main valve includes: a main valve body and a valve core, the main valve body is a valve body portion in the first valve part, and the valve core is a valve core portion in the first valve part. The main valve body has a sealed cavity and a valve cavity, the medium space is atmosphere, i.e., the valve cavity is configured to communicate a primary loop coolant with atmosphere, the valve core has one end in the sealed cavity and the other end in the valve cavity, and the valve core is slidable in the main valve body under an action of a pressure of a medium entering the sealed cavity, so as to open or close the valve cavity. Specifically, the valve cavity is controlled to be opened or closed by the valve core, so that communication or isolation between the primary loop coolant and the medium space (i.e., atmosphere) can be enabled, and when the primary loop coolant is communicated with the atmosphere, pressure relief of the primary loop can be enabled.

In this example, the output end of the second valve part is an output port. The second valve part is provided with three input ends, which are a first input port, a second input port. and a third input port, respectively. In other words, the three-position four-way control valve (i.e., the second valve part described above) has a first input port, a second input port, a third input port and an output port, where the output port is communicated with the sealed cavity, and the first input port is communicated with an atmospheric pressure source. The atmospheric pressure source may be selected as a primary loop volume control tank or pressure relief tank. The second input port is communicated with the primary loop coolant, and the pressure source is selected as a constant pressure source, i.e., the third input port is communicated with a constant pressure source.

In this example, the second valve part can control a communication state between the output end and the input ends, so that the output end is communicated with one of the input ends. In other words, the three-position four-way control valve (i.e., the second valve part described above) has a first state in which the output port is communicated with the first input port and disconnected from both the second input port and the third input port, a second state in which the output port is communicated with the second input port and disconnected from both the first input port and the third input port, and a third state in which the output port is communicated with the third input port and disconnected from both the first input port and the second input port, and the three-position four-way control valve is switchable between the first, second and third states to change the medium entering the sealed cavity and a pressure thereof.

In this example, the medium space is atmosphere, and the pressure source is a constant pressure source. That is, the first pressure value is an atmospheric pressure, and the second pressure value is a pressure of the constant pressure source. In other words, a pressure setting value P0main at which the medium entering the sealed cavity opens the main valve satisfies: P0<P0main<Pacc, where P0 is an atmospheric pressure, i.e., the first pressure value, and Pacc is a pressure of the constant pressure source, i.e., the second pressure value.

In the example, the three-position four-way control valve and the main valve are combined to form a primary loop hydraulic pressure relief valve set of a nuclear power plant, where the main valve body of the main valve has a sealed cavity and a valve cavity, the valve core is slidably disposed in the main valve, and the valve core is slidable in the main valve body under an action of a pressure of a medium entering the sealed cavity, so as to open or close the valve cavity. The three-position four-way control valve has a first input port communicated with an atmospheric pressure (e.g., a primary loop volume control tank or pressure relief tank), a second input port communicated with the primary loop coolant, a third input port communicated with a constant pressure source, and an output port communicated with the sealed cavity of the main valve, and an opening setting value P₀ₘₐᵢₙ of the main valve satisfies: atmospheric pressure<P₀ₘₐᵢₙ<Pacc, so that:

When the primary loop pressure is normal (about 15.5MPa), the three-position four-way control valve is switched to the second state (in which the output port of the three-position four-way control valve is communicated with the second input port), in which case the pressure in the sealed cavity of the main valve is the primary loop pressure, which is far greater than the opening setting value P₀ₘₐᵢₙ of the main valve, so that the main valve is closed and isolation of the main valve during normal operation of the primary loop and under a high pressure (Prcs>P₀ₘₐᵢₙ) is realized. When the primary loop has a fault which causes a pressure drop to below the opening setting value P₀ₘₐᵢₙ of the main valve, the main valve is automatically opened, thereby enabling automatic opening of the main valve when the primary loop pressure is abnormal.

When the main valve needs to be manually opened in some cases, the three-position four-way control valve is switched to the first state (in which the output port of the three-position four-way control valve is communicated with the first input port), in which case the pressure in the sealed cavity of the main valve is the atmospheric pressure, which is less than the opening setting value P₀ₘₐᵢₙ of the main valve, so that the main valve is opened.

When the main valve is not expected to be opened during shutdown refueling (where the primary loop pressure is desired to be reduced to a normal pressure), the three-position four-way control valve is switched to the third state (in which the output port of the three-position four-way control valve is communicated with the third input port), in which case the pressure in the sealed cavity of the main valve is a constant pressure source pressure (e.g., about 4 to 5MPa for a accumulator), which is greater than the opening setting value P₀ₘₐᵢₙ of the main valve, so that the main valve is closed and isolation of the main valve under a low primary loop pressure (Prcs<Pacc) is realized.

While satisfying the requirements on primary loop pressure relief of the Hualong PWR, a pressure relief valve set of such design has the following technical advantages:
1) Manual opening is enabled: manual opening of the valve in any state can be implemented by simply powering on a solenoid valve.
2) Effective isolation is guaranteed: effective isolation of the valve can be guaranteed in various operating states of a power plant.
3) An always open state is kept: after being opened, the valve can be kept in an always open state without any power source, which ensures long-term pressure relief and long-term recirculation of the primary loop.

It should be noted that other parts of the pressure relief valve set in this example are the same as those of the primary loop hydraulic pressure relief valve set of a nuclear power plant in the first embodiment, and thus are not described in detail here.

### Second Example

**In** this example, the valve set for safety of a nuclear power plant may be used as a valve set for primary loop pressure relief and discharge of a nuclear power plant, which is configured for pressure relief of a primary loop and different from example 1 in the structure of the second valve part.

The first valve part and the second valve part are a main valve and a control valve assembly, respectively.

It should be noted that the main valve (i.e., the first valve part) includes: a main valve body and a main valve core, the main valve body is a valve body portion in the first valve part, and the main valve core is a valve core portion in the first valve part. The main valve body has a main sealed cavity and a main valve cavity, the medium space is atmosphere, i.e., the main valve cavity is configured to communicate a primary loop coolant with atmosphere, the main valve core has one end in the main sealed cavity and the other end in the main valve cavity, and the main valve core is slidable in the main valve body under an action of a pressure of a medium entering the main sealed cavity, so as to open or close the main valve cavity. Specifically, the valve cavity is controlled to be opened or closed by the valve core, so that communication or isolation between the primary loop coolant and the medium space (i.e., atmosphere) can be enabled, and when the primary loop coolant is communicated with the atmosphere, pressure relief of the primary loop can be enabled.

The control valve assembly (i.e., the second valve part) includes a pilot valve, a first control valve and a second control valve.

In this example, the output end of the second valve part is disposed on the pilot valve, i.e., at outlets of a first channel and a second channel on the pilot valve. Four input ends, i.e., a first input port, a second input port, a third input port, and a fourth input port, are provided, where the first input port and the second input port are disposed on the first control valve, and the third input port and the fourth input port are disposed on the second control valve. Since more than two input ends are provided, the first input port is communicated with a primary loop volume control tank or pressure relief tank (i.e., an atmospheric pressure source), the second input port is communicated with a constant pressure source (a pressure source), the third input port is communicated with a constant pressure source (a pressure source), and the fourth input port is communicated with the primary loop coolant.

Specifically, the pilot valve includes a pilot valve body and a pilot valve core, where the pilot valve body is provided with a first sealed cavity, a first channel, a second channel and a second sealed cavity arranged in sequence, the pilot valve core includes a driving structure and a valve core structure, the driving structure has one end in the first sealed cavity and the other end in the second sealed cavity, the valve core structure is connected to the driving structure and has one end in the first channel and the other end in the second channel, the driving structure is slidable in the pilot valve body under an action of a pressure difference of a medium entering the first sealed cavity and a medium entering the second sealed cavity, so as to drive the valve core structure to open the first channel and close the second channel, or close the first channel and open the second channel, and outlets of the first channel and the second channel are both communicated with the main sealed cavity. The outlets of the first channel and the second channel are the output end of the second valve part.

Further, the first control valve has a first input port, a second input port, and a first output port, where the first output port is communicated with the first sealed cavity. The atmospheric pressure source may be selected as a primary loop volume control tank or pressure relief tank, i.e., the first input port is communicated with a primary loop volume control tank or pressure relief tank, and the pressure source is selected as a constant pressure source, i.e., the second input port is communicated with a constant pressure source.

The second control valve has a third input port, a fourth input port, and a second output port, where the second output port is respectively communicated with an inlet of the first channel and the second sealed cavity, the third input port is communicated with a constant pressure source, and the fourth input port is communicated with the primary loop coolant.

In this example, the second valve part can control a communication state between the output end and the input ends, so that the output end is communicated with one of the input ends.

Specifically, when the first control valve is powered on, the first output port is communicated with the first input port and disconnected from the second input port, in which case the medium pressure output from the first output port to the first sealed cavity in the pilot valve is the atmospheric pressure (i.e., a pressure is output to the first sealed cavity through the primary loop volume control tank or the pressure relief tank). When the first control valve is powered off, the first output port is communicated with the second input port and disconnected from the first input port, in which case the medium pressure output from the first output port to the second sealed cavity in the pilot valve is a pressure of the constant pressure source.

When the second control valve is powered on, the second output port is communicated with the third input port and disconnected from the fourth input port, in which case the medium pressure output from the second output port to the second sealed cavity in the pilot valve is a pressure of the constant pressure source. When the second control valve is powered off, the second output port is communicated with the fourth input port and disconnected from the third input port, in which case the medium pressure output from the second output port to the second sealed cavity in the pilot valve is a pressure of the primary loop coolant.

A pressure setting value P0main at which the medium entering the main sealed cavity opens the main valve satisfies: P0<P0main<Pacc, where P0 is an atmospheric pressure, i.e., the first pressure value, and Pacc is a pressure of the constant pressure source, i.e., the second pressure value. A pressure setting value P0twin at which the medium entering the second sealed cavity opening the pilot valve satisfies: Pacc×A1=P0twin×A2, where Pacc is a pressure of the constant pressure source, A1 is a cross sectional area of a first pilot piston, A2 is a cross sectional area of a second pilot piston, and A2<A1.

The pilot valve controls a pressure of the medium entering the main sealed cavity of the main valve body (i.e., the valve body portion of the first valve part) according to the medium pressures in the first sealed cavity and the second sealed cavity, which is specifically explained below:

In this example, a main valve, a pilot valve and two control valves are combined to form a valve set for primary loop pressure relief and discharge, where the main valve body of the main valve has a sealed cavity and a valve cavity, the valve core is slidably disposed in the main valve, and the valve core is slidable in the main valve body under an action of a pressure of a medium entering the sealed cavity, so as to open or close the valve cavity. The pilot valve body of the pilot valve is provided with a first sealed cavity, a first channel, a second channel and a second sealed cavity arranged in sequence, the pilot valve core is slidably disposed in the pilot valve body and can open the first channel and close the second channel, or close the first channel and open the second channel, under an action of a pressure difference between the medium entering the first sealed cavity and the medium entering the second sealed cavity, and outlets of the first channel and the second channel are both communicated with the main sealed cavity. The first output port of the first control valve is communicated with the first sealed cavity, the first input port is communicated with a primary loop volume control tank or pressure relief tank, and the second input port is communicated with a constant pressure source. The second output port of the second control valve is respectively communicated with an inlet of the first channel and the second sealed cavity, a third input port communicated with a constant pressure source, and the fourth input port is communicated with the primary loop coolant. An opening setting value P₀ₘₐᵢₙ of the main valve satisfies: P0<P₀ₘₐᵢₙ<Pacc, and a pressure setting value P_{0twin} of the pilot valve satisfies: Pacc×A₁=P_{0twin}×A₂, where A₂<A₁, so that:

When the valve set is in a standby state (the first control valve and the second control valve are both powered off), when the primary loop pressure is normal (about 15.5MPa), the pressure in the first sealed cavity of the pilot valve is a constant pressure source pressure (e.g., about 4 to 5MPa for a accumulator), while the pressure in the second sealed cavity is the primary loop pressure, so that the pilot valve core is moved upward to open the first channel, and the pressure source entering the main sealed cavity of the main valve is the primary loop, which is far greater than the opening setting value P₀ₘₐᵢₙ of the main valve, so that the main valve is closed and isolation of the main valve during normal operation of the primary loop is realized. When the primary loop has a fault which causes a pressure drop to below the pressure setting value P₀ₘₐᵢₙ of the pilot valve, the pilot valve core is moved downward to open the second channel, so that the pressure source entering the main sealed cavity of the main valve is a primary loop volume control tank or pressure relief tank (at an atmospheric pressure P0), which is less than the opening setting value P₀ₘₐᵢₙ of the main valve, so that the main valve is automatically opened, thereby enabling automatic opening of the main valve when the primary loop pressure is abnormal (P_{rcs}<P_{0twin}). Such an opening process does not need any additional energy input (because the first control valve and the second control valve are both powered off, and the main valve will be automatically opened as long as the primary loop pressure satisfies the condition).

When the main valve needs to be manually opened in some cases, the first solenoid valve is powered off while the second solenoid valve is powered on, so that the pressure in the first sealed cavity of the pilot valve is a constant pressure source pressure (e.g., about 4 to 5MPa for a accumulator), while the pressure in the second sealed cavity is also a constant pressure source pressure (e.g., about 4 to 5MPa for a accumulator). Since the pressure setting value P_{0twin} at which the medium entering the second sealed cavity opening the pilot valve is greater than the a pressure Pacc of the constant pressure source (i.e., A₂<A₁), the pilot valve core is depressed and the second channel is opened, so that the pressure source entering the main sealed cavity of the main valve is a primary loop volume control tank or pressure relief tank (at an atmospheric pressure P0), which is less than the opening setting value P₀ₘₐᵢₙ of the main valve, so that the main valve is opened.

When the main valve is not expected to be opened during shutdown refueling (where the primary loop pressure is desired to be reduced to a normal pressure), firstly the first solenoid valve is powered on and the second solenoid valve is powered off, in which case a primary loop volume control tank or pressure relief tank (at an atmospheric pressure P0) is in the first sealed cavity of the pilot valve, and the pressure in the second sealed cavity is the primary loop pressure, so that the primary loop pressure is reduced to the pressure setting value P₀ₘₐᵢₙ or less of the pilot valve (while in the standby state, the main valve is opened when the primary loop pressure is reduced to the pressure setting value P₀ₘₐᵢₙ of the pilot valve). Before the opening setting value P₀ₘₐᵢₙ of the main valve, the pilot valve keeps moving upward to open the first channel, and the pressure source entering the main sealed cavity of the main valve is the primary loop. At this stage, the main valve is kept in a closed state, thereby enabling high pressure isolation of this valve set during shutdown refueling. If the primary loop pressure is further reduced, the main valve will be opened, so that before the primary loop pressure is reduced to the opening setting value P₀ₘₐᵢₙ of the main valve, the first solenoid valve and the second solenoid valve are both powered on, in which case a primary loop volume control tank or pressure relief tank pressure (an atmospheric pressure P0) is in the first sealed cavity of the pilot valve, and the pressure in the second sealed cavity is a constant pressure source pressure (e.g., about 4 to 5MPa for a accumulator), the pilot valve is moved upward to open the first channel, and the pressure source entering the main sealed cavity of the main valve is a constant pressure source pressure (e.g., about 4 to 5MPa for a accumulator), which is greater than the opening setting value P₀ₘₐᵢₙ of the main valve, so that even if the primary loop pressure is reduced to below the opening setting value P₀ₘₐᵢₙ of the main valve, the main valve is still kept in a closed state, thereby enabling low pressure isolation of this valve set during shutdown refueling.

While satisfying the requirements on primary loop pressure relief of the Hualong PWR, a pressure relief valve set of such design has the following technical advantages:
1) In a standby state, automatic opening is enabled as long as the primary loop pressure satisfies the condition, which requires no additional energy input and is more reliable.
2) After being automatically opened, the valve can be kept in an always open state without any power source, which ensures long-term pressure relief of the primary loop.
3) Through different combinations of solenoid valves, reliable isolation of the valve can be implemented in any state, while also enabling manual opening in any state.

It should be further noted that other parts of the pressure relief valve set in this example are the same as those of the valve set for primary loop pressure relief and discharge in the second embodiment, and thus are not described in detail here.

### Third Example

**In** this example, the valve set for safety of a nuclear power plant may be used as an isolation valve for a passive water injection pipeline of a nuclear power plant, which is configured for passive water injection of a primary loop and different from examples 1 and 2 in the structure of the second valve part.

The first valve part and the second valve part are a main valve and a two-position three-way control valve, respectively.

The main valve includes: a main valve body and a valve core, the main valve body is a valve body portion in the first valve part, and the valve core is a valve core portion in the second valve part, the main valve body has a sealed cavity and a valve cavity, the medium space is a passive water injection pipeline, i.e., the valve cavity is configured to communicate a passive water injection pipeline and a primary loop coolant system, the valve core has one end in the sealed cavity and the other end in the valve cavity, and the valve core is slidable in the main valve body under an action of a pressure of a medium entering the sealed cavity, so as to open or close the valve cavity.

In this example, the output end of the second valve part is an output port, and two input ends, i.e., a first input port and a second input port, are provided. In other words, the two-position three-way control valve (i.e., the second valve part described above) has a first input port, a second input port, and an output port, where the output port is communicated with the sealed cavity, the first input port is communicated with the primary loop coolant, and the pressure source is a constant pressure source, i.e., the second input port is communicated with a constant pressure source.

In this example, the second valve part can control a communication state between the output end and the input ends, so that the output end is communicated with one of the input ends. In other words, the two-position three-way control valve has a first state in which the output port is communicated with the first input port and disconnected from the second input port, and a second state in which the output port is communicated with the second input port and disconnected from the first input port, and the two-position three-way control valve is switchable between the first and second states to change the medium entering the sealed cavity and a pressure thereof. A pressure setting value P0main at which the medium entering the sealed cavity opens the main valve satisfies: Pgmax<P0main<Pacc, where Pgmax is the highest pressure of the passive water injection pipeline, i.e., the first pressure value, and Pacc is a pressure of the constant pressure source, i.e., the second pressure value.

In other words, in this example, the medium space is a passive water injection pipeline, the pressure source is a constant pressure source. That is the first pressure value is the highest pressure of the passive water injection pipeline, and the second pressure value is a pressure of the constant pressure source.

In the example, the two-position three-way control valve and the main valve are combined to form an isolation valve for a passive water injection pipeline of a nuclear power plant, where the main valve body of the main valve has a sealed cavity and a valve cavity, the valve core is slidably disposed in the main valve, and the valve core is slidable in the main valve body under an action of a pressure of a medium entering the sealed cavity, so as to open or close the valve cavity. The two-position three-way control valve has a first input port communicated with the primary loop coolant, a second input port communicated with a constant pressure source, and an output port communicated with the sealed cavity of the main valve. An opening setting value P₀ₘₐᵢₙ of the main valve satisfies: P_{gmax}<P₀ₘₐᵢₙ<P_{acc}, so that:

When the primary loop pressure is normal (about 15.5MPa), the two-position three-way control valve is switched to the first state (in which the output port of the three-position four-way control valve is communicated with the first input port), in which case the pressure in the sealed cavity of the main valve is the primary loop pressure, which is far greater than the opening setting value P₀ₘₐᵢₙ of the main valve, so that the main valve is closed and isolation of the main valve during normal operation of the primary loop is realized. When the primary loop has a fault which causes a pressure drop to below the opening setting value P₀ₘₐᵢₙ of the main valve, the main valve is automatically opened, thereby enabling a gravity water injection function.

When the main valve is not expected to be opened during shutdown refueling (where the primary loop pressure Prcs is between P₀ₘₐᵢₙ and Pacc, will be reduced to a normal pressure), the two-position three-way control valve is switched to the second state (in which the output port of the three-position four-way control valve is communicated with the second input port), in which case the pressure in the sealed cavity of the main valve is a constant pressure source pressure (e.g., about 4 to 5MPa for a accumulator), which is greater than the opening setting value P₀ₘₐᵢₙ of the main valve, so that the main valve is closed and isolation of the main valve under a low primary loop pressure is realized.

While satisfying the nuclear power gravity water injection function, this isolation valve further has the following technical advantages:
1) When the valve is in a standby state, the valve can be automatically opened as long as the primary loop pressure satisfies the condition without any external energy input.
2) Effective isolation is guaranteed: effective isolation of the valve can be guaranteed in various operating states of a power plant.
3) After being opened, the valve can be kept in an always open state without any power source.
4) After being opened, the valve can recover the isolation function by switching states of the control valve.

It should be further noted that other parts of the isolation valve in this example are the same as those of the isolation valve for a passive water injection pipeline of a nuclear power plant in the second embodiment, and thus are not described in detail here.

It will be appreciated that the above implementations are merely exemplary implementations for the purpose of illustrating the principle of the present disclosure, and the present disclosure is not limited thereto. Various modifications and improvements can be made by a person having ordinary skill in the art without departing from the spirit and essence of the disclosure. Accordingly, all of the modifications and improvements also fall into the protection scope of the disclosure.

## Claims

1. A primary loop hydraulic pressure relief valve set of a nuclear power plant, **characterized in** comprising: a main valve (1-2) and a three-position four-way control valve (1-1), wherein
the main valve (1-2) comprises: a main valve body and a valve core, the main valve body has a sealed cavity (1-215) and a valve cavity, wherein the valve cavity is configured to communicate a primary loop coolant with atmosphere, the valve core has one end in the sealed cavity (1-215) and the other end in the valve cavity (1-24), and the valve core is slidable in the main valve body under an action of a pressure of a medium entering the sealed cavity (1-215), so as to open or close the valve cavity;
the three-position four-way control valve (1-1) has a first input port (1-17), a second input port (1-18), a third input port (1-19), and an output port (1-16), wherein the output port (1-16) is communicated with the sealed cavity (1-215), the first input port (1-17) is communicated with an atmospheric pressure source, the second input port (1-18) is communicated with the primary loop coolant, and the third input port (1-19) is communicated with a constant pressure source; and
the three-position four-way control valve (1-1) has a first state in which the output port (1-16) is communicated with the first input port (1-17) and disconnected from both the second input port (1-18) and the third input port (1-19), a second state in which the output port (1-16) is communicated with the second input port (1-18) and disconnected from both the first input port (1-17) and the third input port (1-19), and a third state in which the output port (1-16) is communicated with the third input port (1-19) and disconnected from both the first input port (1-17) and the second input port (1-18), and the three-position four-way control valve is switchable between the first, second and third states to change the medium entering the sealed cavity (1-215) and a pressure thereof, wherein a pressure setting value P₀ₘₐᵢₙ at which the medium entering the sealed cavity (1-215) opens the main valve (1-2) satisfies: P0<P₀ₘₐᵢₙ<Pacc, where P0 is an atmospheric pressure, and Pacc is a pressure of the constant pressure source.

2. The primary loop hydraulic pressure relief valve set of a nuclear power plant according to claim 1, **characterized in that**
the three-position four-way control valve (1-1) comprises a control valve body (1-110), a control piston assembly, a first solenoid valve (1-13), and a second solenoid valve (1-14);
the control valve body (1-110) has a main chamber (1-15), a first side chamber (1-11), and a second side chamber (1-12), wherein the first side chamber (1-11) and the second side chamber (1-12) are disposed at two ends of the main chamber (1-15), respectively, the control piston assembly is disposed in the main chamber (1-15), the first solenoid valve (1-13) is disposed in the first side chamber (1-11), and the second solenoid valve (1-14) is disposed in the second side chamber (1-12);
the first input port (1-17), the second input port (1-18), the third input port (1-19) and the output port (1-16) are all disposed on the control valve body (1-110) and communicated with the main chamber (1-15), the control piston assembly comprises a control piston rod (1-112) and a plurality of control pistons (1-111) fixed on the control piston rod (1-112), wherein the plurality of control pistons (1-111) are sequentially and sealedly arranged in the main chamber (1-15) in an axial direction of the control piston rod (1-112) in a slidable manner to divide the main chamber (1-15) into a plurality of sub-chambers, while two ends of the control piston rod (1-112) both extend out of the main chamber (1-15), with one end connected to the first solenoid valve (1-13) and the other end connected to the second solenoid valve (1-14); and
the output port (1-16) is located on one side of a radial direction of the control piston rod (1-112), while the first input port (1-17), the second input port (1-18) and the third input port (1-19) are all located on the other side of the radial direction of the control piston rod (1-112) and sequentially arranged in the axial direction of the piston rod, so that when the first solenoid valve (1-13) is powered on, the control piston assembly is driven toward the second solenoid valve (1-14) to communicate the output port (1-16) with only the third input port (1-19) through one of the sub-chambers to enable the third state of the three-position four-way control valve (1-1); when the second solenoid valve (1-14) is powered on, the control piston assembly is driven toward the first solenoid valve (1-13) to communicate the output port (1-16) with only the first input port (1-17) through one of the sub-chambers to enable the first state of the three-position four-way control valve (1-1); and when the first solenoid valve (1-13) and the second solenoid valve (1-14) are both powered off, the control piston assembly is moved axially to communicate the output port (1-16) with only the second input port (1-18) through one of the sub-chambers to enable the second state of the three-position four-way control valve (1-1).

3. The primary loop hydraulic pressure relief valve set of a nuclear power plant according to claim 2, **characterized in that**
five control pistons (1-111) are provided and configured to divide the main chamber (1-15) into a first sub-chamber, a second sub-chamber, a third sub-chamber, a fourth sub-chamber, a fifth sub-chamber and a sixth sub-chamber in sequence;
when the three-position four-way control valve (1-1) is in the first state, the output port (1-16) is communicated with only the first input port (1-17) through the third sub-chamber;
when the three-position four-way control valve (1-1) is in the third state, the output port (1-16) is communicated with only the third input port (1-19) through the fourth sub-chamber; and
when the three-position four-way control valve (1-1) is in the second state, the output port (1-16) is communicated with only the second input port (1-18) through the third sub-chamber.

4. The primary loop hydraulic pressure relief valve set of a nuclear power plant according to claim 2, **characterized in that**
the first solenoid valve (1-13) comprises a first sucker (1-114), a first coil (1-113), and a first return spring (1-115), and the second solenoid valve (1-14) comprises a second sucker (1-117), a second coil (1-116) and a second return spring (1-118), wherein the first coil (1-113) and the second coil (1-116) are respectively disposed on outer end walls at two ends of the main chamber (1-15) in the axial direction of the control piston rod (1-112), the first sucker (1-114) and the second sucker (1-117) are respectively disposed at two ends of the control piston rod (1-112), the first return spring (1-115) is connected between a chamber wall of the first side chamber (1-11) and the first sucker (1-114), and the second return spring (1-118) is connected between a chamber wall of the second side chamber (1-12) and the second sucker (1-117);
when the first solenoid valve (1-13) is powered on, the first sucker (1-114) is moved toward the first coil (1-113) to be fixedly connected to the first coil, so as to drive the control piston assembly to move toward the second solenoid valve (1-14) to enable the third state of the three-position four-way control valve (1-1), and during the movement of the control piston assembly toward the second solenoid valve (1-14), the first return spring (1-115) is stretched and the second return spring (1-118) is compressed;
when the second solenoid valve (1-14) is powered on, the second sucker (1-117) is moved toward the second coil (1-116) to be fixedly connected to the second coil, so as to drive the control piston assembly to move toward the first solenoid valve (1-13) to enable the first state of the three-position four-way control valve (1-1), and during the movement of the control piston assembly toward the first solenoid valve (1-13), the second return spring (1-118) is stretched and the first return spring (1-115) is compressed; and
when the first solenoid valve (1-13) and the second solenoid valve (1-14) are both powered off, the first return spring (1-115) and the second return spring (1-118) are both reset to drive the control piston assembly to move axially to enable the second state of the three-position four-way control valve (1-1).

5. The primary loop hydraulic pressure relief valve set of a nuclear power plant according to claim 1, **characterized in that**
a plurality of three-position four-way control valves (1-1) are provided and arranged in parallel.

6. The primary loop hydraulic pressure relief valve set of a nuclear power plant according to any one of claims 2 to 5, **characterized in that** a plurality of first solenoid valves (1-13) and a plurality of second solenoid valves (1-14) are provided, the plurality of first solenoid valves (1-13) are arranged in series, and the plurality of second solenoid valves (1-14) are also arranged in series.

7. The primary loop hydraulic pressure relief valve set of a nuclear power plant according to any one of claims 1 to 5, **characterized in that** the valve core comprises a main piston assembly and a main spring (1-26), wherein the main piston assembly comprises a main piston rod, a main piston (1-25) and a valve disc (1-28), the main piston rod is slidably disposed in the main valve body, the main piston (1-25) is fixed on the main piston rod and located in the sealed cavity (1-215), the valve disc (1-28) is fixed on the main piston rod and located in the valve cavity (1-24), and the main spring (1-26) is located in the sealed cavity (1-215) and compressed between the main piston (1-25) and a bottom wall of the valve cavity (1-24).

8. The primary loop hydraulic pressure relief valve set of a nuclear power plant according to claim 7, **characterized in that**
the valve cavity (1-24) is located below the sealed cavity (1-215), the main valve body is provided with a valve inlet (1-29) and a valve outlet (1-211) each communicated with the valve cavity, the valve inlet (1-29) is provided at a bottom of the main valve body and configured to be communicated with the primary loop coolant, the valve outlet (1-211) is provided on a side surface of the main valve body and configured to be communicated with atmosphere, and the main piston assembly is vertically and slidably disposed in the main valve body to open or close the valve inlet (1-29); and
the pressure setting value P₀ₘₐᵢₙ at which the medium entering the sealed cavity (1-215) opens the main valve (1-2) further satisfies: P₀ₘₐᵢₙ×(A1-A2)+G=F, where A1 is a cross sectional area of the main piston (1-25), A2 is a cross sectional area of the valve disc (1-28), G is a gravity of the main piston assembly, and F is a spring force of the main spring when the main valve (1-2) is closed.

9. The primary loop hydraulic pressure relief valve set of a nuclear power plant according to claim 7, **characterized in that** the main spring (1-26) is disposed around the main piston rod.

10. The primary loop hydraulic pressure relief valve set of a nuclear power plant according to claim 7, **characterized in that**
an outer diameter of the valve disc (1-28) is gradually reduced from top to bottom so that an outer wall of the valve disc (1-28) forms a first conical surface; and
a nozzle (1-210) is installed at the valve inlet (1-29), wherein a second conical surface matched with the first conical surface is provided at an upper part of an inner wall of the nozzle (1-210), and when the main piston assembly is moved downward to make the first conical surface matched with the second conical surface, the valve disc (1-28) closes the valve inlet (1-29).

11. The primary loop hydraulic pressure relief valve set of a nuclear power plant according to claim 7, **characterized in that**
the main valve body comprises a valve housing (1-21), a valve seat (1-22) and a valve core (1-23) which are fixedly connected in sequence from bottom to top, and an inner cavity of the valve housing (1-21) forms the valve cavity (1-24); and
a first groove is provided in a top surface of the valve seat (1-22), a lower part of the valve core (1-23) extends into the first groove to be sealedly connected to a groove wall of the first groove, a second groove is provided in a bottom surface of the valve core (1-23), and a groove wall of the second groove encloses the sealed cavity (1-215) with a bottom wall of the first groove.

12. The primary loop hydraulic pressure relief valve set of a nuclear power plant according to claim 11, **characterized in that**
the main piston rod comprises a working section (1-27) and a positioning section (1-213), wherein the working section (1-27) has a lower end fixedly connected to the valve disc (1-28), and an upper end passing through the valve seat (1-22) into the sealed cavity (1-215) and fixedly connected to the main piston (1-25), and the main spring (1-26) is disposed around the working section (1-27); and
a sealed exhaust cavity (1-212) is provided at an upper part of the valve core (1-23), a top of the valve core (1-23) is provided with a valve cover (1-216) for opening or closing the exhaust cavity (1-212), and the positioning section (1-213) has a lower end fixedly connected to a piston, and an upper end passing through the valve core (1-23) into the exhaust cavity (1-212).

13. A valve set for primary loop pressure relief and discharge, **characterized in** comprising: a main valve (2-2) and a control valve assembly, wherein the main valve (2-2) comprises: a main valve body and a main valve core, the main valve body has a main sealed cavity (2-215) and a main valve cavity (2-24), the main valve cavity (2-24) is configured to communicate a primary loop coolant with atmosphere, the main valve core has one end in the main sealed cavity (2-215) and the other end in the main valve cavity (2-24), and the main valve core is slidable in the main valve body under an action of a pressure of a medium entering the main sealed cavity (2-215), so as to open or close the main valve cavity (2-24);
the control valve assembly comprises a pilot valve (2-1), a first control valve (2-3) and a second control valve (2-4);
the pilot valve (2-1) comprises a pilot valve body and a pilot valve core, wherein the pilot valve body is provided with a first sealed cavity (2-17), a first channel, a second channel and a second sealed cavity (2-112) arranged in sequence, the pilot valve core comprises a driving structure and a valve core structure, the driving structure has one end in the first sealed cavity (2-17) and the other end in the second sealed cavity (2-112), the valve core structure is connected to the driving structure and has one end in the first channel and the other end in the second channel, the driving structure is slidable in the pilot valve body under an action of a pressure difference of a medium entering the first sealed cavity (2-17) and a medium entering the second sealed cavity (2-112), so as to drive the valve core structure to open the first channel and close the second channel, or close the first channel and open the second channel, and outlets of the first channel and the second channel are both communicated with the main sealed cavity (2-215);
the first control valve (2-3) has a first input port (2-313), a second input port (2-314), and a first output port (2-315), wherein the first output port (2-315) is communicated with the first sealed cavity (2-17), the first input port (2-313) is communicated with a primary loop volume control tank or pressure relief tank, and the second input port (2-314) is communicated with a constant pressure source;
the second control valve (2-4) has a third input port (2-413), a fourth input port (2-414), and a second output port (2-415), wherein the second output port (2-415) is respectively communicated with an inlet of the first channel and the second sealed cavity (2-112), the third input port (2-413) is communicated with a constant pressure source, and the fourth input port (2-414) is communicated with the primary loop coolant;
when the first control valve (2-3) is powered on, the first output port (2-315) is communicated with the first input port (2-313) and disconnected from the second input port (2-314), and when the first control valve (2-3) is powered off, the first output port (2-315) is communicated with the second input port (2-314) and disconnected from the first input port (2-313);
when the second control valve (2-4) is powered on, the second output port (2-415) is communicated with the third input port (2-413) and disconnected from the fourth input port (2-414), and when the second control valve (2-4) is powered off, the second output port (2-415) is communicated with the fourth input port (2-414) and disconnected from the third input port (2-413);
a pressure setting value P₀ₘₐᵢₙ at which the medium entering the main sealed cavity (2-215) opens the main valve (2-2) satisfies: P0<P₀ₘₐᵢₙ<Pacc, where P0 is an atmospheric pressure, and Pacc is a pressure of the constant pressure source; and
a pressure setting value P_{0twin} at which the medium entering the second sealed cavity (2-112) opening the pilot valve (2-1) satisfies: Pacc×A₁=P_{0twin}×A₂, where Pacc is a pressure of the constant pressure source, A₁ is a cross sectional area of a first pilot piston (2-15), A₂ is a cross sectional area of a second pilot piston (2-110), and A₂<A₁.

14. The valve set for primary loop pressure relief and discharge according to claim 13, **characterized in that** the first control valve (2-3) comprises a first control valve body (2-31), a first control piston assembly (2-32), and a first solenoid valve (2-33);
the first control valve body (2-31) has a first main chamber (2-311), and a first side chamber (2-312), the first control piston assembly (2-32) is disposed in the first main chamber (2-311), the first solenoid valve (2-33) is disposed in the first side chamber (2-312), the first input port (2-313), the second input port (2-314) and the first output port (2-315) are all disposed on the first control valve body (2-31) and communicated with the first main chamber (2-311), and the first control piston assembly (2-32) comprises a first control piston rod (2-321) and a plurality of first control pistons (2-322) fixed on the first control piston rod (2-321), wherein the plurality of first control pistons (2-322) are sequentially and sealedly arranged in the first main chamber (2-311) in an axial direction of the first control piston rod (2-321) in a slidable manner to divide the first main chamber (2-311) into a plurality of first sub-chambers, and one end of the first control piston rod (2-321) extends out of the first main chamber (2-311) to be connected to the first solenoid valve (2-33);
the first output port (2-315) is located on one side of a radial direction of the first control piston rod (2-321), while the first input port (2-313) and the second input port (2-314) are both located on the other side of the radial direction of the first control piston rod (2-321); when the first solenoid valve (2-33) is powered on, the first control piston assembly (2-32) is driven to be moved axially to communicate the first output port (2-315) with only the first input port (2-313) through one of the first sub-chambers, while the second input port (2-314) is located in an adjacent another first sub-chamber to enable a first power-on state of the first control valve (2-3); and when the first solenoid valve (2-33) is powered off, the first control piston assembly (2-32) is driven to be moved axially in an opposite direction to communicate the first output port (2-315) with only the second input port (2-314) through one of the first sub-chambers, while the first input port (2-313) is located in an adjacent another first sub-chamber to enable a first power-off state of the first control valve (2-3);
the second control valve (2-4) comprises a second control valve body (2-41), a second control piston assembly (2-42), and a second solenoid valve (2-43);
the second control valve body (2-41) has a second main chamber (2-411), and a second side chamber (2-412), the second control piston assembly (2-42) is disposed in the second main chamber (2-411), the second solenoid valve (2-43) is disposed in the second side chamber (2-412), the third input port (2-413), the fourth input port (2-414) and the second output port (2-415) are all disposed on the second control valve body (2-41) and communicated with the second main chamber (2-411), and the second control piston assembly (2-42) comprises a second control piston rod (2-421) and a plurality of second control pistons (2-422) fixed on the second control piston rod (2-421), wherein the plurality of second control pistons (2-422) are sequentially and sealedly arranged in the second main chamber (2-411) in an axial direction of the second control piston rod (2-421) in a slidable manner to divide the second main chamber (2-411) into a plurality of second sub-chambers, and one end of the second control piston rod (2-421) extends out of the second main chamber (2-411) to be connected to the second solenoid valve (2-43); and
the second output port (2-415) is located on one side of a radial direction of the second control piston rod (2-421), while the third input port (2-413) and the fourth input port (2-414) are both located on the other side of the radial direction of the second control piston rod (2-421); when the second solenoid valve (2-43) is powered on, the second control piston assembly (2-42) is driven to be moved axially to communicate the second output port (2-415) with only the third input port (2-413) through one of the second sub-chambers, while the fourth input port (2-414) is located in an adjacent another second sub-chamber to enable a second power-on state of the second control valve (2-4); and when the second solenoid valve (2-43) is powered off, the second control piston assembly (2-42) is driven to be moved axially in an opposite direction to communicate the second output port (2-415) with only the fourth input port (2-414) through one of the second sub-chambers, while the third input port (2-413) is located in an adjacent another second sub-chamber to enable a second power-off state of the second control valve (2-4).

15. The valve set for primary loop pressure relief and discharge according to claim 14, **characterized in that**
the first solenoid valve (2-33) comprises a first sucker (2-331), a first coil (2-332), and a first return spring (2-333), wherein the first coil (2-332) is fixed on an outer end wall of the first main chamber (2-311), the first sucker (2-331) is fixed on one end of the first control piston rod (2-321) extending into the first side chamber (2-312), and the first return spring (2-333) is connected between a chamber wall of the first side chamber (2-312) and the first sucker (2-331);
when the first solenoid valve (2-33) is powered on, the first sucker (2-331) is moved toward the first coil (2-332) to be fixedly connected to the first coil, so that the first control piston assembly (2-32) is driven to be moved axially to enable the first power-on state of the first control valve (2-3), while the first return spring (2-333) is stretched; and when the first solenoid valve (2-33) is powered off, the first sucker (2-331) is disconnected from the first coil (2-332), and the first return spring (2-333) is reset, so that the first control piston assembly (2-32) is driven to be moved axially to enable the first power-off state of the first control valve (2-3);
the second solenoid valve (2-43) comprises a second sucker (2-431), a second coil (2-432) and a second return spring (2-433), wherein the second coil (2-432) is fixed on an outer end wall of the second main chamber (2-411), the second sucker (2-431) is fixed on one end of the second control piston rod (2-421) extending into the second side chamber (2-412), and the second return spring (2-433) is connected between a chamber wall of the second side chamber (2-412) and the second sucker (2-431); and
when the second solenoid valve (2-43) is powered on, the second sucker (2-431) is moved toward the second coil (2-432) to be fixedly connected to the second coil, so that the second control piston assembly (2-42) is driven to be moved axially to enable the second power-on state of the second control valve (2-4), while the second return spring (2-433) is stretched; and when the second solenoid valve (2-43) is powered off, the second sucker (2-431) is disconnected from the second coil (2-432), and the second return spring (2-433) is reset, so that the second control piston assembly (2-42) is driven to be moved axially to enable the second power-off state of the second control valve (2-4).

16. The valve set for primary loop pressure relief and discharge according to claim 13, **characterized in that** a plurality of control valve assemblies are provided, each of which has a first channel outlet and a second channel outlet both communicated with the main sealed cavity (2-215) of the main valve (2-2).

17. The valve set for primary loop pressure relief and discharge according to claim 13, **characterized in that** a plurality of first solenoid valves (2-33) are provided in the first control valve (2-3), each of which has a first sucker (2-331) fixedly connected to the first control piston rod (2-321), and
a plurality of second solenoid valves (2-43) are provided in the second control valve (2-4), each of which has a second sucker (2-431) fixedly connected to the second control piston rod (2-421).

18. The valve set for primary loop pressure relief and discharge according to any one of claims 13 to 17, **characterized in that** the main valve core comprises a main piston assembly and a main spring (2-26), wherein the main piston assembly comprises a main piston rod, a main piston (2-25) and a valve disc (2-28), the main piston rod is slidably disposed in the main valve body, the main piston (2-25) is fixed on the main piston rod and located in the main sealed cavity (2-215), the valve disc (2-28) is fixed on the main piston rod and located in the main valve cavity (2-24), and the main spring (2-26) is located in the main sealed cavity (2-215) and compressed between the main piston (2-25) and a bottom wall of the main valve cavity (2-24).

19. The valve set for primary loop pressure relief and discharge according to claim 18, **characterized in that**
the main valve cavity (2-24) is located below the main sealed cavity (2-215), the main valve body is provided with a valve inlet (2-29) and a valve outlet (2-211) each communicated with the main valve cavity, the valve inlet (2-29) is provided at a bottom of the main valve body and configured to be communicated with the primary loop coolant, the valve outlet (2-211) is provided on a side surface of the main valve body and configured to be communicated with atmosphere, and the main piston assembly is vertically and slidably disposed in the main valve body; and
the pressure setting value P₀ₘₐᵢₙ at which the medium entering the main sealed cavity (2-215) opens the main valve (2-2) further satisfies: P₀ₘₐᵢₙ×(A1-A2)+G=F, where A1 is a cross sectional area of the main piston (2-25), A2 is a cross sectional area of the valve disc (2-28), G is a gravity of the main piston assembly, and F is a spring force of the main spring when the main valve (2-2) is closed.

20. The valve set for primary loop pressure relief and discharge according to claim 18, **characterized in that**
an outer diameter of the valve disc (2-28) is gradually reduced from top to bottom so that an outer wall of the valve disc (2-28) forms a first conical surface; and
a nozzle (2-210) is installed at the valve inlet (2-29), a second conical surface matched with the first conical surface is provided at an upper part of an inner wall of the nozzle (2-210), and when the main piston assembly is moved downward to make the first conical surface matched with the second conical surface, the valve disc (2-28) closes the valve inlet (2-29).

21. The valve set for primary loop pressure relief and discharge according to claim 18, **characterized in that**
the main valve body comprises a main valve housing (2-21), a lower valve seat (2-22) and an upper valve seat (2-23) which are fixedly connected in sequence from bottom to top, and an inner cavity of the main valve housing (2-21) forms the main valve cavity (2-24); and
a first groove is provided in a top surface of the lower valve seat (2-22), a lower part of the upper valve seat (2-23) extends into the first groove to be sealedly connected to a groove wall of the first groove, a second groove is provided in a bottom surface of the upper valve seat (2-23), and a groove wall of the second groove encloses the main sealed cavity (2-215) with a bottom wall of the first groove.

22. The valve set for primary loop pressure relief and discharge according to claim 21, **characterized in that** the main piston rod comprises a working section (2-27) and a positioning section (2-213), wherein the working section (2-27) has a lower end fixedly connected to the valve disc (2-28), and an upper end passing through the lower valve seat (2-22) into the main sealed cavity (2-215) and fixedly connected to the main piston (2-25), and the main spring (2-26) is disposed around the working section (2-27); and
a sealed exhaust cavity (2-212) is provided at an upper part of the upper valve seat (2-23), a top of the upper valve seat (2-23) is provided with a valve cover (2-216) for opening or closing the exhaust cavity (2-212), and the positioning section (2-213) has a lower end fixedly connected to a piston, and an upper end passing through the upper valve seat (2-23) into the exhaust cavity (2-212).

23. The valve set for primary loop pressure relief and discharge according to any one of claims 13 to 17, **characterized in that**
the driving structure comprises a first pilot piston (2-15), a second pilot piston (2-110) and a pilot piston rod (2-16), wherein the pilot piston rod (2-16) is axially and slidably disposed in the pilot valve body and connected between the first pilot piston (2-15) and the second pilot piston (2-110), the first pilot piston (2-15) is sealedly and slidably disposed in the first sealed cavity (2-17), and the second pilot piston (2-110) is sealedly and slidably disposed in the second sealed cavity (2-112); and
the valve core structure comprises a first pilot valve, a second pilot valve and a pilot valve stem (2-111), wherein the pilot valve stem (2-111) is arranged in parallel with and connected to the pilot piston rod (2-16), axially and slidably disposed in the pilot valve body and connected between the first pilot valve and the second pilot valve, the first pilot valve is disposed in the first channel and configured to open or close the first channel, and the second pilot valve is disposed in the second channel and configured to open or close the second channel.

24. The valve set for primary loop pressure relief and discharge according to claim 23, **characterized in that**
the first pilot valve comprises a first valve plate (2-14) and a first valve core assembly (2-117), wherein the first valve plate (2-14) is fixed in and configured to close the first channel, and provided with a first valve hole, while the first valve core assembly (2-117) is slidably disposed in the first channel and matched with the first valve hole;
the second pilot valve comprises a second valve plate (2-19) and a second valve core assembly (2-118), wherein the second valve plate (2-19) is fixed in and configured to close the second channel, and provided with a second valve hole, while the second valve core assembly (2-118) is slidably disposed in the second channel and matched with the second valve hole; and
the pilot valve stem (2-111) is configured to connect the first valve core assembly (2-117) and the second valve core assembly (2-118), and when the pilot valve stem is moved axially, the first valve core assembly (2-117) is driven to open the first valve hole and the second valve core assembly (2-118) is driven to close the second valve hole, or the first valve core assembly (2-117) is driven to close the first valve hole and the second valve core assembly (2-118) is driven to open the second valve hole.

25. The valve set for primary loop pressure relief and discharge according to claim 24, **characterized in that**
the first channel comprises a first inlet section, a first pilot valve cavity (2-120), and a first outlet section which are communicated in sequence, wherein the first pilot valve is located in the first pilot valve cavity (2-120), and the first pilot valve cavity (2-20) has a space for the first valve core assembly (2-117) to slide; and
the second channel comprises a second inlet section, a second pilot valve cavity (2-121), and a second outlet section which are communicated in sequence, wherein the second outlet section is communicated with the first outlet section, the second pilot valve is located in the second pilot valve cavity (2-121), and the second pilot valve cavity (2-121) has a space for the second valve core assembly (2-118) to slide.

26. The valve set for primary loop pressure relief and discharge according to claim 23, **characterized in that** the pilot piston rod (2-16) is connected to the pilot valve stem (2-111) by a pilot dial (2-119), and the pilot valve body is provided with a slot (2-122) for axial movement of the pilot dial (2-119) along the pilot piston rod (2-16).

27. An isolation valve for a passive water injection pipeline of a nuclear power plant, **characterized in** comprising: a main valve (3-2) and a two-position three-way control valve (3-1), wherein
the main valve (3-2) comprises: a main valve body and a valve core, the main valve body has a sealed cavity (3-215) and a valve cavity, wherein the valve cavity is configured to communicate a passive water injection pipeline and a primary loop coolant system, the valve core has one end in the sealed cavity (3-215) and the other end in the valve cavity (3-24), and the valve core is slidable in the main valve body under an action of a pressure of a medium entering the sealed cavity (3-215), so as to open or close the valve cavity;
the two-position three-way control valve (3-1) has a first input port (3-112), a second input port (3-113), and an output port (3-111), wherein the output port (3-111) is communicated with the sealed cavity (3-215), the first input port (3-112) is communicated with the primary loop coolant, and the second input port is communicated with a constant pressure source; and
the two-position three-way control valve (3-1) has a first state in which the output port (3-111) is communicated with the first input port (3-112) and disconnected from the second input port (3-113), and a second state in which the output port (3-111) is communicated with the second input port (3-113) and disconnected from the first input port (3-112), and the two-position three-way control valve is switchable between the first and second states to change the medium entering the sealed cavity (3-215) and a pressure thereof, wherein a pressure setting value P0main at which the medium entering the sealed cavity (3-215) opens the main valve (3-2) satisfies: Pgmax < P0main < Pacc, where Pgmax is the highest pressure of the passive water injection pipeline, and Pacc is a pressure of the constant pressure source.

28. The isolation valve for a passive water injection pipeline of a nuclear power plant according to claim 27, **characterized in that**
the two-position three-way control valve (3-1) comprises a control valve body (3-11), a control piston assembly, a first solenoid valve, and a second solenoid valve;
the control valve body (3-11) has a main chamber (3-12), a first side chamber (3-13), and a second side chamber (3-14), wherein the first side chamber (3-13) and the second side chamber (3-14) are disposed at two ends of the main chamber (3-12), respectively, the control piston assembly is disposed in the main chamber (3-12), the first solenoid valve is disposed in the first side chamber (3-13), and the second solenoid valve is disposed in the second side chamber (3-14);
the first input port (3-112), the second input port (3-113) and the output port (3-111) are all disposed on the control valve body (3-11) and communicated with the main chamber (3-12), the control piston assembly comprises a control piston rod (3-15) and a plurality of control pistons (3-16) fixed on the control piston rod (3-15), wherein the plurality of control pistons (3-16) are sequentially and sealedly arranged in the main chamber (3-12) in an axial direction of the control piston rod (3-15) in a slidable manner to divide the main chamber (3-12) into a plurality of sub-chambers, while two ends of the control piston rod (3-15) both extend out of the main chamber (3-12), with one end connected to the first solenoid valve and the other end connected to the second solenoid valve; and
the output port (3-111) is located on one side of a radial direction of the control piston rod (3-15), while the first input port (3-112) and the second input port (3-113) are both located on the other side of the radial direction of the control piston rod (3-15); when the first solenoid valve is powered on, the control piston assembly is driven toward the second solenoid valve to communicate the output port (3-111) with only the second input port (3-113) through one of the sub-chambers to enable the second state of the two-position three-way control valve (3-1); and when the second solenoid valve is powered on, the control piston assembly is moved toward the first solenoid valve to communicate the output port (3-111) with only the first input port (3-112) through one of the sub-chambers to enable the first state of the two-position three-way control valve (3-1).

29. The isolation valve for a passive water injection pipeline of a nuclear power plant according to claim 28, **characterized in that**
four control pistons (3-16) are provided and configured to divide the main chamber (3-12) into a first sub-chamber, a second sub-chamber, a third sub-chamber, a fourth sub-chamber and a fifth sub-chamber in sequence;
when the two-position three-way control valve (3-1) is in the first state, the output port (3-111) is communicated with only the first input port (3-112) through the third sub-chamber; and
when the two-position three-way control valve (3-1) is in the second state, the output port (3-111) is communicated with only the second input port (3-113) through the third sub-chamber.

30. The isolation valve for a passive water injection pipeline of a nuclear power plant according to claim 28, **characterized in that**
the first solenoid valve comprises a first sucker (3-17) and a first coil (3-18), and the second solenoid valve comprises a second sucker (3-19) and a second coil (3-110), wherein the first coil (3-18) and the second coil (3-110) are respectively disposed on outer end walls at two ends of the main chamber in the axial direction of the control piston rod, and the first sucker (3-17) and the second sucker (3-19) are respectively disposed at two ends of the control piston rod (3-15); and
when the first solenoid valve is powered on, the first sucker (3-17) is moved toward the first coil (3-18) to be fixedly connected to the first coil, so as to drive the control piston assembly to move toward the second solenoid valve to enable the second state of the two-position three-way control valve (3-1), and when the second solenoid valve is powered on, the second sucker (3-19) is moved toward the second coil (3-110) to be fixedly connected to the second coil, so as to drive the control piston assembly to move toward the first solenoid valve to enable the first state of the two-position three-way control valve (3-1).

31. The isolation valve for a passive water injection pipeline of a nuclear power plant according to claim 27, **characterized in that**
a plurality of two-position three-way control valves (3-1) are provided and arranged in parallel.

32. The isolation valve for a passive water injection pipeline of a nuclear power plant according to any one of claims 28 to 31, **characterized in that** a plurality of first solenoid valves and a plurality of second solenoid valves are provided, the plurality of first solenoid valves are arranged in series, and the plurality of second solenoid valves are also arranged in series.

33. The isolation valve for a passive water injection pipeline of a nuclear power plant according to any one of claims 27 to 31, **characterized in that** the valve core comprises a main piston assembly and a main spring (3-26), wherein the main piston assembly comprises a main piston rod, a main piston (3-25) and a valve disc (3-28), the main piston rod is slidably disposed in the main valve body, the main piston (3-25) is fixed on the main piston rod and located in the sealed cavity (3-215), the valve disc (3-28) is fixed on the main piston rod and located in the valve cavity (3-24), and the main spring (3-26) is located in the sealed cavity (3-215) and compressed between the main piston (3-25) and a bottom wall of the valve cavity (3-24).

34. The isolation valve for a passive water injection pipeline of a nuclear power plant according to claim 33, **characterized in that** the valve cavity (3-24) is located below the sealed cavity (3-215), the main valve body is provided with a valve inlet (3-29) and a valve outlet (3-211) each communicated with the valve cavity (3-24), the valve inlet (3-29) is provided at a bottom of the main valve body and configured to be communicated with the primary loop coolant system, the valve outlet (3-211) is provided on a side surface of the main valve body and configured to be communicated with a gravity water injection pipeline, and the main piston assembly is vertically and slidably disposed in the main valve body to open or close the valve inlet (3-29); and
the pressure setting value P0main at which the medium entering the sealed cavity (3-215) opens the main valve (3-2) further satisfies: P0main×A1-(P0main-Pgmax) ×A2+G=F, where A1 is a cross sectional area of the main piston (3-25), A2 is a cross sectional area of the valve disc (3-28), G is a gravity of the main piston assembly, F is a spring force of the main spring when the main valve (3-2) is closed, and Pgmax is the highest pressure of the gravity water injection pipeline.

35. The isolation valve for a passive water injection pipeline of a nuclear power plant according to claim 33, **characterized in that** the main spring (3-26) is disposed around the main piston rod.

36. The isolation valve for a passive water injection pipeline of a nuclear power plant according to claim 33, **characterized in that**
an outer diameter of the valve disc (3-28) is gradually reduced from top to bottom so that an outer wall of the valve disc (3-28) forms a first conical surface; and
a nozzle (3-210) is installed at the valve inlet (3-29), wherein a second conical surface matched with the first conical surface is provided at an upper part of an inner wall of the nozzle (3-210), and when the main piston assembly is moved downward to make the first conical surface matched with the second conical surface, the valve disc (3-28) closes the valve inlet (3-29).

37. The isolation valve for a passive water injection pipeline of a nuclear power plant according to claim 33, **characterized in that**
the main valve body comprises a valve housing (3-21), a valve seat (3-22) and a valve core (3-23) which are fixedly connected in sequence from bottom to top, and an inner cavity of the valve housing (3-21) forms the valve cavity (3-24); and
a first groove is provided in a top surface of the valve seat (3-22), a lower part of the valve core (3-23) extends into the first groove to be sealedly connected to a groove wall of the first groove, a second groove is provided in a bottom surface of the valve core (3-23), and a groove wall of the second groove encloses the sealed cavity (3-215) with a bottom wall of the first groove.

38. The isolation valve for a passive water injection pipeline of a nuclear power plant according to claim 37, **characterized in that**
the main piston rod comprises a working section (3-27) and a positioning section (3-213), wherein the working section (3-27) has a lower end fixedly connected to the valve disc (3-28), and an upper end passing through the valve seat (3-22) into the sealed cavity (3-215) and fixedly connected to the main piston (3-25), and the main spring (3-26) is disposed around the working section (3-27); and
a sealed exhaust cavity (3-212) is provided at an upper part of the valve core (3-23), a top of the valve core (3-23) is provided with a valve cover (3-216) for opening or closing the exhaust cavity (3-212), and the positioning section (3-213) has a lower end fixedly connected to a piston, and an upper end passing through the valve core (3-23) into the exhaust cavity (3-212).

39. A valve set for safety of a nuclear power plant, **characterized in** comprising: a first valve part and a second valve part, wherein
the first valve part comprises a valve body portion and a valve core portion, the valve body portion has a sealed cavity and a valve cavity, the valve cavity is configured to communicate a primary loop coolant with a medium space, the valve core portion has one end in the sealed cavity and the other end in the valve cavity, and the valve core portion is slidable in the valve body portion under an action of a pressure of a medium entering the sealed cavity, so as to open or close the valve cavity and enable communication or isolation of the primary loop coolant and the medium space;
the second valve part is provided with an output end and input ends, the output end is communicated with the sealed cavity, while two or more input ends are provided; when two input ends are provided, one input end is communicated with the primary loop coolant, and the other input end is communicated with a pressure source; and when more than two input ends are provided, the input ends are communicated with the primary loop coolant, the pressure source and an atmospheric pressure source, respectively;
the second valve part controls a communication state between the output end and the input ends, so that the output end is communicated with one of the input ends;
a pressure setting value P0main at which the medium entering the sealed cavity opens the first valve part satisfies: first pressure value < P0main < second pressure value, where the first pressure value is a pressure value in the medium space, and the second pressure value is a pressure value of the pressure source; and
when a pressure medium output from the output end is greater than the pressure setting value, a valve cavity of the first valve part is opened, and when the pressure medium output from the output end is less than the pressure setting value, the valve cavity of the first valve part is closed.

40. The valve set for safety of a nuclear power plant according to claim 39, **characterized in that** the valve core portion comprises a main piston assembly and a main spring, wherein the main piston assembly comprises a main piston rod, a main piston and a valve disc, the main piston rod is slidably disposed in the valve body portion, the main piston is fixed on the main piston rod and located in the sealed cavity, the valve disc is fixed on the main piston rod and located in the valve cavity, and the main spring is located in the sealed cavity and compressed between the main piston and a bottom wall of the valve cavity.

41. The valve set for safety of a nuclear power plant according to claim 40, **characterized in that** the valve cavity is located below the sealed cavity, the valve body portion is provided with a valve inlet and a valve outlet each communicated with the valve cavity, the valve inlet is provided at a bottom of the valve body portion and configured to be communicated with the primary loop coolant, the valve outlet is provided on a side surface of the valve body portion and configured to be communicated with the medium space, and the main piston assembly is vertically and slidably disposed in the valve body portion to open or close the valve inlet;
the medium space is atmosphere or a passive water injection pipeline;
the pressure setting value P₀ₘₐᵢₙ at which the medium entering the sealed cavity opens the main valve further satisfies: P₀ₘₐᵢₙ×(A1-A2)-β+G=F, where A1 is a cross sectional area of the main piston, A2 is a cross sectional area of the valve disc, G is a gravity of the main piston assembly, F is a spring force of the main spring when the main valve is closed, and β is a pressure coefficient of the medium space; and
when the medium space is atmosphere, β takes a value of 0, and when the medium space is a passive water injection pipeline, β takes a value of Pgmax× A2, where Pgmax is the highest pressure of the passive water injection pipeline.

42. The valve set for safety of a nuclear power plant according to claim 39, which is configured for pressure relief of a primary loop and **characterized in that** the first valve part and the second valve part are a main valve and a three-position four-way control valve, respectively;
the main valve comprises: a main valve body and a valve core, the main valve body has a sealed cavity and a valve cavity, the valve cavity is configured to communicate a primary loop coolant with atmosphere, the valve core has one end in the sealed cavity and the other end in the valve cavity, and the valve core is slidable in the main valve body under an action of a pressure of a medium entering the sealed cavity, so as to open or close the valve cavity;
the three-position four-way control valve has a first input port, a second input port, a third input port and an output port, wherein the output port is communicated with the sealed cavity, the first input port is communicated with an atmospheric pressure source, the second input port is communicated with the primary loop coolant, and the third input port is communicated with a constant pressure source; and
the three-position four-way control valve has a first state in which the output port is communicated with the first input port and disconnected from both the second input port and the third input port, a second state in which the output port is communicated with the second input port and disconnected from both the first input port and the third input port, and a third state in which the output port is communicated with the third input port and disconnected from both the first input port and the second input port, and the three-position four-way control valve is switchable between the first, second and third states to change the medium entering the sealed cavity and a pressure thereof, and a pressure setting value P0main at which the medium entering the sealed cavity opens the main valve satisfies: P0<P0main<Pacc, where P0 is an atmospheric pressure, and Pacc is a pressure of the constant pressure source.

43. The valve set for safety of a nuclear power plant according to claim 39, which is configured for pressure relief of a primary loop and **characterized in that** the first valve part and the second valve part are a main valve and a control valve assembly, wherein
the main valve comprises: a main valve body and a main valve core, the main valve body has a main sealed cavity and a main valve cavity, the main valve cavity is configured to communicate a primary loop coolant with atmosphere, the main valve core has one end in the main sealed cavity and the other end in the main valve cavity, and the main valve core is slidable in the main valve body under an action of a pressure of a medium entering the main sealed cavity, so as to open or close the main valve cavity;
the control valve assembly comprises a pilot valve, a first control valve and a second control valve;
the pilot valve comprises a pilot valve body and a pilot valve core, wherein the pilot valve body is provided with a first sealed cavity, a first channel, a second channel and a second sealed cavity arranged in sequence, the pilot valve core comprises a driving structure and a valve core structure, the driving structure has one end in the first sealed cavity and the other end in the second sealed cavity, the valve core structure is connected to the driving structure and has one end in the first channel and the other end in the second channel, the driving structure is slidable in the pilot valve body under an action of a pressure difference of a medium entering the first sealed cavity and a medium entering the second sealed cavity, so as to drive the valve core structure to open the first channel and close the second channel, or close the first channel and open the second channel, and outlets of the first channel and the second channel are both communicated with the main sealed cavity;
the first control valve has a first input port, a second input port, and a first output port, wherein the first output port is communicated with the first sealed cavity, the first input port is communicated with a primary loop volume control tank or pressure relief tank, and the second input port is communicated with a constant pressure source;
the second control valve has a third input port, a fourth input port, and a second output port, wherein the second output port is respectively communicated with an inlet of the first channel and the second sealed cavity, the third input port is communicated with a constant pressure source, and the fourth input port is communicated with the primary loop coolant;
when the first control valve is powered on, the first output port is communicated with the first input port and disconnected from the second input port, and when the first control valve is powered off, the first output port is communicated with the second input port and disconnected from the first input port;
when the second control valve is powered on, the second output port is communicated with the third input port and disconnected from the fourth input port, and when the second control valve is powered off, the second output port is communicated with the fourth input port and disconnected from the third input port;
a pressure setting value P0main at which the medium entering the main sealed cavity opens the main valve satisfies: P0<P0main<Pacc, where P0 is an atmospheric pressure, and Pacc is a pressure of the constant pressure source; and
a pressure setting value P0twin at which the medium entering the second sealed cavity opening the pilot valve satisfies: Pacc×A1=P0twin×A2, where Pacc is a pressure of the constant pressure source, A1 is a cross sectional area of a first pilot piston, A2 is a cross sectional area of a second pilot piston, and A2<A1.

44. The valve set for safety of a nuclear power plant according to claim 39, which is configured for passive water injection of a primary loop and **characterized in that** the first valve part and the second valve part are a main valve and a two-position three-way control valve, respectively;
the main valve comprises: a main valve body and a valve core, the main valve body has a sealed cavity and a valve cavity, the valve cavity is configured to communicate a passive water injection pipeline and a primary loop coolant system, the valve core has one end in the sealed cavity and the other end in the valve cavity, and the valve core is slidable in the main valve body under an action of a pressure of a medium entering the sealed cavity, so as to open or close the valve cavity;
the two-position three-way control valve has a first input port, a second input port, and an output port, wherein the output port is communicated with the sealed cavity, the first input port is communicated with the primary loop coolant, and the second input port is communicated with a constant pressure source; and
the two-position three-way control valve has a first state in which the output port is communicated with the first input port and disconnected from the second input port, and a second state in which the output port is communicated with the second input port and disconnected from the first input port, and the two-position three-way control valve is switchable between the first and second states to change the medium entering the sealed cavity and a pressure thereof, and a pressure setting value P0main at which the medium entering the sealed cavity opens the main valve satisfies: Pgmax<P0main<Pacc, where Pgmax is the highest pressure of the passive water injection pipeline, and Pacc is a pressure of the constant pressure source.
